# EUROPEAN PATENT APPLICATION

(11) **EP 4 660 768 A1**
(43) Date of publication of application: **10.12.2025**
(21) Application number: 24822306.7
(22) Date of filing: 13.03.2024
(51) Int. Cl.: G06F 3/04817

(54) **INFORMATION TRANSMISSION METHOD AND ELECTRONIC DEVICE**

(30) Priority: 16.06.2023 CN 202310725366
(71) Applicant: Honor Device Co., Ltd., Shenzhen, Guangdong 518040 (CN)
(72) Inventor: YANG, Yuanyuan, Shenzhen, Guangdong 518040 (CN); QIAN, Kai, Shenzhen, Guangdong 518040 (CN); ZHU, Bin, Shenzhen, Guangdong 518040 (CN); YU, Ziwei, Shenzhen, Guangdong 518040 (CN); LIANG, Shuang, Shenzhen, Guangdong 518040 (CN); ZHOU, Shuang, Shenzhen, Guangdong 518040 (CN); HUANG, Liwei, Shenzhen, Guangdong 518040 (CN)
(74) Representative: Epping - Hermann - Fischer
(86) International application number: PCT/CN2024/081308
(87) International publication number: WO 2024/255348

(57) **Abstract**

This application provides an information transmission method and an electronic device. Through implementation of this method, the electronic device may directly display a plurality of application service icons in an interface in response to an operation performed by a user on information, so as to help the user place the information into a target application service, so that the electronic device can efficiently and quickly complete information transmission between applications, thereby effectively reducing an operation step required by the user to complete information transmission across applications, improving interaction efficiency between the user and the electronic device, and further improving user experience.

## Description

This application claims priority to Chinese Patent Application No. 202310725366.4, filed with the China National Intellectual Property Administration on June 16, 2023 and entitled "INFORMATION TRANSMISSION METHOD AND ELECTRONIC DEVICE", which is incorporated herein by reference in its entirety.

### TECHNICAL FIELD

This application relates to the field of terminal technologies, and in particular, to an information transmission method and an electronic device.

### BACKGROUND

With continuous development of electronic information technologies, intelligent devices such as mobile phones and tablet computers have become indispensable products in our daily life, work, and entertainment. In a process in which a user uses an intelligent device, a plurality of applications in the intelligent device are usually opened at the same time to work collaboratively. In addition, the user often transmits information across applications by using the intelligent device, that is, shares and uploads information in one application by using another application, and so on.

However, when the user needs to transmit information across applications, a complex and cumbersome operation usually needs to be performed on the information. For example, when the user needs to forward a text or an image on a web page in a browser to a WeChat friend, the user usually needs to copy or save information such as a text or an image in the browser, and then switch to WeChat, so as to perform operations such as sharing and uploading on the information by using WeChat. In such an information transmission method, interaction between the user and the intelligent device is inefficient, and user experience is also severely affected.

Therefore, a more efficient and convenient information transmission method needs to be studied.

### SUMMARY

An objective of this application is to provide an information transmission method and an electronic device. Through implementation of this method, the electronic device may directly display a plurality of application service icons in an interface in response to an operation performed by a user on information, so as to help the user place the information into a target application service, so that the electronic device can efficiently and quickly complete information transmission between applications, thereby effectively reducing an operation step required by the user to complete information transmission across applications, improving interaction efficiency between the user and the electronic device, and further improving user experience.

The foregoing objective and other objectives are achieved by using features of independent claims. Further implementations are embodied in the dependent claims, the specification, and the drawings. According to a first aspect, this application provides an information transmission method, where the method includes: displaying a first interface, where the first interface includes a first sub-interface and a second sub-interface, the first sub-interface is used to display an application interface of a first application, the second sub-interface is used to display an application interface of a second application, the first sub-interface includes first information, and the second sub-interface is used to transmit the first information to the second application through a first operation on the first information; displaying a second interface in response to a second operation on the first information, where the second interface includes the first information and at least one application service icon; and transmitting the first information to an application service corresponding to a target icon in response to a third operation on the first information, where the target icon is any one of the at least one application service icon.

In this method, the first interface may be a smart multi-window interface displayed by an electronic device, that is, there are a plurality of windows in the first interface. Each window corresponds to one sub-interface, and an application corresponding to an application interface displayed in each sub-interface may vary. The first sub-interface and the second sub-interface are two sub-interfaces in the plurality of sub-interfaces corresponding to the plurality of windows. Optionally, a quantity of the plurality of windows may be 2, and sub-interfaces corresponding to the two windows are the first sub-interface and the second sub-interface.

In the first interface, an information element displayed in any one of the sub-interfaces corresponding to the plurality of windows may be moved to another sub-interface through dragging by a user, so as to complete information transmission across applications. For example, after the user drags the first information in the first sub-interface into the second sub-interface, the information element may be transmitted from an application corresponding to the first sub-interface to an application corresponding to the second sub-interface.

However, due to a limited area of a display of the electronic device, the quantity of windows (sub-interfaces) in the first interface is limited, and the quantity of application interfaces that may be displayed in the first interface is limited. In addition, the user needs to open these applications in advance through corresponding user operations, and the application interfaces of these applications need to be displayed in a split-screen manner. When the user wants to share an element pulled up in the first interface with an application that is not opened (that is, an application interface for which cannot be displayed in the first interface), the sub-interface displayed in the first interface cannot meet a requirement of the user.

Therefore, in this method, the second operation may be performed to enable the electronic device to display the "cross-application transmission interface" provided in this application, that is, the second interface, so as to share the information element in the first interface with the application that is not opened (that is, the application interface for which cannot be displayed in the first interface). In the "cross-application transmission interface", a side edge of the interface may display a service icon of an application recommended by the electronic device for the information element. Then, the user places the pulled information element onto the icon and releases the finger. In this way, the information element may be transmitted to an application service corresponding to the icon, and a corresponding application service function is enabled.

The second operation may be used to select the first information. Specifically, the second operation may be an operation of touching and holding the first information and then dragging the first information to a side edge of the first interface (namely, a side edge of the display). When the user does not release the finger, the pulled first information moves in the first interface with a fingertip of the user. When the user drags the first information to a position that has a distance from a right side edge or a left side edge of the screen being less than a specific threshold, the electronic device may display the second interface. In the second interface, an application service corresponding to the at least one application service icon is an application service that may receive the foregoing first information. For example, when the foregoing first information is an image, a friend chat service of WeChat^{®} may send the image, a moment share service of WeChat^{®} may be used to share the image, a beautification service of Meitu^{®} may beautify the image, and a search service provided by the electronic device may perform intelligent search on the image, and so on. Therefore, the at least one application service icon may include application service icons corresponding to these services.

Optionally, the at least one application service icon may include a plurality of application service icons corresponding to one application. It should be specifically noted that the at least one application service icon is an application service icon rather than an application icon, and the at least one application service icon may not be displayed in the first interface. When the user drags the pulled information (for example, the first information) onto a specific icon in the at least one application service icon, the information may be directly received by an application service corresponding to the icon.

In the second interface, the user needs to associate the first information with the target icon through the third operation, and the electronic device may transmit the first information to the application service corresponding to the target icon in response to the third operation. Specifically, the third operation may be an operation of dragging the first information near the target icon, may be an operation of dragging the first information onto the target icon and releasing the finger, or may be another operation of associating the first information with the target icon, provided that the third operation is capable of selecting, from the at least one application service icon, the target icon required by the user, and associating the first information with the target icon.

It may be understood that the information transmission process provided in this application is continuous throughout a process from pulling up the first information by the user to placing the first information into the application service corresponding to the target icon. "Continuous" mentioned herein means that the user does not need to perform an operation such as copying or pasting, and does not need to perform an application switching operation, and throughout the operation process, the finger of the user may not need to leave the screen of the electronic device. The operation is simple and quick, thereby effectively improving efficiency of transmitting information across applications by the user, and improving user experience.

Optionally, the second interface may further display a third sub-interface. Element content displayed in the third sub-interface is the same as element content (except a status bar) displayed in the first interface. Actually, the third sub-interface displayed in the second interface may be considered as an interface obtained after the electronic device performs three-dimensional transformation on all element content (except the status bar) in the first interface. In the second interface, the sub-interface may create, on the screen, a visual effect of pushing inward an original interface (namely, the first interface). It may be understood that this visual effect of "portal opening" implies a behavior of transmitting an element (namely, the first information), and is more intuitive than copying and pasting. In addition, this information transmission manner ensures an effective browsing region of a user interface, and is capable of transmitting the first information to another application service while a historical application interface (namely, the first interface) is viewed by using the sub-interface, thereby further improving user experience. Optionally, in the second interface, a background behind the sub-interface may be set to a picture obtained after a blur effect is superimposed on a home screen background (namely, a home screen wallpaper) of the electronic device, so as to provide a better visual effect for the user.

With reference to the first aspect, in a possible implementation, the first sub-interface and the second sub-interface are displayed in a horizontal split-screen or vertical split-screen manner; or the first sub-interface and the second sub-interface are displayed in a picture-in-picture form.

In this implementation, when the first sub-interface and the second sub-interface are displayed in a horizontal split-screen or vertical split-screen manner, relative positions of the first sub-interface and the second sub-interface in the first sub-interface are not limited in this application. For example, the first sub-interface may be displayed above the second sub-interface, or may be displayed below the second sub-interface.

When the first sub-interface and the second sub-interface are displayed in a picture-in-picture form, the first sub-interface is an interface in full-screen display, and in this case, the second sub-interface may be an interface displayed in a floating window (a small window). The first sub-interface may also be an interface displayed in a floating window (a small window), and in this case, the second sub-interface may be an interface in full-screen display. This is not limited in this application. Correspondingly, when information transmission is performed between two applications corresponding to the first sub-interface and the second sub-interface, the user may drag the information element into the interface displayed in the floating window (the small window) to an interface in full-screen display, or may drag the information element in the interface in full-screen display into the interface displayed in the floating window (the small window). When the information element in the first interface is shared, by using the "cross-application transmission interface" provided in this application, with another application for which no application interface is displayed in the first interface, the user may also drag the information element in the interface displayed in the floating window (the small window) or the information element in the interface in full-screen display to a side edge of the screen, so that the electronic device displays the "cross-application transmission interface", that is, the second interface.

With reference to the first aspect, in a possible implementation, the second operation is an operation of associating the first information with the target icon.

With reference to the first aspect, in a possible implementation, the second operation is an operation of moving the first information to the target icon.

Specifically, in this implementation, moving the first information to the target icon may be moving the first information to a periphery of the target icon, so that the target icon is an icon that is in the at least one application service icon and that is closest to the first information; or moving the first information to the target icon may alternatively be moving the first information to a position above the target icon. It should be understood that "above" mentioned herein means that the first information overlaps the target icon, and the first information is displayed on the target icon in a coverage manner.

Optionally, the second operation may further include an operation of staying the first information on (or around) the target icon for a period of time (for example, 120 ms), or dragging the first information onto the target icon (or to a periphery of the target icon) and then directly releasing the finger, so as to trigger transmission of the first information to the application service corresponding to the target icon.

With reference to the first aspect, in a possible implementation, in a process of moving the first information to the target icon, the target icon is enlarged and/or a position of the target icon in the first interface is moved, where a direction of moving the target icon is opposite to a direction of moving the first information.

In this implementation, to guide the user in accurately placing the first information into an application service required by the user, in a process of dragging the first information onto the target icon, when the first information is close to the target icon (it is assumed herein that throughout the dragging process, the target icon is always an icon that is in the at least one application service icon and that is closest to the first information), the target icon may be enlarged, and the target icon may be moved in the second interface, so that the target icon is closer to the first information, and a visual effect that the target icon is absorbed by the first information (that is, a moving direction of the first information is opposite to a moving direction of the target icon, and the target icon and the first information approach each other) is created in the second interface, so as to prompt the user that the first information is already associated with the target icon, and if the finger is released at this position, the first information is transmitted to the application service corresponding to the target icon.

Optionally, the electronic device enlarges the target icon in the second interface and/or moves the position of the target icon in the first interface only when a distance between the first information and the target icon is less than a first threshold.

With reference to the first aspect, in a possible implementation, the at least one application service icon includes at least one first icon, and the at least one first icon is an application service icon recommended based on the first information.

In this implementation, the electronic device may recommend an icon for personality of the user based on content included in the first information. Specifically, for such an icon recommended by the electronic device for the personality of the user, the electronic device may first recognize the pulled first information (in this case, the electronic device does not display the second user interface), and obtain, based on a recognition result, an application service icon that is provided in the second interface and that meets a user requirement, where the recognition result may include a type of the first information and element content included in the first information. For example, assuming that the first information includes a QR code image picture, the electronic device may recognize the QR code image in the first information, and display, for the user in the second interface, an application service icon capable of scanning the QR code, for example, WeChat-Scan or Alipay-Scan. Assuming that the first information is a picture that includes a human face image, the user may recognize the human face image in the first information, and display, for the user in the second interface, an application service icon capable of beautifying the image or being used to share the image, for example, Meitu-Portrait Beautification or WeChat-Moments. For another example, assuming that the first information is a text that includes location information, the electronic device may recognize the location information in the text, and display, for the user in the second interface, an application service icon capable of performing navigation or taxi hailing for the location information, for example, Amap-Navigation or Amap-One-Key Taxi Hailing. Assuming that the first information is a text that includes time and location information, the electronic device recommends an application service icon related to an agenda for the user, for example, Agenda-Add Agenda.

In other words, when the user pulls up two information elements successively, even if the two information elements are information elements of a same type (for example, the two information elements are both texts or images), when content included in the two information elements is different (for example, image content is different or characters in the text are different), the at least one application service icon displayed by the electronic device based on the two elements may also be different. It should be understood that "different" mentioned herein may include different icon types and different icon sequences. Optionally, an icon (namely, the at least one first icon) of the application service recommended by the electronic device for the user is displayed in an icon region. Of the at least one first icon, an icon corresponding to an application service that is more consistent with a current intention of the user ranks higher in the icon region. The current intention of the user may be determined based on element content included in the pulled information. For example, when the information is an image and includes a QR code image, an icon corresponding to the application service such as WeChat-Scan or Alipay-Scan may be displayed on top of the at least one application service icon. When the information is a text and includes location information, an icon corresponding to the application service such as Amap-Navigation or Amap-One-Key Taxi Hailing may be displayed on top of the at least one application service icon.

With reference to the first aspect, in a possible implementation, after the transmitting the first information to an application service corresponding to a target icon, the method further includes: displaying a third interface, where the third interface includes all content in the first interface, the third interface further includes any one of a floating window and an information feedback bar, the floating window is used to display the target icon or an application service interface corresponding to the target icon, and the information feedback bar is used to remind the electronic device of a transmission result of the first information.

In this implementation, after the information is transmitted across applications by using the second interface, the electronic device may further provide different prompt manners and display different interface effects for the user based on a type of an application service to which the information is transmitted and a result of information transmission, so as to prompt the user to learn a transmission result of the first information and perform a next operation.

With reference to the first aspect, in a possible implementation, the third interface includes a floating window, the floating window is used to display the target icon, the third interface further includes second information, and after the displaying a third interface, the method further includes: transmitting the second information to an application service corresponding to the target icon in response to a fourth operation on the second information, where the fourth operation is an operation of associating the second information with the floating window.

In this implementation, it may be understood that, except the floating window, content in the third interface is the same as content in the first interface. The floating window is a minimum floating window. The floating window may not display an application interface, but displays only the target icon. In addition, the floating window may be displayed closely on a right side edge or a left side edge of the third interface, so as to reduce blocking of the third interface, so that the user continues to transmit information (for example, the second information) in the third interface to the application service corresponding to the target icon.

Optionally, in this implementation, the floating window may be expanded in response to a tap operation of the user. After being expanded, the floating window may be displayed in the third interface (in this case, the floating window may not be displayed on the edge any more, but is not displayed in full screen), and the floating window may display an expand control. The expand control may display, on the screen, an application interface in the floating window in full screen in response to a user operation.

With reference to the first aspect, in a possible implementation, the third interface includes the floating window, the floating window is used to display the application service interface corresponding to the target icon, the floating window includes an expand control, and after the displaying a third interface, the method further includes: in response to a fifth operation on the expand control, displaying, in full screen, the application service interface displayed in the floating window.

When the application service corresponding to the target icon is an application service for which a new application service interface needs to be displayed promptly, for example, navigation or search, the electronic device needs to immediately display the application service interface corresponding to the target icon to the user. Therefore, in this implementation, the floating window is a floating window that is displayed on top of the third interface, the third interface may still display the content in the first interface, and the floating window may display the application service interface corresponding to the target icon.

With reference to the first aspect, in a possible implementation, the third interface includes an information feedback bar, the information feedback bar includes a jump control, and after the displaying a third interface, the method further includes: displaying a fourth interface in response to a sixth operation on the jump control, where the fourth interface is the application service interface corresponding to the target icon.

When the application service corresponding to the target icon is an application service similar to global favorites, after such an application service receives the foregoing first information, the user may not need to understand an interface for browsing the application service, and only needs to know whether the electronic device successfully receives the first information. Therefore, in this implementation, after the first information is transmitted to the application service corresponding to the target icon, the electronic device does not need to directly jump to an application interface corresponding to the application service, and only needs to inform the user of a result of information transmission. Therefore, the third interface may display the information feedback bar, so as to remind the user of a result of transmitting the first information. The information feedback bar is a snack bar, which may include the jump control, so that the user can quickly enter, by tapping the jump control, the application service interface corresponding to the target icon, and view a processing result of the first information by the application service corresponding to the target icon.

With reference to the first aspect, in a possible implementation, the first interface further includes a first trigger region and a second trigger region, the first trigger region is greater than the second trigger region, the second operation includes a first sub-operation and a second sub-operation, the first sub-operation is an operation of moving the first information to the first trigger region, the second sub-operation is an operation of moving the first information to the second trigger region, and the displaying a second interface in response to a second operation on the first information in the first interface includes: displaying a light band guide special effect in the first interface in response to the first sub-operation when a stay time of the first information in the first trigger region reaches first duration, where the light band guide special effect is used to indicate to move the first information to the second trigger region; and displaying the second interface in response to the second sub-operation.

In the first interface, dragging information in different sub-interfaces can also complete information transmission across applications. In a process of daily use of the electronic device, the user often performs drag operations on some elements. These drag operations may not be intended to transmit the dragged elements across applications (for example, during document editing, a text is dragged to change a position or a paragraph of the text). Therefore, how to guide, with reference to a user operation and an operation habit of the user, the user in using the transmission method provided in this application, and to set a trigger rule for the "cross-application transmission interface" in this method for the user is a key to further improve interaction efficiency between the user and the electronic device.

Therefore, in this implementation, the first interface may include the first trigger region and the second trigger region. Optionally, specific sizes and positions of the first trigger region and the second trigger region may not be displayed in the user interface. In other words, the user cannot directly observe specific outlines of the two regions in the first interface, and the sizes and positions of the two regions may be stored in the electronic device only in a form perceivable to the electronic device (for example, program code). When the user drags the first information into the first trigger region, the electronic device may display a special effect in the first interface (for example, an edge of the first interface), so as to prompt the user to further drag the image in a direction closer to the second trigger region. The special effect may be a special effect visible to the user such as a light emitting special effect or a shadow special effect, or may be another special effect perceivable to the user. This is not limited in this application. Optionally, the electronic device may alternatively display a special effect in the first interface only after the user drags the first information into the first trigger region and continuously stays the first information in the first trigger region for duration T. Specifically, T may be set to 600 milliseconds.

When the user continues to drag the first information into the second trigger region, the electronic device may immediately display the second interface in response to the operation.

In an optional implementation, the second interface further includes a portal closing trigger region. When the user drags the pulled first information into the portal closing trigger region, the electronic device may no longer display the second interface, but display the first interface again. In addition, when the user does not release the finger, and when the first interface is displayed again, the first information in the first interface is still in a state of being pulled up by the user, so that the user reselects a manner of transmitting the information across applications.

With reference to the first aspect, in a possible implementation, when the first sub-interface and the second sub-interface are displayed in a horizontal split-screen or vertical split-screen manner, the first trigger region exists in both the first interface and the second sub-interface, and the second trigger region exists in both the first interface and the second sub-interface.

In this implementation, regardless of a sub-interface to which an element dragged by the user belongs, when the first trigger region exists in both the first interface and the second sub-interface, and the second trigger region exists in both the first interface and the second sub-interface, the electronic device can immediately guide enabling of the "cross-application transmission interface" in response to a user operation.

With reference to the first aspect, in a possible implementation, the second interface further includes an icon region, the at least one application service icon is displayed in the icon region, the at least one application service icon further includes at least one second icon, the at least one second icon is an application service icon that is customized to be displayed, and the at least one first icon is displayed above the at least one second icon.

In this implementation, the at least one application service icon is displayed in the icon region, and at least one application service icon in the second interface may be divided into two parts, where one part is a fixedly displayed icon (namely, the at least one second icon), and the other part of icon may be an application service icon recommended by the user for the user based on the first information. Optionally, a separation line used for distinguishing may be displayed between the two parts of icons. The at least one second icon is an icon that is customized to be displayed by the user based on a use habit and use frequency of the user. Regardless of information shared by the user based on the electronic device, the icon displayed by the electronic device based on the information may include this part of icon, so as to meet a requirement of the user to the greatest extent. However, the at least one first icon is recommended by the electronic device based on the element included in the first information. When the user shares other information by using this method, an application service icon recommended by the electronic device may be different from an icon in the at least one first icon.

With reference to the first aspect, in a possible implementation, the at least one application service icon includes at least one icon displayed in the icon region and at least one icon not displayed in the icon region, the target icon is not displayed in the icon region, the second interface further includes a third trigger region, and before the response to the second operation on the first information, the method further includes: in response to a seventh operation on the first information, updating the at least one icon displayed in the icon region until the target icon is displayed in the icon region, where the seventh operation is an operation of moving the first information to the third trigger region.

The electronic device may recommend, for the user based on the first information, a plurality of application services that can receive the first information, and display icons of these application services on a right side of the second interface. Specifically, an upper limit of a quantity of these application service icons may be 20. In this implementation, when the quantity of these application service icons exceeds a specific threshold (for example, 7), to ensure tidiness and observability of an interface, during display, the electronic device may simultaneously display only some (for example, seven) of these application service icons in the second interface. When none of the icons currently displayed in the second interface is an application service expected by the user, the user may further place the first information into the third trigger region, so that the electronic device updates the icon in the icon region. Specifically, the third trigger region may be arranged right above and/or right below the icon region.

With reference to the first aspect, in a possible implementation, an area of the first information in the second interface is less than an area of the first information in the first interface.

It may be understood that, in the method provided in this application, the first information in the second interface and the first information in the first interface include the same content. However, to reduce a large area of blocking of the at least one application service icon by the first information in the second interface, in this implementation, after the first information enters the second interface, an area of the first information may be reduced, so that the user selects the application service icon.

With reference to the first aspect, in a possible implementation, the first information is any one of an image, a text, an audio file, a video file, and a document file.

According to a second aspect, this application provides an information transmission method, including: displaying a sixth interface in response to any one of a global screenshot operation, a local screenshot operation, and a long screenshot operation on a fifth interface, where the sixth interface includes a first image obtained by taking a screenshot of the fifth interface; displaying a seventh interface in response to an eighth operation on the first image in the sixth interface, where the seventh interface includes the first image and at least one application service icon; and transmitting the first image to an application service corresponding to a target icon in response to a ninth operation on the first image in the seventh interface, where the target icon is any one of the at least one application service icon.

Currently, most intelligent devices provide a quick screenshot function for a user. For example, in some scenarios, the user may take a full-screen screenshot of a current interface of the electronic device by double-tapping a screen or by swiping down with three fingers. In some embodiments, the electronic device may further transitorily display, in the interface in a thumbnail form, an image captured by the user by performing the full-screen screenshot operation. Therefore, in this implementation, after the user captures an image by performing the full-screen screenshot operation, the image is displayed in the first interface in a thumbnail form, and the user may more quickly transmit the captured image to the application service corresponding to the target icon by using the quick screenshot function and the transmission method provided in this application.

With reference to the second aspect, in a possible implementation, the first image is an image obtained by performing a global screenshot operation on the fifth interface, and the displaying a seventh interface in response to an eighth operation on the first image in the sixth interface includes: displaying an edit interface in response to a tap operation on the first image in the sixth interface, where the edit interface includes the first image and an edit option, and the edit option is used to edit the first image; and displaying the seventh interface in response to a move operation on the first image in the edit interface after image content of the first image in the edit interface is updated in response to the edit operation performed on the first image by using the edit option, where the eighth operation includes the tap operation, the edit operation, and the move operation.

It may be understood that after the image is captured by using the quick screenshot function, the user may further need to edit the obtained image, for example, take a further screenshot of the captured image to change an image area of the captured image, or mark important content in the image by using a brush, and then share the edited image with or upload the edited image to another application. Therefore, in this implementation, after the electronic device transitorily displays, in the sixth interface in a thumbnail form (namely, the first image), the image captured by the user by performing the full-screen screenshot operation, the user may enter an image edit interface by performing the tap operation. In the edit interface, the user may edit the first image. Correspondingly, after the edit operation is completed, the electronic device still displays the edit interface, and the user may directly enable the electronic device to display the second interface in the edit interface by performing the move operation, and transmit the edited image (namely, the first information) to the application service corresponding to the target icon by performing the ninth operation.

According to a third aspect, this application provides an information transmission method, including: displaying a ninth interface in response to a local screenshot operation on an eighth interface, where the ninth interface includes a second image obtained by performing a local screenshot operation on the eighth interface and a text recognition control, and the text recognition control is configured to recognize a text included in the second image; displaying a tenth interface in response to a tap operation on the text recognition control, where the tenth interface includes first text information obtained by recognizing the second image; displaying an eleventh interface in response to a tenth operation on the first text information in the tenth interface, where the eleventh interface includes the first text information and at least one application service icon; and transmitting the first text information to an application service corresponding to a target icon in response to an eleventh operation on the first text information in the eleventh interface, where the target icon is any one of the at least one application service icon.

After the user takes a screenshot, some intelligent devices further provide a recognition function for the user in this scenario, so as to recognize the captured image of the user (for example, extract a text in a picture or translate a text). Therefore, for the screenshot function provided by the electronic device, in this method, the electronic device may quickly obtain, by performing the local screenshot operation, the image frame-selected by the user by using a knuckle, and display the ninth interface. In the ninth interface, the user may recognize, by performing a tap operation on the text recognition control, text information included in the image selected by using a local screenshot box. Then, the user may perform the tenth operation on first text information obtained through recognition, so that the electronic device displays the "cross-application transmission interface" provided in this application, that is, the tenth interface, and transmits the text information (namely, the first information) to the application service corresponding to the target icon by performing the eleventh operation.

Optionally, after the text information is recognized by using the text recognition control, the text information included in the image selected by using the local screenshot box may be frame-selected by using a head cursor and a tail cursor, and the user may further adjust positions of the head cursor and the tail cursor to further filter the text information to obtain the first text information that needs to be transmitted by the user.

According to a fourth aspect, this application provides an electronic device. The electronic device includes: one or more processors and a memory. The memory is coupled to the one or more processors, the memory is configured to store computer program code, the computer program code includes computer instructions, and the one or more processors invoke the computer instructions to enable the electronic device to perform the method according to any one of the first aspect or the possible implementations of the first aspect, the method according to any one of the second aspect or the possible implementations of the second aspect, and the method according to the third aspect.

According to a fifth aspect, this application provides a chip system. The chip system is applied to an electronic device, the chip system includes one or more processors, and the processor is configured to invoke computer instructions to enable the electronic device to perform the method according to any one of the first aspect or the possible implementations of the first aspect, the method according to any one of the second aspect or the possible implementations of the second aspect, and the method according to the third aspect.

According to a sixth aspect, this application provides a computer-readable storage medium, including instructions. When the instructions are run on an electronic device, the electronic device is enabled to perform the method according to any one of the first aspect or the possible implementations of the first aspect, the method according to any one of the second aspect or the possible implementations of the second aspect, and the method according to the third aspect.

According to a seventh aspect, this application provides a computer program product including instructions. When the computer program product runs on an electronic device, the electronic device is enabled to perform the method according to any one of the first aspect or the possible implementations of the first aspect, the method according to any one of the second aspect or the possible implementations of the second aspect, and the method according to the third aspect.

### BRIEF DESCRIPTION OF DRAWINGS

FIG. 1A to FIG. 1D are schematic diagrams of a process of transmitting information across applications according to an embodiment of this application;
FIG. 2A and FIG. 2B are schematic diagrams of a process of transmitting information across applications according to an embodiment of this application;
FIG. 3 is a schematic diagram of a process of transmitting an image across applications according to an embodiment of this application;
FIG. 4A to FIG. 4C are schematic diagrams of a process of transmitting a text across applications according to an embodiment of this application;
FIG. 5 is a schematic diagram of a process of transmitting information across applications in a landscape state according to an embodiment of this application;
FIG. 6A to FIG. 6C are schematic diagrams of a process of transmitting a global screenshot image across applications according to an embodiment of this application;
FIG. 7A to FIG. 7D are schematic diagrams of a process of transmitting a local screenshot image across applications according to an embodiment of this application;
FIG. 8A and FIG. 8B are schematic diagrams of a process of transmitting a text in a local screenshot image across applications according to an embodiment of this application;
FIG. 9A to FIG. 9F are schematic diagrams of an operation process of triggering a "cross-application transmission interface" according to an embodiment of this application;
FIG. 10A and FIG. 10B are schematic diagrams of an operation process of closing a "cross-application transmission interface" according to an embodiment of this application;
FIG. 11A and FIG. 11B are schematic diagrams of an operation process of closing a "cross-application transmission interface" according to an embodiment of this application;
FIG. 12A and FIG. 12B are diagrams of some interfaces for performing cross-application transmission by using a screen splitting function according to an embodiment of this application;
FIG. 13A to FIG. 13C are diagrams of some interfaces for performing cross-application transmission through a "cross-application transmission interface" in a split-screen state according to an embodiment of this application;
FIG. 14 is a diagram of some interfaces for performing cross-application transmission by using a picture-in-picture function according to an embodiment of this application;
FIG. 15A to FIG. 15C are diagrams of some interfaces for performing cross-application transmission through a "cross-application transmission interface" in a picture-in-picture state according to an embodiment of this application;
FIG. 16A to FIG. 16C are diagrams of some interfaces for providing feedback by using a snack bar after information is transmitted across applications according to an embodiment of this application;
FIG. 17 is a schematic diagram of some interfaces for providing feedback by using a capsule after information is transmitted across applications according to an embodiment of this application;
FIG. 18A to FIG. 18F are schematic diagrams of a process of performing secondary transmission by using a capsule and then expanding the capsule according to an embodiment of this application;
FIG. 19A to FIG. 19D are schematic diagrams of some interfaces for providing feedback by using a floating window after information is transmitted across applications according to an embodiment of this application;
FIG. 20A to FIG. 20D are schematic diagrams of some interfaces for providing feedback by using a snack bar after information is transmitted across devices according to an embodiment of this application;
FIG. 21A to FIG. 21C are schematic diagrams of some interfaces for providing feedback by using a toast after a failure of information transmission across devices according to an embodiment of this application;
FIG. 22A to FIG. 22E are schematic diagrams of a process of updating an icon in an icon region according to an embodiment of this application;
FIG. 23A and FIG. 23B are diagrams of some interfaces for displaying an application service icon for a user based on location information according to an embodiment of this application;
FIG. 24A and FIG. 24B are diagrams of some interfaces for displaying an application service icon for a user based on location and time information according to an embodiment of this application;
FIG. 25A and FIG. 25B are diagrams of some interfaces for displaying an application service icon for a user based on a QR(Quick Response) code image according to an embodiment of this application;
FIG. 26A and FIG. 26B are diagrams of some interfaces for displaying an application service icon for a user based on a human face image according to an embodiment of this application;
FIG. 27A to FIG. 27E are diagrams of some interfaces for transmitting information by using a chat interface thumbnail in a "cross-application transmission interface" according to an embodiment of this application;
FIG. 28A to FIG. 28D are diagrams of some interfaces for transmitting information across applications by using a sidebar icon according to an embodiment of this application;
FIG. 29A and FIG. 29B are diagrams of some interfaces for customizing a sidebar icon according to an embodiment of this application;
FIG. 30A to FIG. 30C are schematic diagrams of a process of transmitting a screen recording file across applications according to an embodiment of this application;
FIG. 31A to FIG. 31E are schematic diagrams of a process of transmitting an edited screenshot image across applications according to an embodiment of this application;
FIG. 32A to FIG. 32D are schematic diagrams of a process of transmitting a long screenshot image across applications according to an embodiment of this application;
FIG. 33A to FIG. 33C are diagrams of some system setting interfaces related to a "smart transfer" function according to an embodiment of this application;
FIG. 34A to FIG. 34D are diagrams of some system setting interfaces related to a "smart transfer" function according to an embodiment of this application;
FIG. 35 is a diagram of an architecture of an electronic device according to an embodiment of this application; and
FIG. 36 is a flowchart of an information transmission method according to an embodiment of this application.

### DESCRIPTION OF EMBODIMENTS

Terms used in the following embodiments of this application are merely intended to describe specific embodiments, but not intended to limit this application. As used in this specification and the appended claims of this application, singular expressions "one", "a", "the", "foregoing", and "this" are intended to include plural expressions, unless otherwise clearly specified in the context. It should be further understood that the term "and/or" used in this application indicates and includes any or all possible combinations of one or more listed items.

For ease of understanding, the following first describes related terms used in the embodiments of this application.

### (1) Information transmission across applications and information transmission across devices

Information transmission across applications is information transmission between two applications in a same device, that is, an operation of obtaining target information by using one application, and sharing, collecting, or editing the target information by using the other application. For example, a text or an image on a web page in a browser is forwarded to a WeChat friend, or a picture sent by the WeChat friend is sent to a QQ friend.

Information transmission across devices is information transmission performed after a communication connection is established between two devices based on Wi-Fi, Bluetooth, a cellular network, and the like. For example, the user transmits a picture between two devices by using Bluetooth, or shares a picture on a mobile phone with a personal computer in a same network environment.

Specifically, the foregoing information may be a picture, a text, a video, a voice, a link, a document, or the like.

### (2) Cross-application transmission interface

In this application, a "cross-application transmission interface" (or referred to as a "cross-application transmission interface") is an interaction manner provided by an electronic device based on a requirement of the user for information transmission across applications and information transmission across devices. In some embodiments of this application, this function may also be referred to as "smart transfer". As the name of the cross-application transmission interface implies, in any interface displayed by the electronic device, when the user needs to transmit information in the interface across applications or across devices, the user only needs to touch and hold an information element in the interface and drag the information element to an edge of a screen, and the electronic device performs three-dimensional transformation on an interface originally displayed on the screen to create, on the screen, a visual effect of pushing the original interface inward, and displays, on a side edge of the screen, an icon recommended by the electronic device (for details, reference may be made to a related description in a subsequent embodiment, and details are not described herein). The recommended icon may be a service icon of the application. Then, the user places the pulled information element onto the icon and releases the finger, so that the information element can be transmitted to the application service corresponding to the icon, and a corresponding application service function is enabled. Specifically, in this application, a specific application APP installed in the electronic device may have a plurality of application services. In the cross-application transmission interface provided in this application, a service icon of an application displayed in the cross-application transmission interface may include some or all of application service icons provided by a same application APP. This is not limited in this application.

### (3) Small window, capsule, snack bar, toast feedback, and side application bar

"Small window" is a system tool of the intelligent device, and can suspend an operation window of the application over the interface or on the home screen, so that the user easily switches a recently used application. As a shrunk application interface, the floating window may be displayed on top of another application interface (for example, an application interface displayed in full screen), and the small window may still display an interface style and a function list that are inherent to the application corresponding to the small window. The user may directly operate a control in the floating window interface to use a function corresponding to the control without closing or exiting the application interface of the another application. For example, a message such as a WeChat message or a QQ message is suddenly received when a game is being played or a video is being watched in full screen, a chat interface corresponding to the message may be directly located over a game interface in a form of a floating window. The user may view and reply to the message in the chat interface displayed in the small window, without a need to switch or exit a currently opened application.

"Capsule" is a representation form of the minimized small window, and is so named after its shape like a capsule. The capsule differs from the small window in that, the capsule generally cannot display an interface style and a function list that are inherent to the application corresponding to the capsule, and is only displayed on a side edge of the screen of the electronic device in a form of a small icon. The user may tap the capsule to expand the capsule, and the expanded capsule is displayed on top of the screen in a form of an application interface (for example, a small window). "Toast feedback" is a lightweight feedback manner, and is a representation form of a non-nodal popup window. A common representation manner of the toast feedback is a text or a combination manner of an icon + a text. A display position of the toast feedback is designed at the top, middle, or bottom of a page based on different scenarios. The toast feedback disappears automatically upon expiration of a specific time interval (3s~5s), or disappears automatically when the user taps another position. The toast feedback does not interrupt a current operation procedure of the user, thereby minimizing interference to the user. A disadvantage of the toast feedback is that the toast feedback is easily ignored by the user, and is not suitable for displaying excessive information. The toast feedback may disappear before the user completely reads the information.

"Snack bar" is a lightweight feedback manner slightly heavier than the toast. The snack bar includes a line of text related to an ongoing operation, and may include a corresponding jump control, so that the user browses an application interface related to the foregoing ongoing operation. The snack bar is also a non-nodal popup window, and is usually used to notify the user of a process that is occurring or is about to occur in the program. Content of the snack bar is certainly related to the current operation of the user. The snack bar generally appears transitorily at the bottom of the screen without interrupting user experience or requiring any user operation, and disappears automatically after a period of time. In addition, in some embodiments, if a snack bar appears in the interface, the user may make the snack bar disappear by tapping a region other than the snack bar.

"Side application bar" is a shortcut function region that is displayed on a side edge of the screen of the electronic device and that may accommodate a plurality of application icons. The user may customize a type of an application and a sequence of an application icon in the side application bar. In any interface, the user may slide inward from an edge of the screen and pause to invoke the side application bar. The user may tap an application icon to open a corresponding application. The opened application is usually displayed on top of the interface in a form of a small window.

### (4) Global favorites

"Global favorites" is an application service provided in this embodiment of this application, and may be used to collect elements such as a picture, a text, a voice, and a web page that are browsed by the user based on the electronic device. After an element is collected into the global favorites application service, the user may further edit the collected element, for example, add a label to the collected video to mark an emphasis and the like, so that the user can efficiently review key information carried in the element when reviewing the element.

The user may perform a three-finger swipe down operation on the element to collect the element into the global favorites application service, or may collect the element into the global favorites application service by using the cross-application transmission interface provided in this application. After the element is successfully collected into the global favorites application service, the electronic device may display a capsule corresponding to the global favorites application service in the interface, so that the user collects another element in the interface into the global favorites application service. For details, refer to related descriptions in subsequent embodiments. Details are not described herein.

With continuous development of electronic information technologies, intelligent devices such as mobile phones and tablet computers have become indispensable products in our daily life, work, and entertainment. In a process in which a user uses an intelligent device, a plurality of applications in the intelligent device are usually opened at the same time to work collaboratively. In addition, the user often transmits information across applications by using the intelligent device, that is, processes, shares, and uploads information in one application by using another application, and so on. However, when the user needs to transmit information across applications, a complex and cumbersome operation needs to be performed on the information.

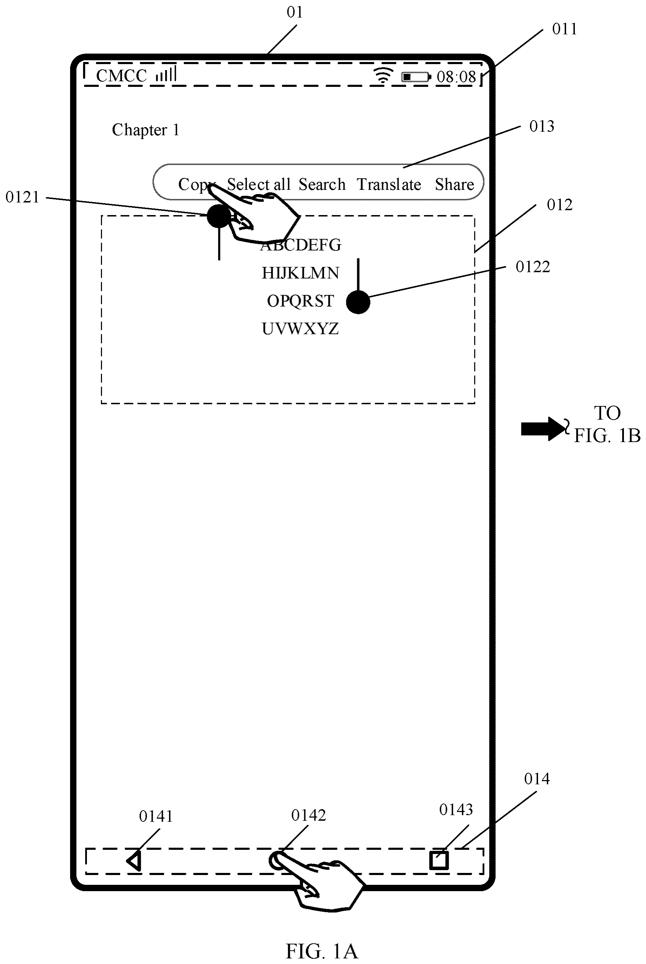

FIG. 1A to FIG. 1D show a specific process in which a user adds a text in an application "novel reading" to an application "note".

A user interface 01 shown in FIG. 1A is an interface displayed by an electronic device after the user opens a specific novel in the application "novel reading". The user interface 01 includes a status bar 011, text information 012, a text option list 013, and a navigation bar 014.

The status bar 011 may include a name of an operator (for example, China Mobile), a time, a WI-FI icon, signal strength, and current remaining power.

The text information 012 may be divided into two parts. Text information "ABCDEFGHIJKLMN" is a text that the user expects to transmit to another application (for example, extract to a note application). Therefore, this part of text is selected by the user at this time and is in a dark region. However, text information "OPQRSTUVWXYZ" is not selected by the user, and therefore is not in the dark region. It should be understood that, although not shown in FIG. 1A to FIG. 1D, when selecting a text, the user may complete selection of the text by performing a touch and hold operation on the text information 012, and after a head cursor 0121 and a tail cursor 0122 appear, adjusting positions of the head cursor 0121 and the tail cursor 0122.

The text option list 013 includes a copy option, a select all option, a search option, a translation option, and a sharing option. The copy option is used to copy text information selected by the user. After the copy, the user may paste this part of the selected text information into another text box of the electronic device. The select all option is used to select all the text information in the interface 01 by using one key. The search option is used to invoke the search function provided by the electronic device to search for the text selected by the user. The translation option is used to translate the text selected by the user, such as translation from Chinese to English or translation from English to Chinese. The sharing option is used to share the text selected by the user. Any option may be used to respond to an operation of the user, for example, a tap operation, so that the electronic device performs an operation corresponding to the option.

The navigation bar 014 may include system navigation buttons such as a return button 0141, a home screen (home screen) button 0142, and a task history call-out button 0143. When detecting that the user taps the return button 0141, the electronic device may display a previous user interface of a current user interface. When detecting that the user taps the home screen button 0142, the electronic device may display a home screen interface that is set by the user for the electronic device. When detecting that the user taps the task history call-out button 0143, the electronic device may display a task recently opened by the user. The navigation buttons may be named in another manner. For example, the return button may be named a Back Button, the home screen button may be named a Home button, and the task history call-out button may be named a Menu Button. This is not limited in this application. In addition, the navigation buttons in the navigation bar are not limited to virtual keys, and may alternatively be implemented as physical buttons.

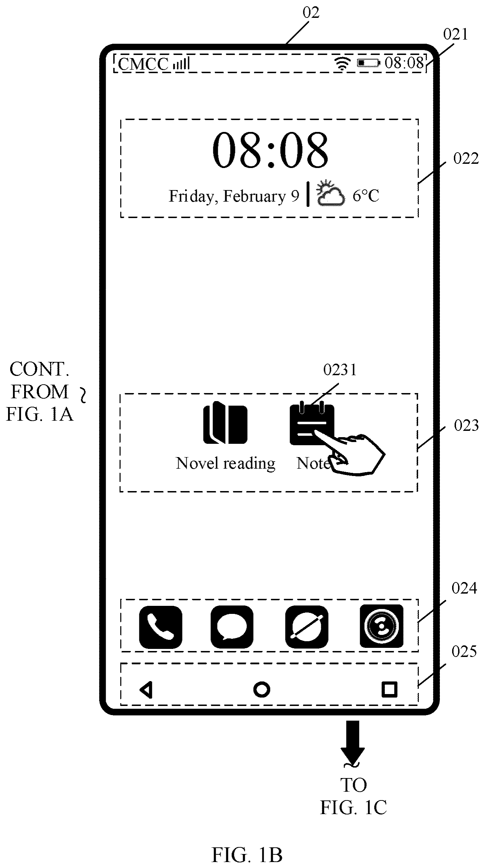

After the user selects the text, the user may first copy the selected text information by performing a tap operation on the copy option shown in FIG. 1A. Then, to place the copied text information into the extract page of the note application, the user performs a tap operation on the home screen button 0142 shown in FIG. 1A, so that the electronic device exits the current user interface 01 and displays the home screen. For a specific style of the home screen, refer to a user interface 02 shown in FIG. 1B. The user interface 02 may include a status bar 021, a calendar weather gadget 022, an application region 023, a dock region 024, and a navigation bar 025.

For specific functions of the status bar 021 and the navigation bar 025, refer to the foregoing related description of the user interface 01. Details are not described herein again.

The calendar weather gadget 022 may be used to indicate current time, such as a date, a day of the week, and hour and minute information, may be used to indicate a weather type, such as cloudy to sunny or light rain, may be further used to indicate information such as temperature, and may be further used to indicate a location.

The application region 023 may include, for example, an application icon of "novel reading" and an application icon 0231 of "note", and may further include an icon of another application. This is not limited in this embodiment of this application. An icon of any application may be used to respond to an operation of the user, for example, a touch operation, so that the electronic device starts an application corresponding to the icon.

The dock region 024 may include, for example, an icon of "phone", an icon of "messages", an icon of "browser", and an icon of "camera", and may further include an icon of another application. This is not limited in this embodiment of this application. An icon of any application may be used to respond to an operation of the user, for example, a touch operation, so that the electronic device starts an application corresponding to the icon. Regardless of how the user switches an interface on the screen, a size of the dock region 024 in the interface on the screen and an application included in the dock region remain unchanged, and are always displayed in the current interface.

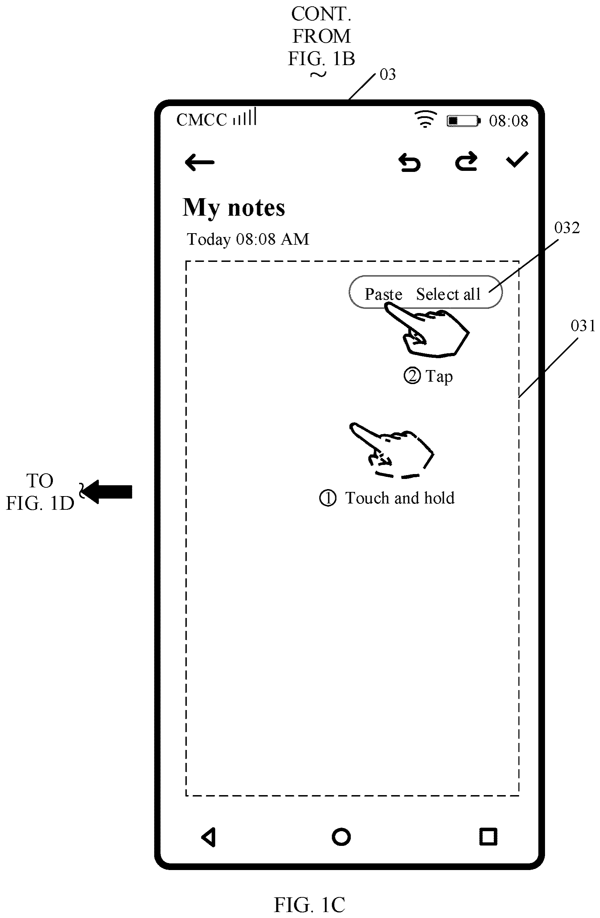

To place the previously selected and copied text information into the extract page of the application "note", as shown in FIG. 1B, the user needs to first open the application "note" by performing a tap operation on the application icon 0231. The electronic device may display a user interface 03 shown in FIG. 1C in response to the tap operation performed by the user on the application icon 0231. In the user interface 03, the user may first perform a touch and hold operation on a blank region in an input region 031 to invoke an input option box 032, and then tap a paste option in the input option box 032 to paste the previously selected text information into the input region 031.

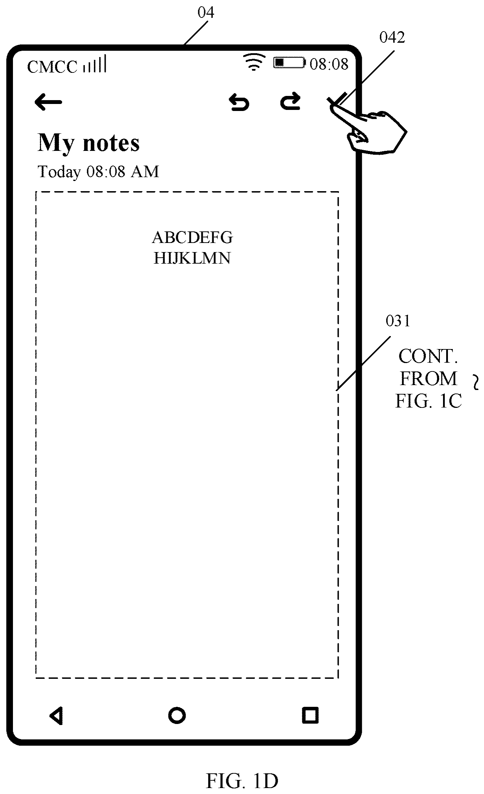

For an interface displayed by the electronic device after the text information is pasted, refer to a user interface 04 shown in FIG. 1D. As shown in the user interface 04, in this case, the text information selected by the user in the application "novel reading" is successfully input into the application "note". Then, the electronic device may save, in response to a tap operation performed by the user on a confirmation control 042, a note last created by the user.

It can be seen from a specific process of transmitting a text across applications shown in FIG. 1A to FIG. 1D that, the method for transmitting information across applications needs to be performed through a plurality of operation steps, and involves jumping of a plurality of applications and pages. As a result, interaction efficiency between the user and the electronic device is quite low, seriously affecting user experience.

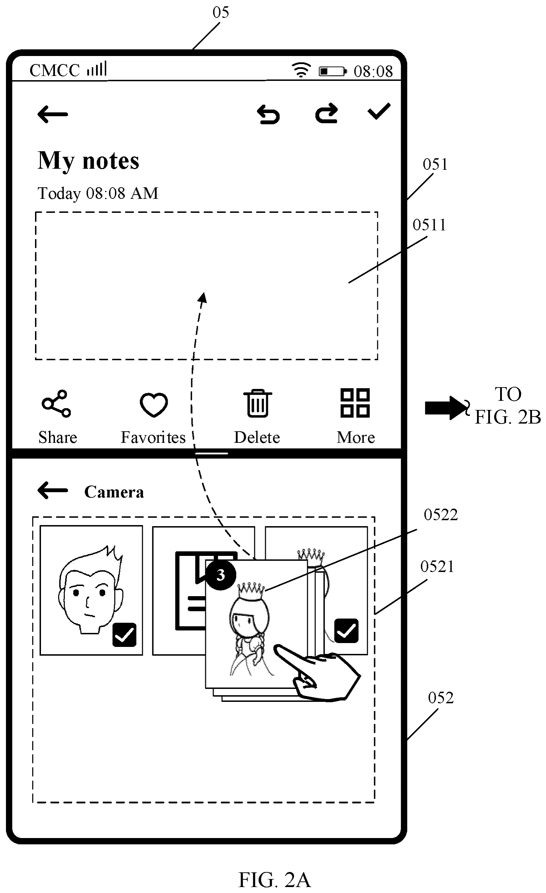

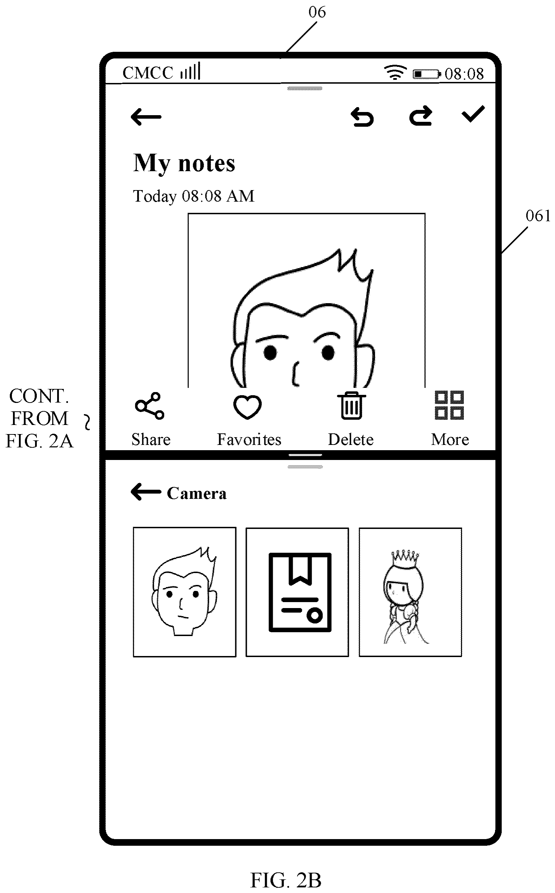

FIG. 2A and FIG. 2B show a specific process in which a user adds a picture in an application "album" to an application "note" by using a screen splitting function provided by an electronic device.

As shown in FIG. 2A, a user interface 05 includes a first display region 051 and a second display region 052. The first display region 051 is used to display an application interface of the application "note", and the second display region 052 is used to display an application interface of the application "album". Details are as follows:
The first display region 051 includes an input region 0511 and a function list 052.

The input region 0511 is used to receive and display note information such as a user-input text or image.

The function list 052 may include a sharing option, a favorite option, a deletion option, and a "more" option. Any option may be used to respond to a tap operation of the user, so that the electronic device executes a function corresponding to the option for a current note.

The second display region 052 includes an image display region and an image thumbnail set 0522. The image display region 0521 is used to display an image stored in a gallery by the user.

The image thumbnail set 0522 is a thumbnail set that is formed after the user selects a plurality of images from the image display region 0521 and drags and pulls up the images (namely, images that the user currently wants to place into a note), and a number "3" displayed in a badge in an upper left corner of the image thumbnail set indicates that the user selects three images in total.

As shown in FIG. 2A, the user may press and hold the image thumbnail set 0522 and drag it into the first display region 051, and then release the finger, so as to place the plurality of images corresponding to the image thumbnail set 0522 into the application "note". For details, refer to a user interface 06 shown in FIG. 2B. It should be noted that, in the user interface 06, due to a limited area of the first display region 061, although the three images selected by the user (namely, the three images corresponding to the image thumbnail set 0522) are all added to the application "note", the three images cannot be completely displayed in the first display region 061.

Although the process of transmitting information across applications shown in FIG. 2A and FIG. 2B simplifies an operation step of the user to some extent, the electronic device needs to keep simultaneous display of two application interfaces in the process, resulting in a poor reading effect of the user. In addition, the user further needs to perform an operation on the electronic screen to display the two application interfaces in a split-screen manner. The operation required in this process is also cumbersome, interaction efficiency between the user and the electronic device is not improved, and user experience is still poor.

To overcome a deficiency of the method for transmitting information across applications in FIG. 1A to FIG. 1D, FIG. 2A, and FIG. 2B, this application provides an information transmission method and an electronic device. The electronic device may be configured to implement the method. During implementation of the method, the electronic device may display a cross-application transmission interface, so that the electronic device can efficiently and quickly complete information transmission between applications, thereby effectively reducing an operation step required by the user to complete information transmission across applications, improving interaction efficiency between the user and the electronic device, and further improving user experience.

Specifically, in any interface displayed by the electronic device, when the user needs to transmit information in the interface across applications or across devices, the user may touch and hold an information element in the interface and drag the information element to an edge of a screen, and the electronic device performs three-dimensional transformation on an interface originally displayed on the screen to create, on the screen, a visual effect of pushing the original interface inward, and displays a recommended application service icon on a side edge of the screen of the electronic device. In this case, the user interface displayed by the electronic device is the cross-application transmission interface. Then, the user places the pulled information element onto the application service icon and releases the finger. In this way, the information may be transmitted to an application service corresponding to the icon, and a corresponding application service function is enabled. It should be noted that the foregoing information element may be an element such as a picture, a text, a video, a voice, a link, or a document, or may be another element. This is not limited in this application. In addition, the "cross-application transmission interface" is merely a name used in the embodiments of this application, the meaning thereof has been recorded in the embodiments of this application, and the name thereof should not constitute any limitation on the embodiments.

The following describes user interfaces provided in the embodiments of this application.

First, a user interface involved in a process of triggering the foregoing cross-application transmission interface is described.

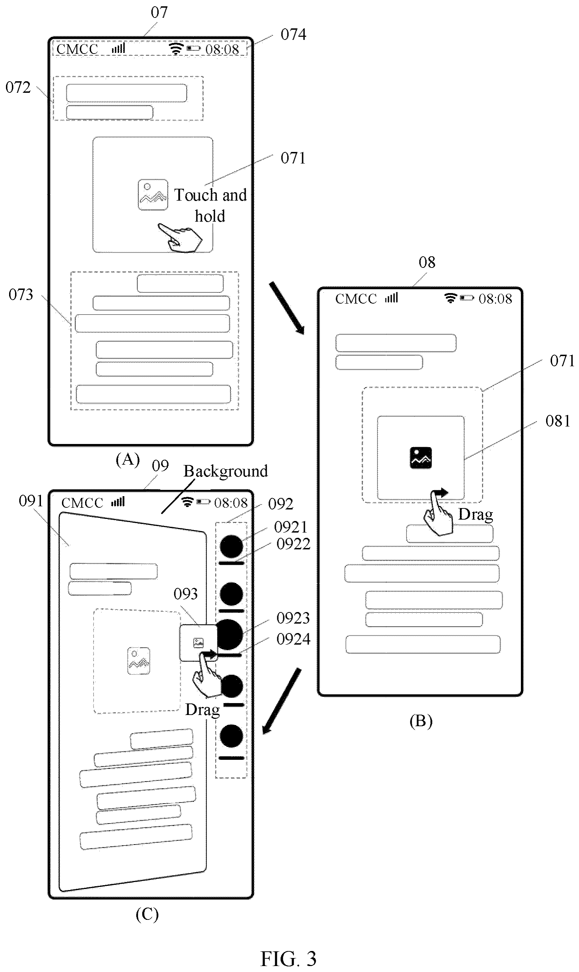

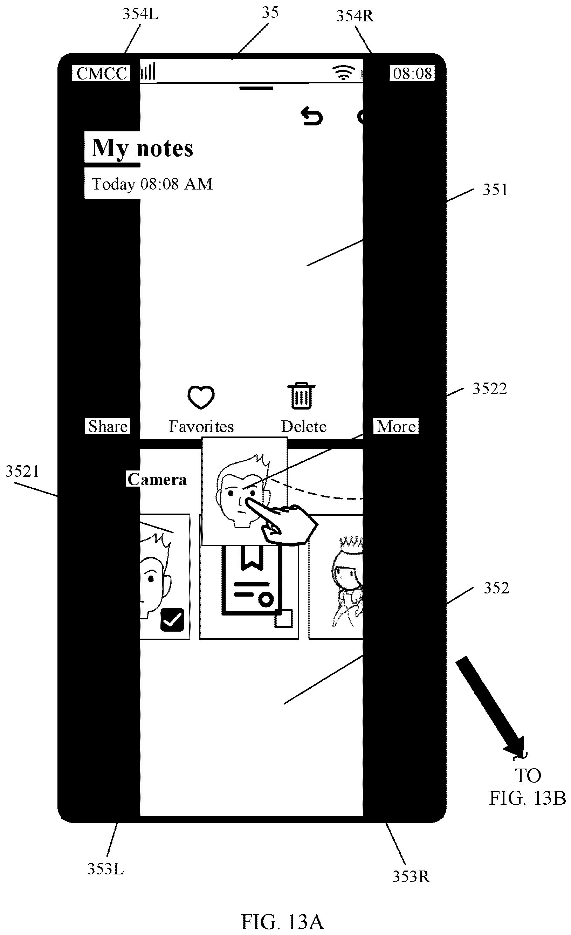

FIG. 3 is a schematic diagram of an interface change process of an electronic device when a user transmits an image across applications based on a cross-application transmission interface.

As shown in (A) in FIG. 3, a user interface 07 may be an application interface of an application "browser" in the electronic device, may be an application interface of an application "microblog^{®}", or may be an application interface of another application. This is not limited in this application. The user interface 07 may include an image 071, a text 072, a text 073, and a status bar 074. The electronic device may display a user interface 08 shown in (B) in FIG. 3 in response to a user operation performed by the user on the image 071, for example, a touch and hold operation shown in (A) in FIG. 3.

As shown in (B) in FIG. 3, in the user interface 08, an original image 071 forms an image 081 through the touch and hold operation of the user. When the user does not release the finger, the image 081 may move in the user interface 08 with a fingertip of the user, and the image 081 may be displayed on top of the user interface 08 (that is, the image 081 may cover any element in the user interface 08). It should be understood that image content displayed in the image 081 is the same as image content displayed in the image 071. Optionally, the image 081 may be a thumbnail obtained after the electronic device shrinks the image 071. In other words, the image 081 is the same as the image 071 except an area size. Optionally, after the image 071 is pulled up to form the image 081, the electronic device may still display the image 071 in the user interface 08, and perform virtual processing or blurring processing on the image 071. To be specific, definition of the image 071 in the user interface 08 may be lower than definition of the image 071 in the user interface 07, so as to prompt the user that the image 071 is in a selected and pulled state.

The electronic device may display a user interface 09 shown in (C) in FIG. 3 in response to a user operation performed by the user on the image 081, for example, a drag operation shown in (B) in FIG. 3.

Optionally, when the user drags the image 081 to a position that has a distance from a right side edge or a left side edge of the screen being less than a specific threshold, the electronic device displays the user interface 09. This is subsequently described in detail. Details are not described herein. As shown in (C) in FIG. 3, the user interface 09 is the cross-application transmission interface mentioned in the foregoing description, and may include a sub-interface 091, an icon region 092, and an image 093.

Element content (for example, a text and a picture) displayed in the sub-interface 091 is the same as element content (except the status bar) displayed in the user interface 07. Actually, the sub-interface 091 may be considered as an interface obtained after the electronic device performs three-dimensional transformation on all element content (except the status bar) in the original user interface 07. In the user interface 09, the sub-interface 091 may create, on the screen, a visual effect of pushing inward an original interface (namely, the user interface 07). It may be understood that this visual effect of "portal opening" implies a behavior of transmitting an element (namely, the information), and is more intuitive than copying and pasting. Optionally, in the user interface 09, a background behind the sub-interface 091 may be set to a picture obtained after a blur effect is superimposed on a home screen background (namely, a home screen wallpaper) of the electronic device.

The icon region 092 may be used to display one or more application service icons that are recommended by the electronic device based on the information element (namely, the image 071 in the embodiments of this application) selected by the user.

Optionally, a corresponding text description is provided below each icon in the icon region 092. The text description may be used to explain a specific application name or an application service name corresponding to the icon. An icon 0921 and a text 0922 are used as an example. When the icon 0921 is an icon of an application "WeChat^{®}", the text 0922 may be "WeChat". When the icon 0921 is an application service icon of an application service "Moments" in the application "WeChat^{®}", the text 0922 may be "Moments" or "WeChat Moments". When the icon 0921 is an application service icon of an application service "Scan" in the application "WeChat^{®}", the text 0922 may be "Scan" or "WeChat Scan". It should be understood that the text below each application service icon is merely intended to help the user understand a specific application or a specific application function corresponding to the icon. However, a specific icon style and specific text content are not limited in this application.

Image content displayed in the image 093 is the same as image content displayed in the image 071 and the image 081. Optionally, the image 093 may be a thumbnail obtained after the electronic device shrinks the image 081. Similarly, the image 093 is the same as the image 081 and the image 071 except an area size. Therefore, when the user selects a desired application service in the icon region 092, the image 093 does not cause a large area of blocking of the icon and the text in the icon region 092, thereby better helping the user select the icon.

It should be noted that, unlike a shrinking process of the image 071, after the image 081 is shrunk to obtain the image 093, the image 081 may no longer be displayed in the user interface 09. In other words, the image 081 may be considered as an image obtained by the electronic device by copying and then shrinking the image 071, and the image 093 may be considered as an image obtained by the electronic device by directly shrinking the image 081.

In the user interface 09, the user places the pulled information element (namely, the image 093) onto the corresponding icon in the icon region 092 and releases the finger. The electronic device may transmit the information element to the application service corresponding to the icon in response to the user operation, and display an application interface corresponding to the application service icon or feedback information. This is subsequently described in more detail. Details are not described herein.

In addition, to guide the user in accurately placing the pulled element into an application service required by the user, when the image 093 approaches a specific icon in the icon region 092, or when a distance between the image 093 and a specific icon in the icon region 092 is less than a specific threshold, the icon approached by the image 093 may display a particular special effect. For example, the icon and a text corresponding to the icon may be absorbed and approached by the image 093, and the icon and the text corresponding to the icon may be enlarged. An icon 0923 in the user interface 09 and a text 0924 corresponding to the icon are used as an example. When the image 093 approaches the icon 0923, the icon 0923 and the text 0924 are closer to the left than other icons and texts, that is, are closer to the image 093 than other icons and texts. In addition, the icon 0923 is also enlarged, so as to prompt the user that if the finger is released at this position, the image 093 (or the image 071) is transmitted to the application service corresponding to the icon 094.

It may be understood that the process of sharing information across applications shown in FIG. 3 is continuous throughout a process from pulling up the element by the user to placing the element into the target application service. "Continuous" mentioned herein means that the user does not need to perform an operation such as copying or pasting, and does not need to perform an application switching operation, and throughout the operation process, the finger of the user does not need to leave the screen of the electronic device. The operation is simple and quick, and in addition, this information transmission manner ensures an effective browsing region of the user interface, thereby effectively improving efficiency of transmitting information across applications by the user, and improving user experience.

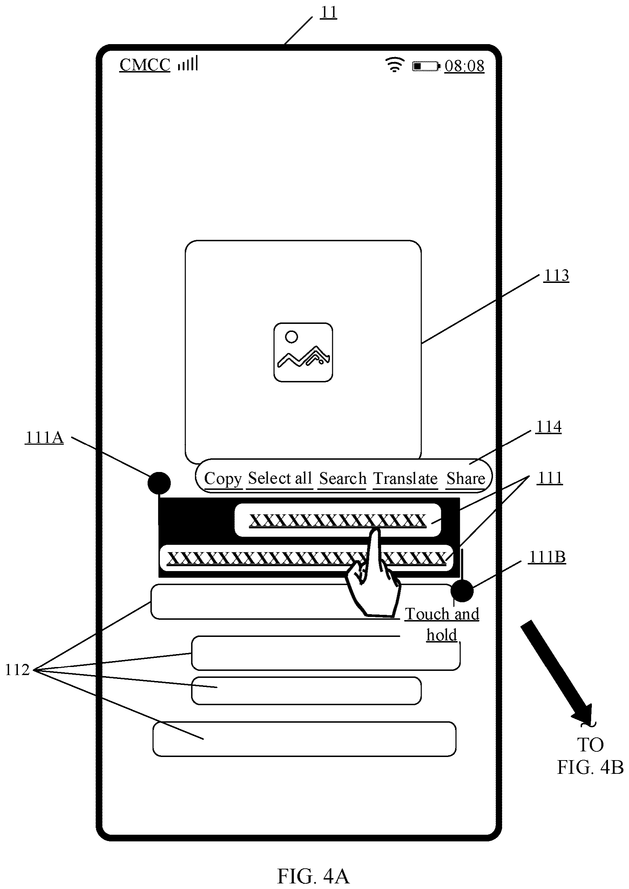

FIG. 4A to FIG. 4C are schematic diagrams of an interface change process of an electronic device when a user transmits a text across applications based on a "cross-application transmission interface".

As shown in FIG. 4A, a user interface 11 may be an application interface of an application "browser" in the electronic device, may be an application interface of an application "microblog^{®}", or may be an application interface of another application. This is not limited in this application. The user interface 11 may include a text 111, a text 112, an image 113, and a text option list 114. The text 111 is a text that the user expects to transmit to another application. Therefore, this part of text is selected by the user at this time and is in a dark region. Correspondingly, the text 112 is an unselected text. It should be understood that, unlike independence of a picture, the text itself has continuity. For an entire paragraph of text, the user may usually require only a part of text in the entire paragraph of text for text sharing. Therefore, although not shown in FIG. 4A to FIG. 4C, when selecting a text in the user interface 11, the user may complete selection of the text by performing a touch and hold operation on any text information in the user interface 11, and after a head cursor 111A and a tail cursor 111B appear, adjusting positions of the head cursor 111A and the tail cursor 111B. As shown in FIG. 4A, the user has selected the text 111 by adjusting the positions of the head cursor 111A and the tail cursor 111B.

The text option list 114 includes a copy option, a select all option, a search option, a translation option, and a sharing option. Any option may be used to respond to an operation of the user, for example, a tap operation, so that the electronic device performs an operation corresponding to the option.

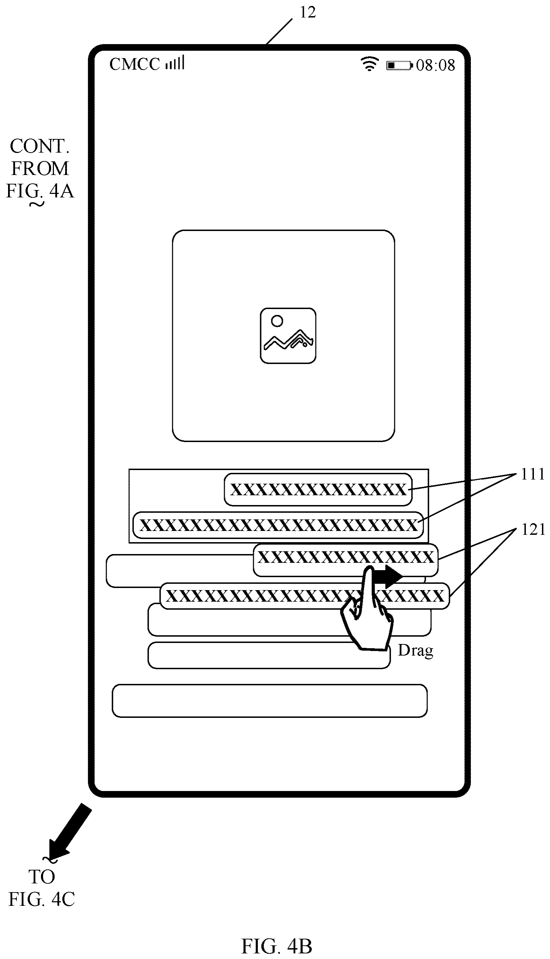

Like the operation of pulling up a picture, similarly, the electronic device may display a user interface 12 shown in FIG. 4B in response to a user operation performed by the user on the text 111, for example, the operation of touching and holding and then dragging shown in FIG. 4A.

As shown in FIG. 4B, in the user interface 12, a pulled text 121 is obtained from the original text 111 through the touch and hold operation of the user. When the user does not release the finger, the text 121 may move in the user interface 12 with a fingertip of the user, and the text 121 may be displayed on top of the user interface 12 (that is, the text 121 may cover any element in the user interface 08). It should be understood that text content included in the text 111 is the same as text content included in the text 121. Optionally, the text 121 may alternatively be a text obtained after the electronic device shrinks the text 111, and after the text 111 is pulled up to form the text 121, the electronic device may still display the text 111 in the user interface 12, and perform virtual processing or blurring processing on the text 111. To be specific, definition of the text 111 in the user interface 12 may be lower than definition of the text 111 in the user interface 11, so as to prompt the user that the text 111 is in a selected and pulled state.

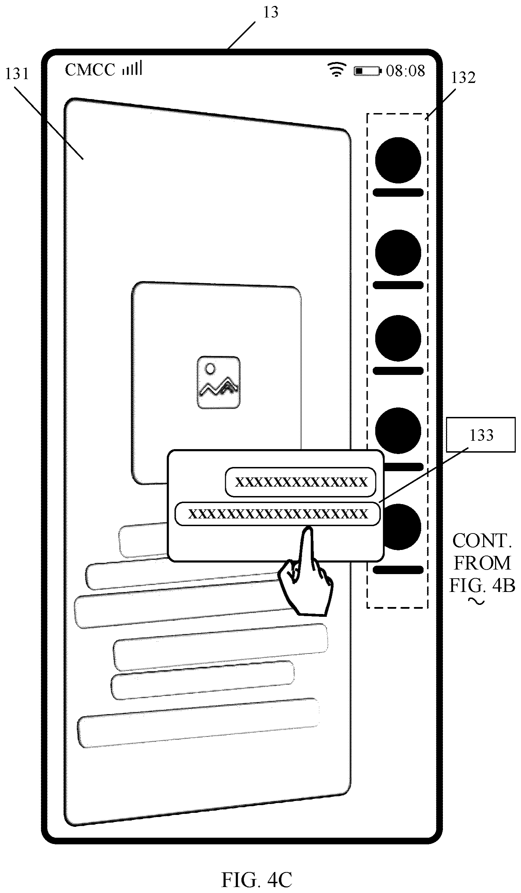

The electronic device may display a user interface 13 shown in FIG. 4C in response to a user operation performed by the user on the text 121, for example, a drag operation shown in FIG. 4B. As shown in FIG. 4C, the user interface 13 is the cross-application transmission interface mentioned in the foregoing description, and may include a sub-interface 131, an icon region 132, and a text 133.

For specific styles and functions of the sub-interface 131 and the icon region 132, refer to the foregoing related descriptions of the user interface 09 in FIG. 3. Details are not described herein again.

It should be specially noted that text content included in the text 133 is the same as text content included in the text 111 and the text 121. However, it can be seen from the user interface 12 and the user interface 13 that the text 133 is a text obtained after the electronic device shrinks the text 121. To be specific, after the "cross-application transmission interface" is opened, the electronic device also shrinks the text pulled up by the user to some extent. In this way, the text 133 does not cause a large area of blocking of the icon and the text in the icon region 132, thereby better helping the user perform selection.

Similarly, in the user interface 13, the user places the pulled information element (namely, the text 133) onto the corresponding icon in the icon region 132 and releases the finger. The electronic device may transmit the information element to the application service corresponding to the icon in response to the user operation, and display an application interface corresponding to the application service icon or feedback information.

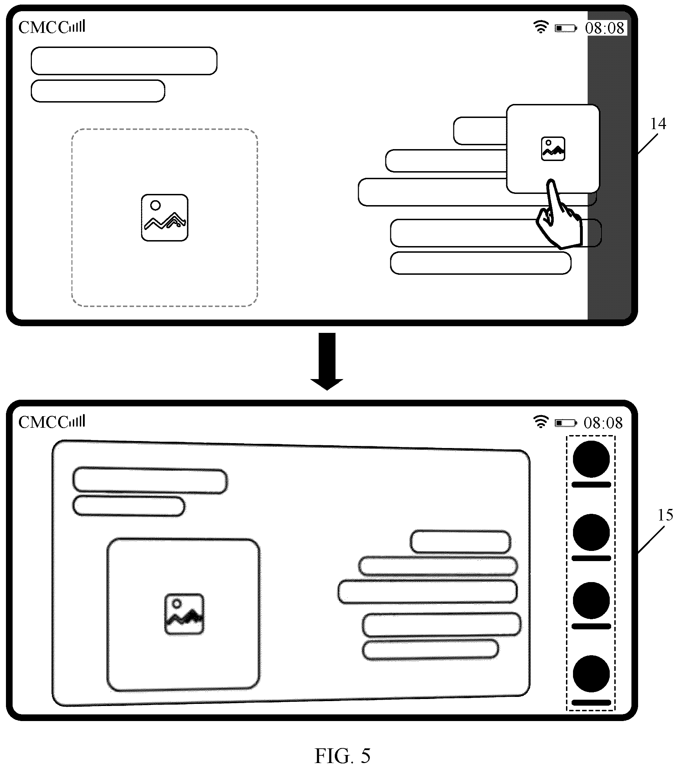

Certainly, when the electronic device is in a landscape state, the user may still transmit an element in the current interface across applications by using the "cross-application transmission interface". For a specific process and interface style, refer to the foregoing related descriptions of FIG. 2A, FIG. 2B, and FIG. 3, and a user interface 14 and a user interface 15 shown in FIG. 5. Details are not described herein again.

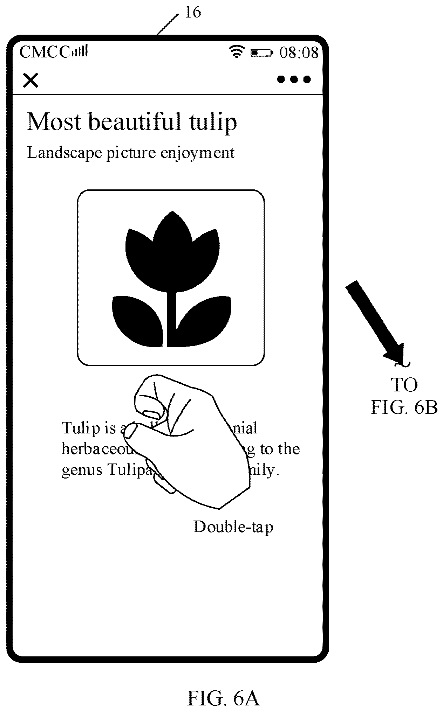

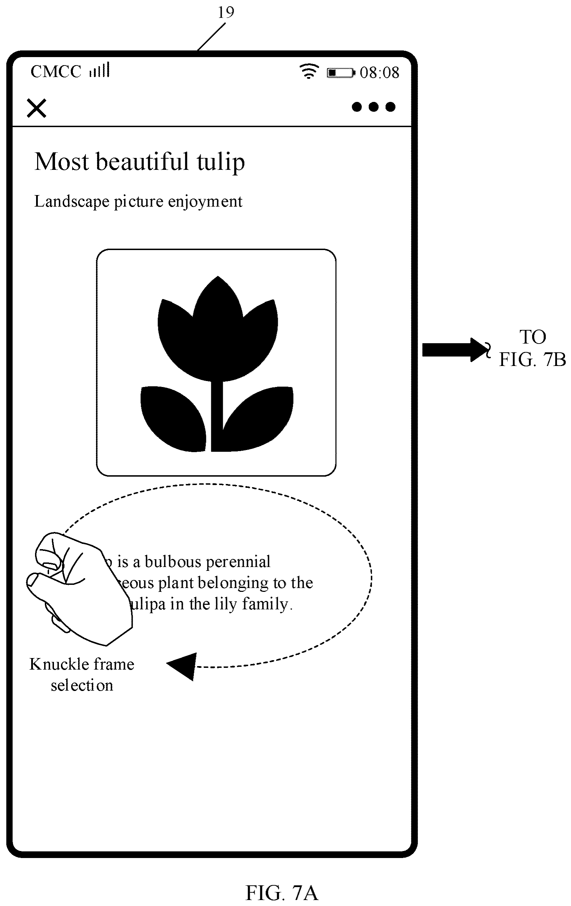

It should be understood that, currently, most intelligent devices provide a quick screenshot function for a user. For example, in some scenarios, the user may take a full-screen screenshot of a current interface of the electronic device by double-tapping a screen or by swiping down with three fingers. In addition, after the user takes a screenshot, some intelligent devices further provide a recognition function for the user in this scenario, so as to recognize the captured image of the user (for example, extract a text in a picture or translate a text). Therefore, for the screenshot function provided by the electronic device, a process of transmitting the captured image or the text in the captured image across applications by using the cross-application transmission interface in a screenshot scenario is described below with reference to FIG. 6A to FIG. 6C and FIG. 7A to FIG. 7D.

FIG. 6A to FIG. 6C are schematic diagrams of an interface change process of an electronic device when a user transmits a captured image across applications based on a cross-application transmission interface.

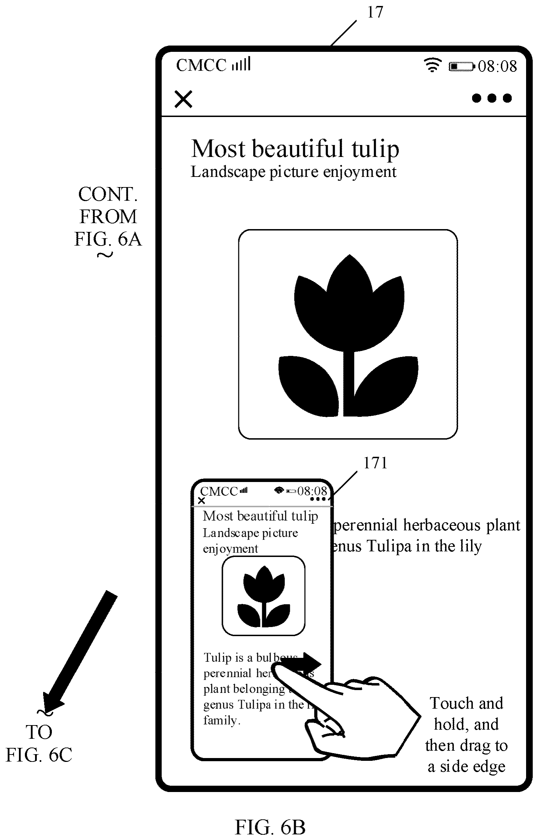

As shown in FIG. 6A, a user interface 16 may be an application interface of an application "browser" in the electronic device, may be an application interface of an application "microblog^{®}", or may be an application interface of another application. This is not limited in this application. In response to a quick screenshot operation performed by the user on the user interface 16, for example, a knuckle double-tap operation shown in FIG. 6A, the electronic device may quickly obtain a full-screen image of the user interface 16, and display a user interface 17 shown in FIG. 6B.

As shown in FIG. 6B, the user interface 17 may include a screenshot image 171. The screenshot image 171 is an image obtained by the electronic device in response to the knuckle screenshot that is performed by the user on the user interface 16. After the screenshot, the screenshot image 171 may be displayed in the user interface 17, and usually last for two to three seconds, so that the user can directly tap the screenshot image 171 to perform an operation such as editing or saving on the screenshot image 171. If the user does not perform an operation on the screenshot image 171, the electronic device may automatically save the screenshot image 171 in an album.

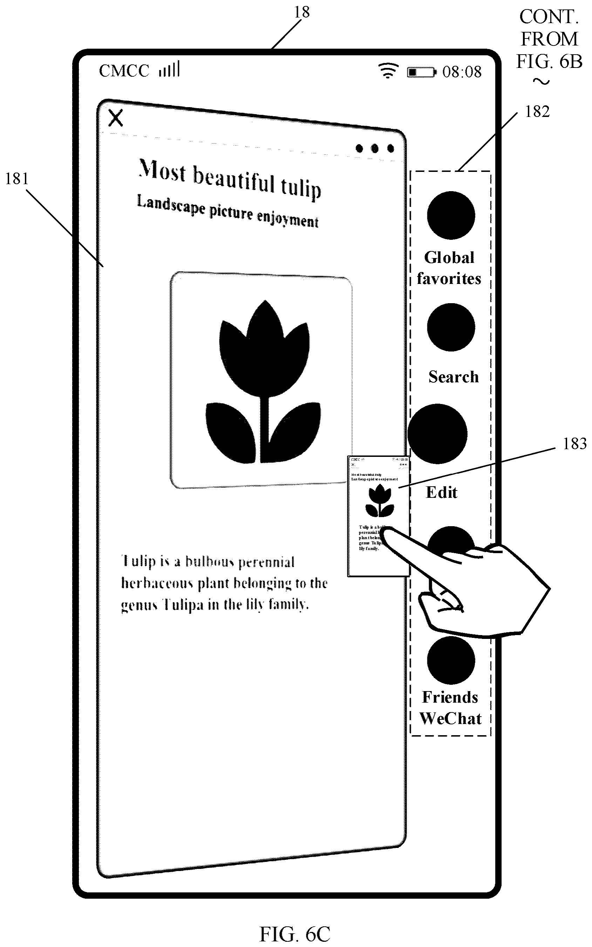

In this embodiment of this application, within duration during which the electronic device displays the screenshot image 171 in the user interface 17, the user may touch and hold and then drag the screenshot image 171, or directly drag the screenshot image 171 to a side edge of the screen of the electronic device, and then transmit the screenshot image 171 across applications by using the "cross-application transmission interface". As shown in FIG. 6B, the electronic device may display a user interface 18 shown in FIG. 6C in response to the user operation of dragging the screenshot image 171 to the side edge.

As shown in FIG. 6C, the user interface 18 is the cross-application transmission interface. The user interface 18 may include a sub-interface 181, an icon region 182, and an image 183.

For specific content and functions of the sub-interface 181 and the icon region 182, refer to the foregoing descriptions. Details are not described herein again.

Similarly, to avoid excessive blocking of the icon region 182, when the screenshot image 171 approaches the icon region, the electronic device shrinks the original screenshot image 171 to obtain the image 183.

Similarly, in the user interface 18, the user places the image 183 onto the corresponding icon in the icon region 182 and releases the finger. The electronic device may transmit the information element to the application service corresponding to the icon in response to the user operation, and display an application interface corresponding to the application service icon or feedback information.

If the user releases the finger before placing the image 183 onto the corresponding icon in the icon region 182, the electronic device may display the user interface 17 again in response to the operation.

In this embodiment of this application, the user interface 16 may be referred to as a "fifth interface", the user interface 17 may be referred to as a "sixth interface", the screenshot image 171 or the image 183 may be referred to as a "first image", the user interface 18 may be referred to as a "seventh interface", and an operation in which the user places the image 183 onto the corresponding icon in the icon region 182 and releases the finger may be referred to as a "ninth operation".

FIG. 7A to FIG. 7D are schematic diagrams of an interface change process of an electronic device when a user transmits a text in a captured image across applications based on a cross-application transmission interface.

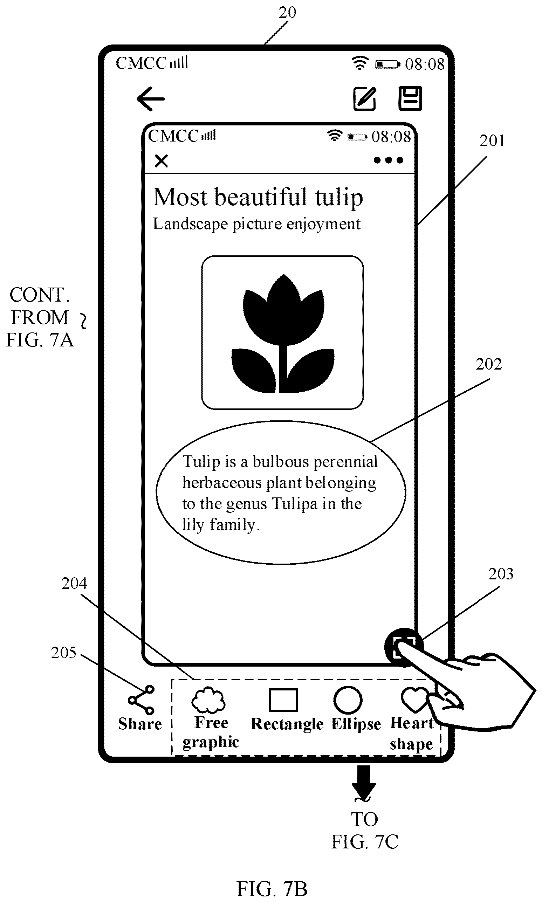

As shown in FIG. 7A, a user interface 19 may be an application interface of an application "browser" in the electronic device, may be an application interface of an application "microblog^{®}", or may be an application interface of another application. This is not limited in this application. In response to a quick screenshot operation performed by the user on the user interface 19, for example, a knuckle frame selection operation (that is, drawing a region on the screen by using a knuckle) shown in FIG. 7A, the electronic device may quickly obtain an image that is frame-selected by the user by using a knuckle, and display a user interface 20 shown in FIG. 7B.

As shown in FIG. 7B, the user interface 20 may include a thumbnail 201, a local screenshot box 202, a recognition control 203, a sharing control 205, and a shape option box 204.

The thumbnail 201 may be the thumbnail in the foregoing user interface 19.

The local screenshot box 202 is a screenshot region determined by the electronic device in response to the knuckle frame selection screenshot operation performed by the user on the user interface 19. The user may adjust an edge of the local screenshot box 202 by dragging the edge of the local screenshot box, and may further adjust a specific position of the local screenshot box in the thumbnail 201 by pressing and holding a central region of the local screenshot box 202. It should be understood that, for the electronic device, in this case, the local screenshot box 202 is used only to frame-select an image in the thumbnail 211, and the electronic device cannot obtain information (for example, text information) included in the image in the local screenshot box 202.

The recognition control 203 is configured to recognize the text information included in the image in the local screenshot box 202.

The sharing control 205 is configured to share the image in the local screenshot box 202.

The shape option box 204 includes a free graphic option, a rectangle option, an ellipse option, and a heart shape option. The electronic device may adjust, in response to a touch operation such as a tap operation performed by the user on any option, a specific shape of the local screenshot box 202 to a shape corresponding to the option.

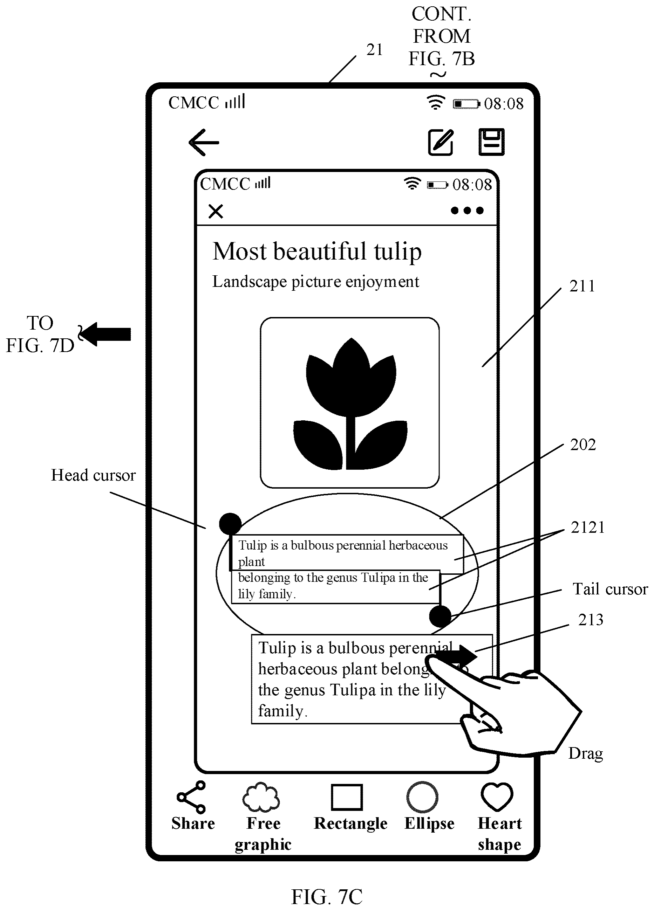

As shown in FIG. 7B, the electronic device may recognize, in response to a tap operation performed by the user on the recognition control 203, the text information included in the image in the local screenshot box 202. After the text information is recognized, the text information included in the image in the local screenshot box 202 may be frame-selected by using a head cursor and a tail cursor. For details, refer to content displayed in the text box 212 in the user interface 21 shown in FIG. 7C. Then, the user may perform a touch and hold operation on the text information obtained through recognition, and drag the text information to a side edge of the screen of the electronic device, to transmit the text obtained through recognition across applications by using the "cross-application transmission interface".

As shown in FIG. 7C, the user interface 21 may include a thumbnail 211, a local screenshot box 202, a text 2121, and text information 213.

The thumbnail 211 may be the thumbnail in the foregoing user interface 19.

The local screenshot box 202 is the local screenshot box 202 in the foregoing description. The text information in the image frame-selected by the local screenshot box 202 has been recognized and extracted by the electronic device, and this part of text is the text 2121 shown in FIG. 7C.

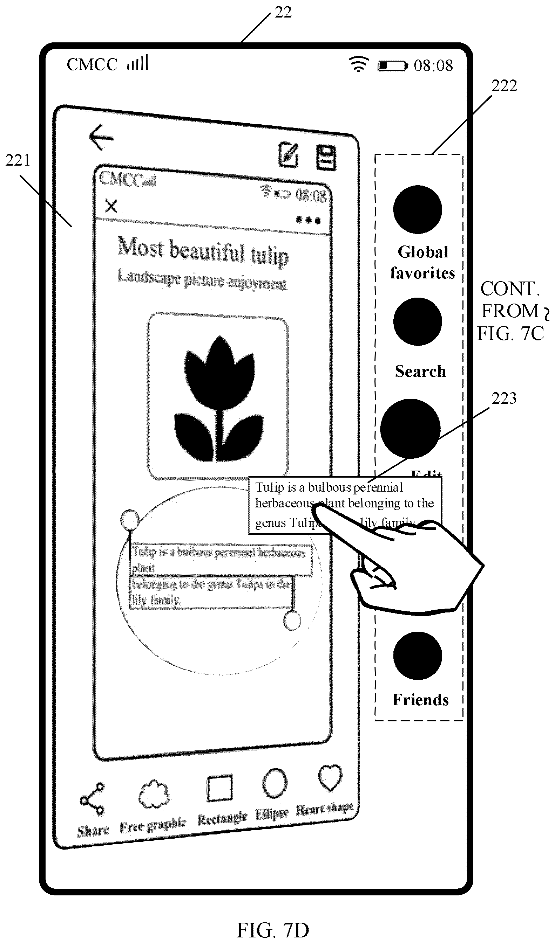

The text 213 is a text that is pulled up after the user performs a touch and hold operation (not shown in FIG. 7A to FIG. 7D) on the text information 211. As shown in FIG. 7C, after the user pulls up the text 213, the user may drag the text information 213 to a side edge of the screen of the electronic device, and the electronic device may display a user interface 22 shown in FIG. 7D in response to the user operation.

As shown in FIG. 7D, the user interface 22 is the cross-application transmission interface. The user interface 22 may include a sub-interface 221, an icon region 222, and a text 223.

For specific content and functions of the sub-interface 221 and the icon region 222, refer to the foregoing descriptions. Details are not described herein again.

Similarly, to avoid excessive blocking of the icon region 222, when the text 223 approaches the icon, the electronic device shrinks the text 213 to obtain the text 223.

Similarly, in the user interface 22, the user places the text 223 onto the corresponding icon in the icon region 222 and releases the finger. The electronic device may transmit the text 223 to the application service corresponding to the icon in response to the user operation, and display an application interface corresponding to the application service icon or feedback information.

In this embodiment of this application, the user interface 19 may be referred to as an "eighth interface", the user interface 20 may be referred to as a "ninth interface", the text 2121, the text 223, and the text 213 each may be referred to as "first text information", the recognition control 203 may be referred to as a "text recognition control", the user interface 21 may be referred to as a "tenth interface", an operation in which the user drags the text information 213 to a side edge of the screen of the electronic device may be referred to as a "tenth operation", the user interface 22 may be referred to as an "eleventh interface", and an operation in which the user places the text 223 onto the corresponding icon in the icon region 222 and releases the finger may be referred to as an "eleventh operation".

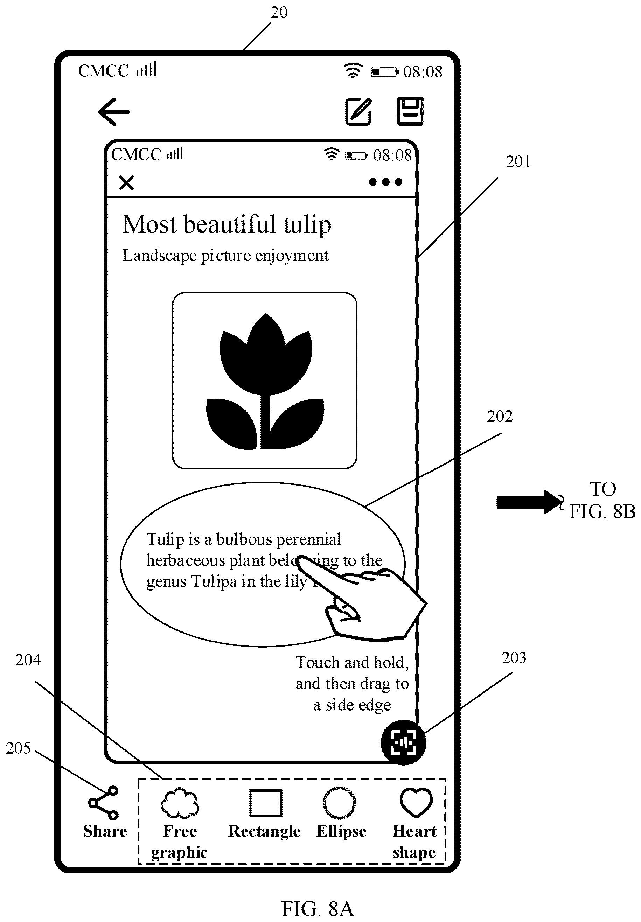

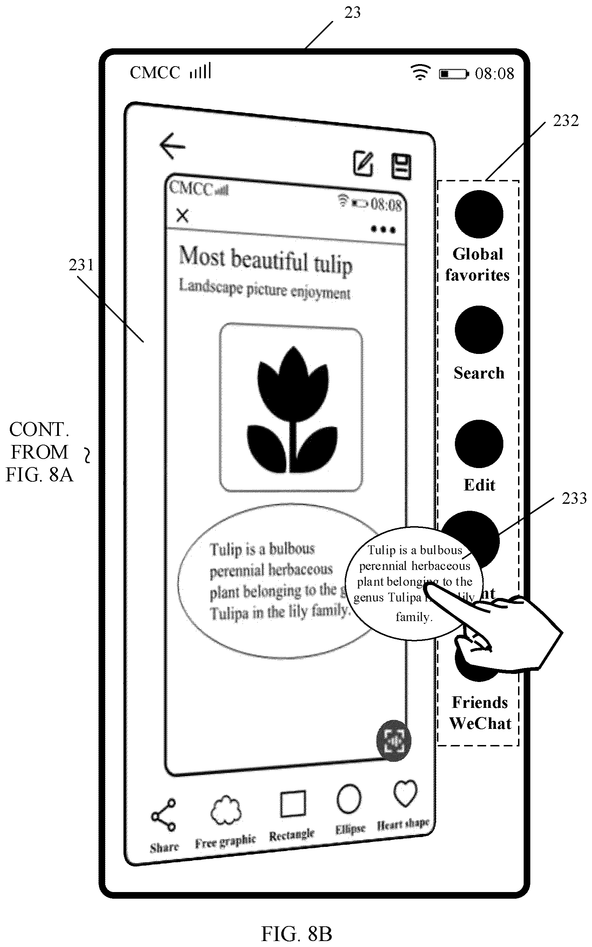

Certainly, the image captured by the user by using the local screenshot function may also be transmitted by using the cross-application transmission interface. FIG. 8A and FIG. 8B show a process in which a user shares, by using a cross-application transmission interface, an image captured by using a local screenshot function.

A user interface 20 shown in FIG. 8A is the user interface 20 shown in FIG. 7B. With reference to FIG. 8A and FIG. 8B and the foregoing description, it can be learned that the user interface 20 may include a thumbnail 201, a local screenshot box 202, a recognition control 203, a sharing control 205, and a shape option box 204. The local screenshot box 202 is a screenshot region determined by the electronic device in response to the knuckle frame selection screenshot operation performed by the user on the user interface 19. It should be understood that, although the local screenshot box 202 includes a text, because the user does not tap the recognition control 203 in this case, the local screenshot box 202 captures an image that includes a text. Similarly, as shown in FIG. 8A, the user may perform an operation of touching and holding and then dragging the image captured by the local screenshot box 202, and drag the image to a side edge of the screen of the electronic device, to transmit the image captured by the local screenshot box 202 across applications by using the "cross-application transmission interface".

As shown in FIG. 8B, the user interface 23 is the cross-application transmission interface. The user interface 23 may include a sub-interface 231, an icon region 232, and an image 233.

For specific content and functions of the sub-interface 231 and the icon region 232, refer to the foregoing descriptions. Details are not described herein again.

Similarly, to avoid excessive blocking of the icon region 232, when the image in the local screenshot box 202 is pulled up and approaches the icon, the electronic device may shrink the image in the local screenshot box 202 to obtain the image 233. It should be noted that, when the image in the local screenshot box 202 is shared by using the "cross-application transmission interface", a shape of the local screenshot box 202 is retained, that is, a shape of the image 233 is the same as a shape displayed in the local screenshot box 202.

Similarly, in the user interface 23, the user places the image 233 onto the corresponding icon in the icon region 232 and releases the finger. The electronic device may transmit the image 233 to the application service corresponding to the icon in response to the user operation, and display an application interface corresponding to the application service icon or feedback information.

In this embodiment of this application, the user interface 20 may be referred to as a "sixth interface", the user interface 23 may be referred to as a "seventh interface", and an operation in which the user places the image 233 onto the corresponding icon in the icon region 232 and releases the finger may be referred to as a "ninth operation".

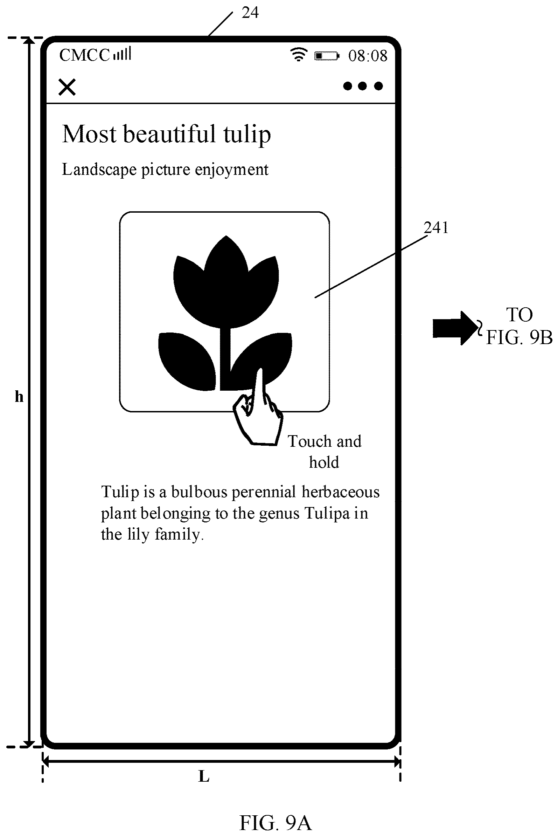

It should be understood that, in a process of daily using the electronic device, the user also often performs a drag operation on some elements. Therefore, how to determine a corresponding trigger rule for the cross-application transmission interface with reference to a user operation, and to guide, with reference to an operation habit of the user, the user in triggering the electronic device to display the "cross-application transmission interface" is a key to further improve interaction efficiency between the user and the electronic device. Therefore, a trigger rule for the cross-application transmission interface is described below with reference to FIG. 9A to FIG. 9F to FIG. 11B.

FIG. 9A to FIG. 9F are schematic diagrams for describing a trigger rule for a cross-application transmission interface according to an embodiment of this application.

As shown in FIG. 9A, a user interface 24 may be an application interface of an application "browser" in the electronic device, may be an application interface of an application "microblog^{®}", or may be an application interface of another application. This is not limited in this application.

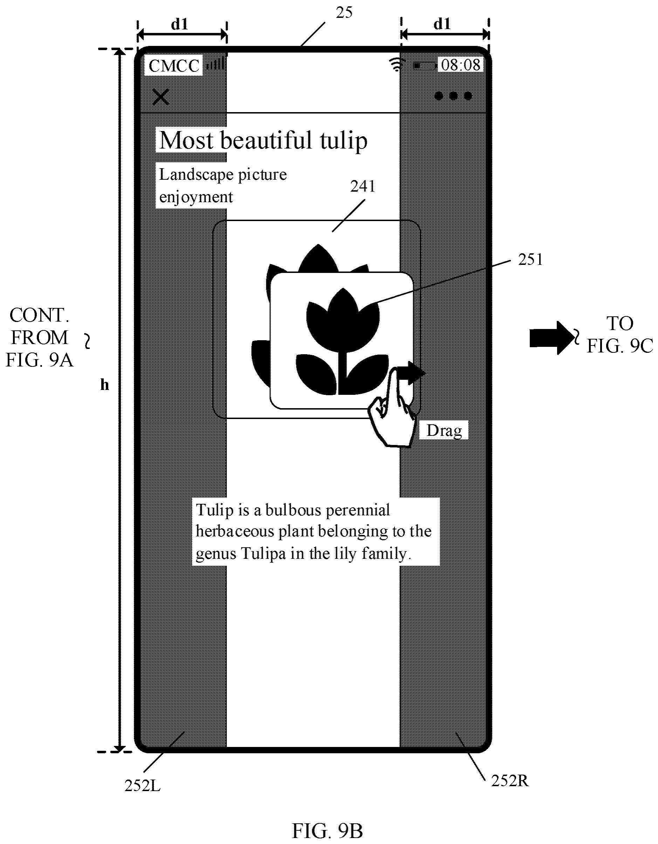

An image 241 in the user interface 24 is used as an example below for description. As shown in FIG. 9A, with reference to the foregoing description, it can be learned that the user may pull up the image 241 by performing a touch and hold operation on the image 241. The electronic device may display a user interface 25 shown in FIG. 9B in response to a user operation of pulling up the image 241.

As shown in FIG. 9B, the user interface 25 may include an image 241, an image 251, a left trigger region 252L, and a right trigger region 252R. In this embodiment of this application, the left trigger region 252L and the right trigger region 252R may be collectively referred to as a "first trigger region".

The image 251 is a thumbnail formed after the user pulls up the image 241. When the user does not release the finger, the image 251 may move in the user interface 08 with a fingertip of the user. For details, refer to the foregoing related description. Details are not described herein again.

The left trigger region 252L is a rectangular region that is bounded by a left boundary of the electronic screen, and the right trigger region 252R is a rectangular region that is bounded by a right boundary of the electronic screen. Specifically, a length of the left trigger region 252L may be d1, and a width thereof may be W. A length of the right trigger region 252R may be d1, and a width thereof may be W. Here, d1 may be set to 25% of a width of the screen of the electronic device. As shown in FIG. 9A, the width of the screen is L. W may be a height of the screen of the electronic device. As shown in FIG. 9A, the height of the screen is h. It should be noted that, in the user interface 25, the left trigger region 252L and the right trigger region 252R are displayed as dark transparent regions only to help the user understand specific positions and areas of the two regions. In an actual application scenario, specific sizes and positions of the two regions may not be displayed in the user interface. In other words, the user cannot directly observe specific outlines of the two regions in the user interface 25, and the sizes and positions of the two regions may be stored in the electronic device only in a form perceivable to the electronic device (for example, program code).

When the user drags the image 251 into the left trigger region 252L or the right trigger region 252R, the electronic device may display a special effect on an edge of the screen. Optionally, the electronic device may also display a special effect on an edge of the screen after the user drags the image 251 into the left trigger region 252L or the right trigger region 252R and continuously stays the image in the left trigger region 252L or the right trigger region 252R for duration T, so as to prompt the user to further drag the image in a direction closer to a side edge of the screen. Specifically, T may be set to 600 milliseconds.

It should be understood that "dragging the image 251 into the left trigger region 252L or the right trigger region 252R" mentioned herein means that after the user drags the image 251, a contact point (namely, an anchor) between the finger of the user and the screen enters the left trigger region 252L or the right trigger region 252R, and does not represent that the image 251 completely enters the left trigger region 252L or the right trigger region 252R.

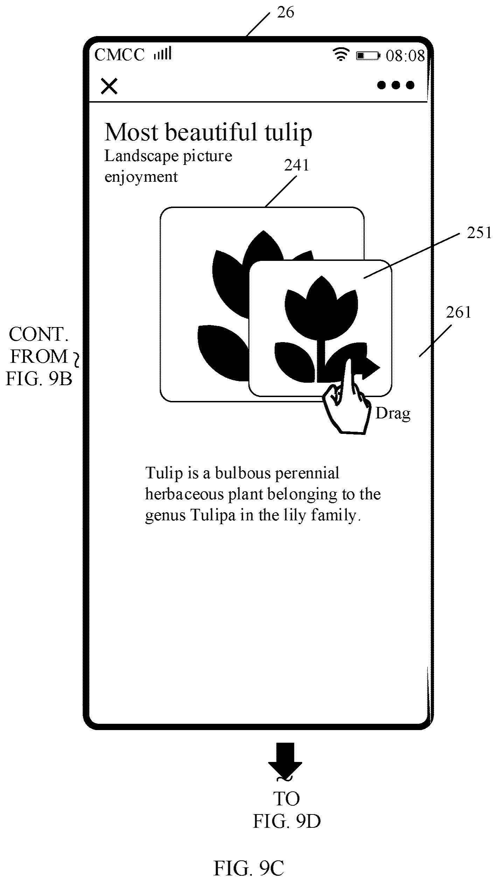

As shown in FIG. 9B, when the user drags the image 241 into the right trigger region 252R, the electronic device may display a user interface 26 shown in FIG. 9C in response to the operation. The user interface 26 may include an image 241, an image 251, and a special effect region 261. The special effect region 261 may display a special effect visible to the user, such as a light emitting special effect or a shadow special effect, or may display another special effect perceivable to the user. This is not limited in this application.

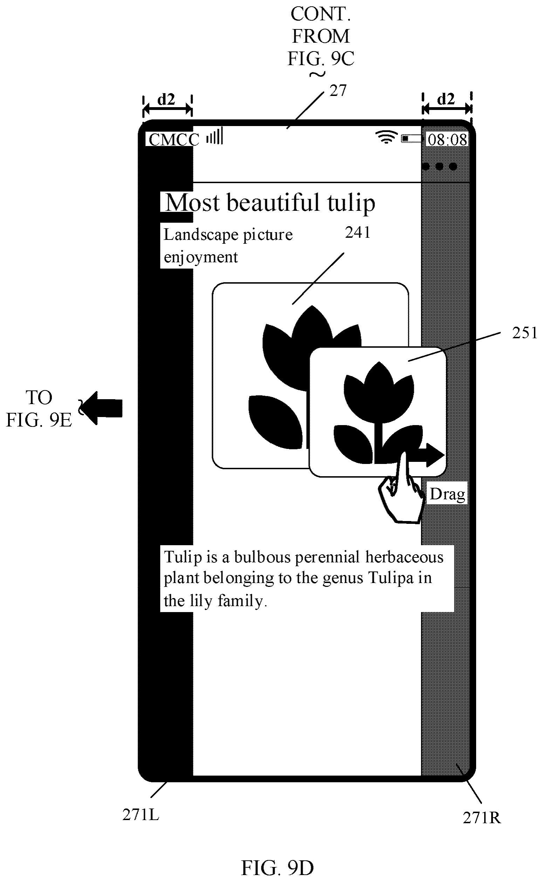

With reference to the foregoing description, it can be learned that the foregoing special effect region 261 may prompt the user to further drag the image in a direction closer to a side edge of the screen, so as to trigger the "cross-application transmission interface" interface to transmit an element to another application. Therefore, in this embodiment of this application, after the element is pulled up, the user interface is further provided with a portal opening region. When the user further drags the pulled element to the portal opening region, the electronic device may display the cross-application transmission interface in response to the operation. As shown in FIG. 9C, when the user drags the image 251 to the right side until the image enters the portal opening region, the electronic device may display a user interface 27 shown in FIG. 9D in response to the operation. As shown in the user interface 27 shown in FIG. 9D, the user interface 27 may include an image 241, an image 251, a left portal opening region 271L, and a right portal opening region 271R. In this embodiment of this application, the left portal opening region 271L and the right portal opening region 271R may be collectively referred to as a "second trigger region".

The left portal opening region 271L is a rectangular region that is bounded by a left boundary of the electronic screen, and the right portal opening region 271R is a rectangular region that is bounded by a right boundary of the electronic screen. Specifically, a length of the left portal opening region 271L is d2, and a width thereof is W. A length of the right portal opening region 271R is also d2, and a width thereof is also W, where d2 may be set to 36 pixel units, and W may be a height of the screen of the electronic device. It should be noted that, in the user interface 27, the left portal opening region 271L and the right portal opening region 271R are displayed as dark transparent regions only to help the reader understand specific positions and areas of the two regions. In an actual application scenario, specific sizes and positions of the two regions may not be displayed in the user interface. In other words, the user cannot directly observe specific outlines of the two regions in the user interface 27, and the sizes and positions of the two regions may be stored in the electronic device only in a form perceivable to the electronic device (for example, program code).

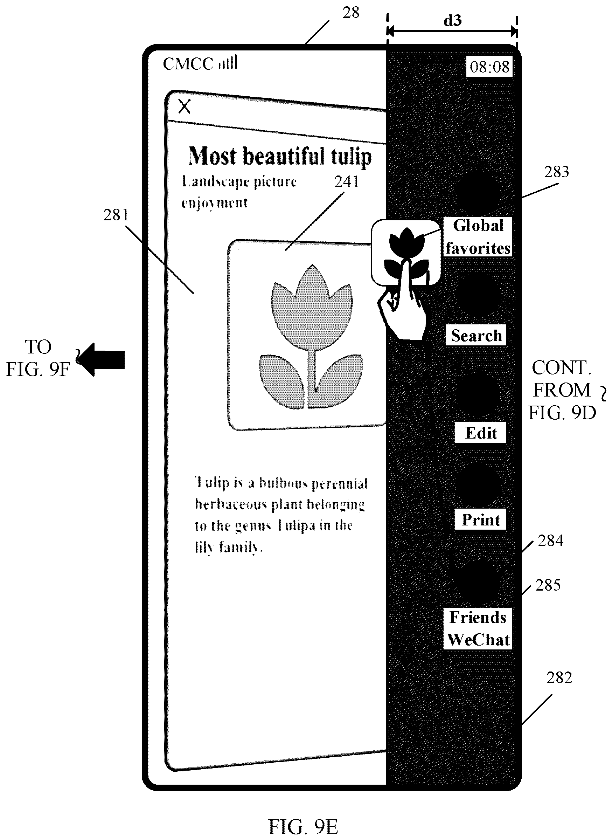

When the user drags the image 251 into the left portal opening region 271L or the right portal opening region 271R, the electronic device may immediately display a cross-application transmission interface, that is, the user interface 28 shown in FIG. 9E in response to the operation. As shown in FIG. 9E, the user interface 28 includes a sub-interface 281, an icon region 282, and an image 283.

Element content such as a text and a picture displayed in the sub-interface 281 is the same as element content (except the status bar) displayed in the user interface 24. For specific content and functions of the sub-interface 281, refer to the foregoing related description. Details are not described herein again.

The electronic device may display, in the icon region 282, one or more application service icons that are recommended based on the element (namely, the image 241 in the embodiments of this application) selected by the user. In addition, the icon region 282 may be a rectangular region that is bounded by a right boundary of the electronic screen. Specifically, the length and the width of the icon region 282 may be d3 and W, respectively, where d3 is greater than d2. Specifically, d3 may be set to 120 pixel units, and W may be the height (namely, h in the foregoing description) of the screen of the electronic device. Similarly, in the user interface 28, the icon region 282 is displayed as a dark transparent region only to help the user understand a specific position and area of the region. In an actual application scenario, a specific size and position of the region may not be displayed in the user interface. In other words, the user cannot directly observe a specific outline of the region in the user interface 28, and the size and position of the region may be stored in the electronic device only in a form perceivable to the electronic device (for example, program code). Image content displayed in the image 283 is the same as image content displayed in the image 251 and the image 241, except an area size. It should be noted that, compared with the image 51 in the user interface 25 to the user interface 27, the image 283 in the user interface 28 has a smaller area. This is because when the electronic device displays the user interface 28, the image 251 in the original user interface 27 is shrunk, so as to prevent an excessively large image from blocking an icon and a text in the icon region 282, and avoid interference to the user's selection. To be specific, the image 241 may be shrunk twice in the entire cross-application transmission process. The first shrinking occurs when the user pulls up the image 241. For details, refer to the image 251 and the image 241 in FIG. 9B. The second shrinking occurs when the electronic device starts to display the "cross-application transmission interface". For details, refer to the image 251 shown in FIG. 9D and the image 283 shown in FIG. 9E.

In the user interface 28, the user places the pulled information element (namely, the image 283) onto the corresponding icon in the icon region 282 and releases the finger. The electronic device may transmit the information element to the application service corresponding to the icon in response to the user operation, and display an application interface corresponding to the application service icon or feedback information. This is subsequently described in more detail. Details are not described herein.

In addition, to guide the user in accurately placing the pulled element into an application service required by the user, in the user interface 28, when the user drags the image 283 to approach a specific icon in the icon region 282, or when a distance between the image 283 and a specific icon in the icon region 282 is less than a specific threshold, the icon approached by the image 283 may display a particular special effect. For example, the icon and a text corresponding to the icon may be absorbed and approached by the image 283, and may be enlarged.

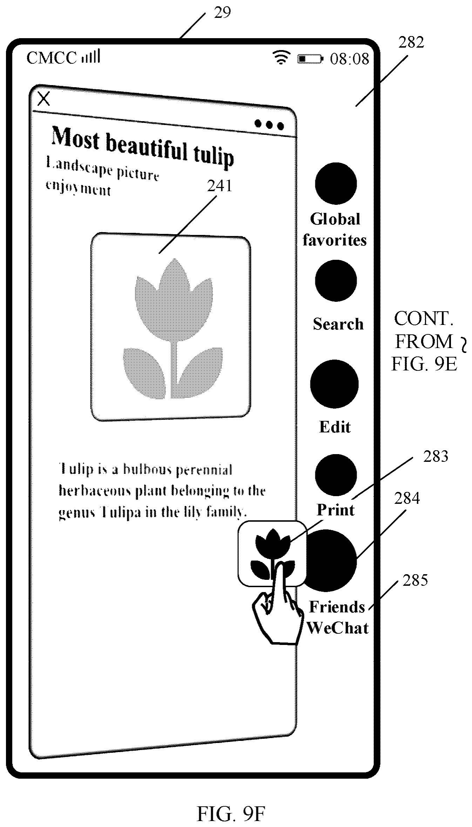

As shown in FIG. 9E, in the user interface 28, after the user drags the image 283 to the "Friends WeChat" icon, the electronic device may display the user interface 29 shown in in FIG. 9F. It can be seen from the icon region 282 in the user interface 29 that after the image 283 approaches the "Friends WeChat" icon 284, the "Friends WeChat" icon 284 and the text 285 corresponding to the "Friends WeChat" icon 284 are closer to the left than other icons and texts, that is, are closer to the image 283 than other icons and texts. In addition, the "Friends WeChat" icon 284 is also enlarged, so as to prompt the user that if the finger is released at this position, the image 283 (or the image 241) is transmitted to an application (namely, WeChat) or an application service (WeChat-Friends Chat) corresponding to the "Friends WeChat" icon.

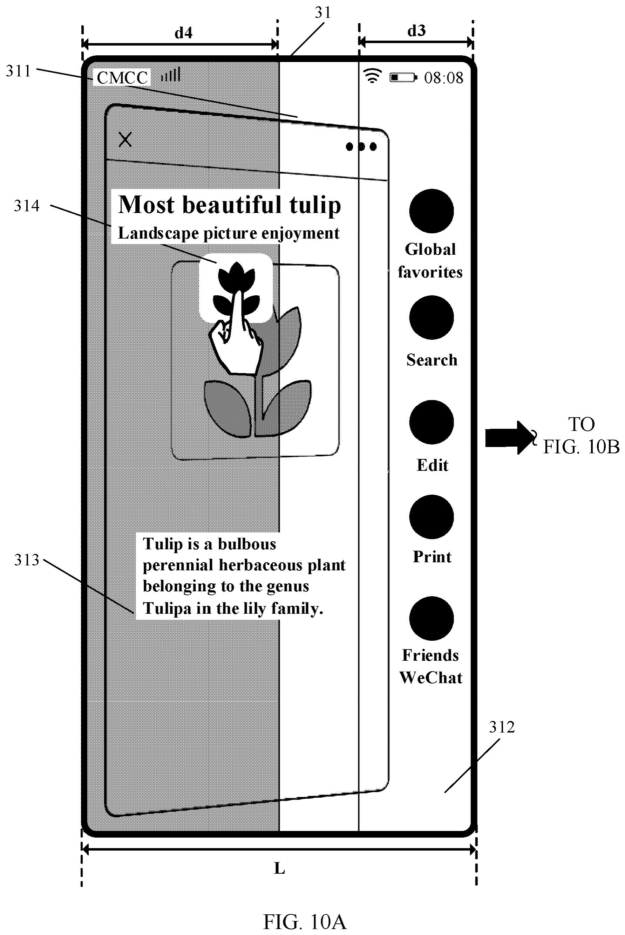

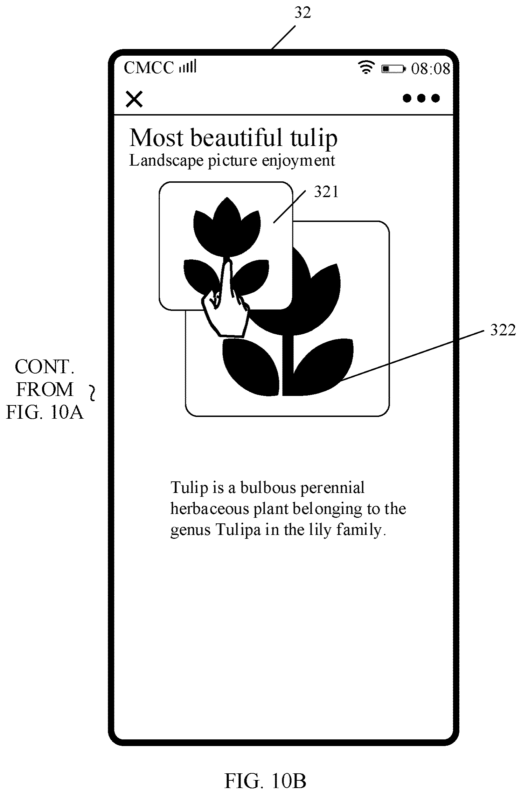

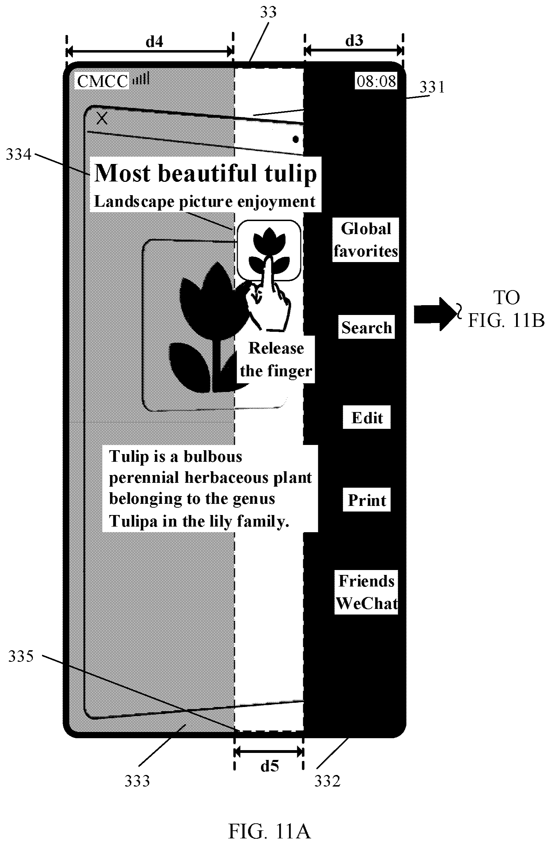

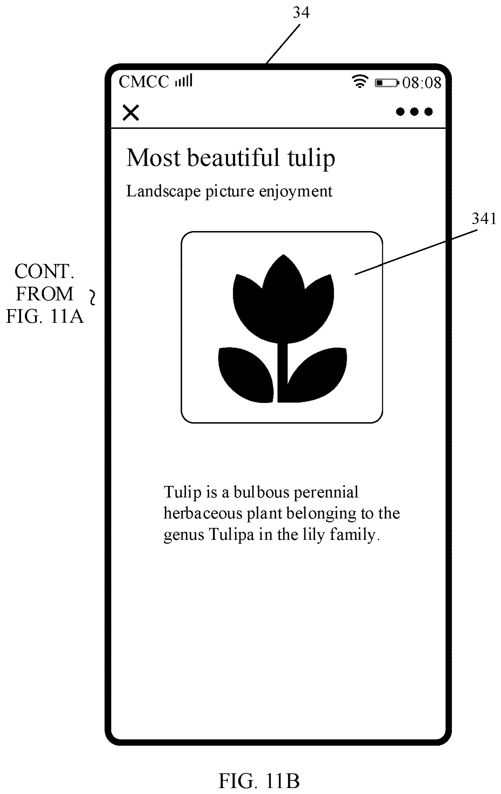

In addition, when the cross-application transmission interface is opened, the user may alternatively exit the cross-application transmission interface by performing a corresponding operation. For details, refer to FIG. 10A, FIG. 10B, FIG. 11A, and FIG. 11B.

FIG. 10A and FIG. 10B show a process in which a user exits a cross-application transmission interface by using a portal closing region.

As shown in FIG. 10A, the user interface 31 may be a cross-application transmission interface that is displayed by an electronic device after the user pulls up and drags an image in a historical interface to a side edge. The user interface 31 includes a sub-interface 311, an icon region 312, a portal closing region 313, and an image 314.

The sub-interface 311 is an interface obtained by performing transformation on an original interface in which the image 314 is located.

The icon region 312 is a region used to display one or more application service icons that are recommended by the electronic device based on the element (namely, the image 314 in the embodiments of this application) selected by the user. For a specific style and functions of the icon region 312, refer to the foregoing related descriptions of FIG. 9A to FIG. 9F. Details are not described herein again.

The portal closing region 313 may be a rectangular region that is bounded by a left boundary of the electronic screen. Specifically, a length and a width of the portal closing region 313 may be d4 and W, respectively. Specifically, d4 may be set to half of the width (namely, L in the foregoing description) of the screen of the electronic device, and W may be the height (namely, h in the foregoing description) of the screen of the electronic device. Similarly, in the user interface 31, the icon region 312 and the portal closing region 313 are displayed as dark transparent regions only to help the user understand specific positions and areas of the regions. In an actual application scenario, specific sizes and positions of the two regions may not be displayed in the user interface. In other words, the user cannot directly observe specific outlines of the two regions in the user interface 31, and the sizes and positions of the two regions may be stored in the electronic device only in a form perceivable to the electronic device (for example, program code).

As shown in FIG. 10A, after the user drags the image 314 into the portal closing region 313, if the user still presses and holds the image 314 without releasing the finger in this case, the electronic device may close the "cross-application transmission interface" and display a user interface 32 shown in FIG. 10B.

As shown in FIG. 10B, the user interface 32 may include an image 321 and an image 322.

The image 321 is a thumbnail obtained when the user just pulls up the image 322. Unlike the image 314, the image 321 is a thumbnail obtained by the electronic device by shrinking the image 322 for the first time, and the image 314 is a thumbnail obtained by the electronic device by shrinking the image 321 for the second time after the cross-application transmission interface is opened.

When the user does not release the image 321, the user may drag the image 321 to a side edge of the screen to trigger display of the cross-application transmission interface again.

FIG. 11A and FIG. 11B show a process in which a user exits a cross-application transmission interface by directly releasing the finger.

As shown in FIG. 11A, the user interface 33 may be a cross-application transmission interface that is displayed by an electronic device after the user pulls up and drags an image in a historical interface to a side edge. The user interface 33 includes a sub-interface 331, an icon region 332, a portal closing region 333, and an image 334.

For specific functions of the sub-interface 331 and the portal closing region 333, refer to the foregoing related descriptions. Details are not described herein again.

It is not difficult to understand that when a total length of d4 and d3 is less than a width L of an electronic screen, there is still a part of region in the user interface 33, and the part of region neither belongs to the icon region 332 nor belongs to the portal closing region 333. In the user interface 33, this part of region may be a rectangular region 335 with a length of d5 and a width of h.

As shown in FIG. 11A, after the user drags the image 334 into the rectangular region 335, if the user directly releases the finger in this case, the electronic device may close the "cross-application transmission interface" and display a user interface 34 shown in FIG. 11B.

As shown in FIG. 11B, the user interface 34 is an original interface in which the image 314 is located. The user interface 34 may include an image 341, and differs from the user interface 32 in the foregoing description in that because the user has released the finger, the user interface 34 no longer displays a thumbnail that is obtained by pulling up the image 341 by the user. If the user subsequently wants to transmit the image 341 to another application by using the "cross-application transmission interface" again, the user needs to obtain a corresponding thumbnail again by pulling up the image 341 by performing a touch and hold operation, and drag the thumbnail to a side edge of the screen to trigger the cross-application transmission interface again.

In a subsequent embodiment, for a specific operation of triggering the "cross-application transmission interface" by the user and a process of closing the "cross-application transmission interface" and a corresponding interface change process of the electronic device, refer to related descriptions in the foregoing embodiment. Details are not described later again.

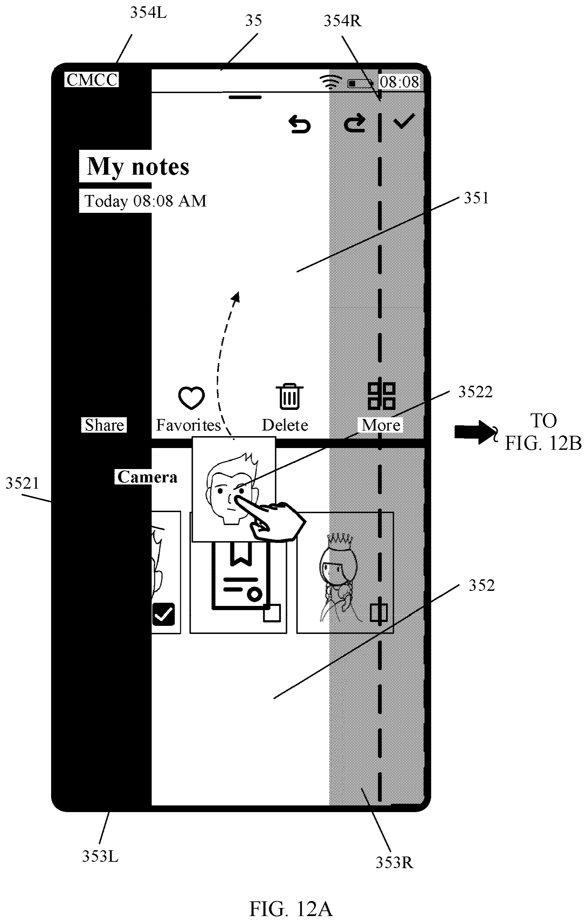

It should be understood that, in a process of daily using the electronic device, the user also often performs a drag operation on some elements. For example, after the user opens two application interfaces by using a "smart screen splitting" function, or opens two application interfaces in a form of a small window or "picture-in-picture", the user also often transmits information across applications in this mode. In addition, in this embodiment of this application, in a split-screen state and a small window state, the user may complete information transmission across applications directly by using the screen splitting function, or may complete information transmission across applications by using the "cross-application transmission interface" provided in this application. With reference to the foregoing related description of the trigger rule for the "cross-application transmission interface", the following describes different manners in which the electronic device transmits information across applications in a split-screen state and in a small window state. For details, refer to FIG. 12A-FIG. 15C.

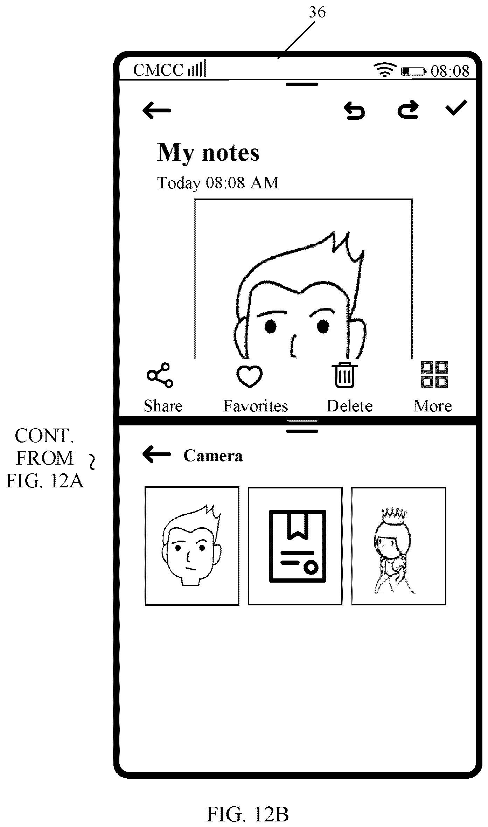

FIG. 12A and FIG. 12B show a process in which a user completes information transmission across applications in a split-screen state by using a screen splitting function of an electronic device.

As shown in FIG. 12A, a user interface 35 includes a first display region 351 and a second display region 352. The first display region 351 is used to display an application interface of the application "note", and the second display region 352 is used to display an application interface of the application "album". In this embodiment of this application, the user interface 35 may be referred to as a "first interface", the first display region 351 may be referred to as a "second sub-interface", and the second display region 352 may be referred to as a "first sub-interface".

In this case, the user performs a touch and hold operation on the image 3521 in the second display region 352, and pulls up the image 3521 to obtain a thumbnail 3522 of the image 3521. In this embodiment of this application, the image 3521 or the thumbnail 3522 may be referred to as "first information". In addition, with reference to the foregoing description, it can be learned that, after the image 3521 is pulled up, there may be two pairs of determining regions in the user interface 35, which are respectively a region 353L and a region 353R in the user interface 35, and a region 354L and a region 354R that are frame-selected by using a dashed line box in the user interface 35. The region 353L and the region 353R are respectively a left trigger region and a right trigger region. The region 354L and the region 354R are respectively a left portal opening region and a right portal opening region. In this embodiment of this application, the region 353L and the region 353R may be collectively referred to as a "first trigger region", and the region 354L and the region 354R may be collectively referred to as a "second trigger region". It can be learned from the foregoing description that, after the user drags the image 3522 into the left trigger region 354L or the right trigger region 354R and continuously stays the image 3522 for duration T, the electronic device may display a special effect on an edge of the screen. When the user continues to drag the image 3522 into the left portal opening region 354L or the right portal opening region 354R, the electronic device displays a corresponding cross-application transmission interface in response to the operation. However, if the user drags the image 3522 from the second display region 352 into the first display region 351 without allowing the image 3522 to touch the left portal opening region 354L or the right portal opening region 354R, the electronic device may still transmit the image 3522 (or the image 3521) to the application "note", and display the image 3522 (or the image 3521) in the first display region 351.

As shown in FIG. 12A, the user may drag the image 3522 into the first display region 351 in a direction indicated by a dashed-line arrow shown in FIG. 12A. In this embodiment of this application, the operation of dragging the image 3522 into the first display region 351 may be referred to as a "first operation". In this process, as long as the image 3522 does not touch the left portal opening region 354L or the right portal opening region 354R, the image 3522 may directly transmit the image 3522 (or the image 3521) to the application "note" without opening the "cross-application transmission interface", and display the image 3522 (or the image 3521) in the first display region 351. For details, refer to a user interface 36 shown in FIG. 12B. It should be noted that even if the image 3522 transitorily touches the left portal opening region 354L or the right portal opening region 354R in this process, the electronic device displays a corresponding special effect on a side edge only, and does not directly trigger the "cross-application transmission interface".

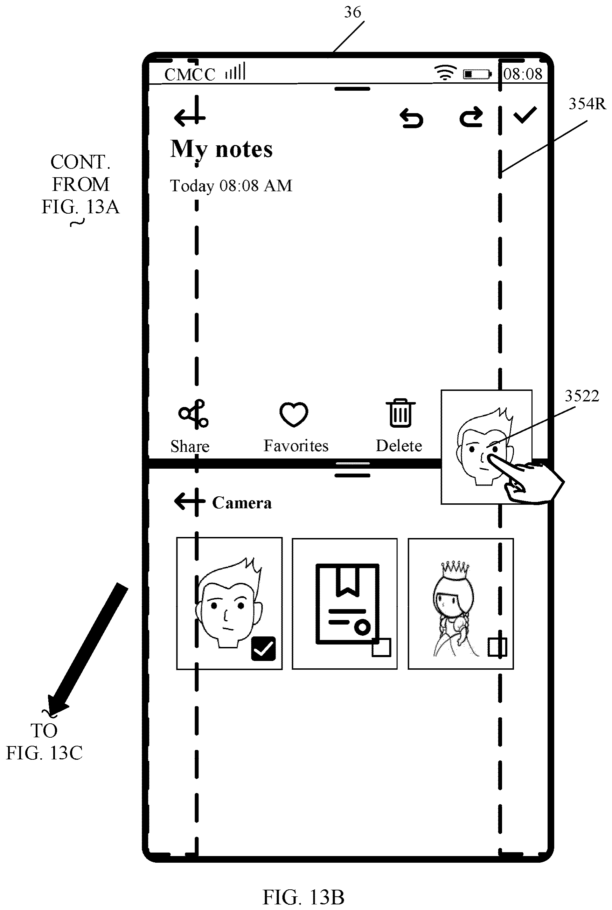

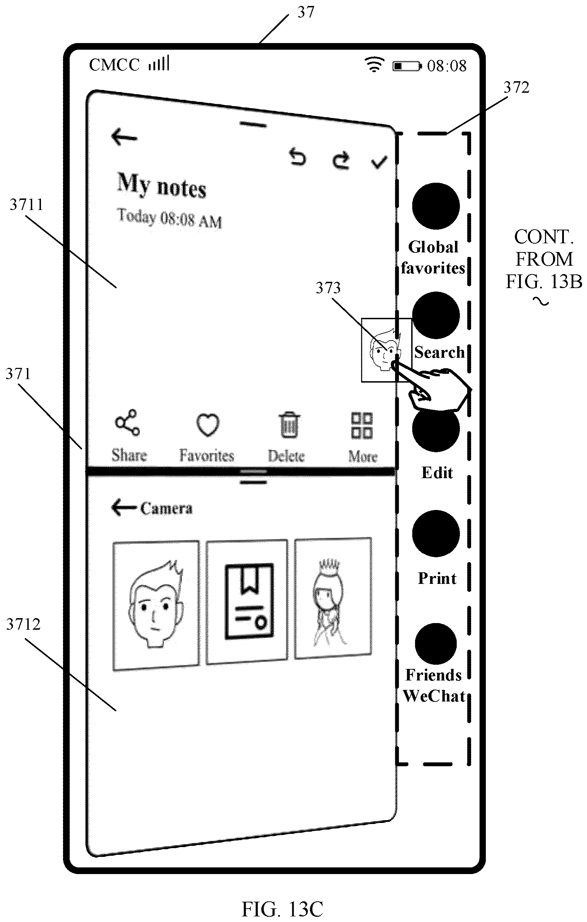

Similarly, the user interface 35 in the foregoing description is used as an example. FIG. 13A to FIG. 13C show a process in which a user completes information transmission across applications in a split-screen state by using a "cross-application transmission interface" of an electronic device. As shown in FIG. 13A, for content of an element included in the user interface 35 and a function and an effect of each element, refer to the foregoing related descriptions of FIG. 12A and FIG. 12B. Details are not described herein again. However, unlike the manner of dragging the selected element (namely, the image 3522) shown in FIG. 12A and FIG. 12B, in this case, the user wants to transmit the image 3522 to another application by using the "cross-application transmission interface", and this application may not be the application "note". Therefore, as shown in FIG. 13A and FIG. 13B, the user may drag the image 3522 to the right portal opening region 354R in a direction indicated by a dashed-line arrow shown in FIG. 13A. When the image 3522 enters the right portal opening region 354R, the electronic device may immediately display a user interface 37 shown in FIG. 13C.

As shown in FIG. 13C, the user interface 37 may include a sub-interface 371, an icon region 372, and an image 373.

For specific content and functions of the sub-interface 371, refer to the foregoing related description. Details are not described herein again. However, it should be specially noted that, in a split-screen state, after the user triggers the "cross-application transmission interface" by performing an operation, the sub-interface 371 still displays a picture in a split-screen mode, and still includes two display regions, namely, a first display region 3711 and a second display region 3712 that are shown in FIG. 13C.

For specific content and functions of the icon region 372, refer to the foregoing related description. Details are not described herein again.

Image content displayed in the image 373 is the same as image content displayed in the image 3521 and the image 3522, except an area size.

In the user interface 37, the user places the pulled information element, namely, the image 373, onto the corresponding icon in the icon region 372 and releases the finger. The electronic device may transmit the information element to the application service corresponding to the icon in response to the user operation, and display a corresponding application interface. In this embodiment of this application, the user interface 35 may be referred to as a "first interface", the image 3521, the thumbnail 3522, or the image 373 may be referred to as "first information", the operation of dragging the image 3522 into the right portal opening region 354R may be referred to as a "second operation", the operation of placing the image 373 onto the corresponding icon in the icon region 372 and releasing the finger may be referred to as a "third operation", the user interface 37 may be referred to as a "second interface", and the icon displayed in the icon region 372 in the user interface 37 may be referred to as "at least one application service icon".

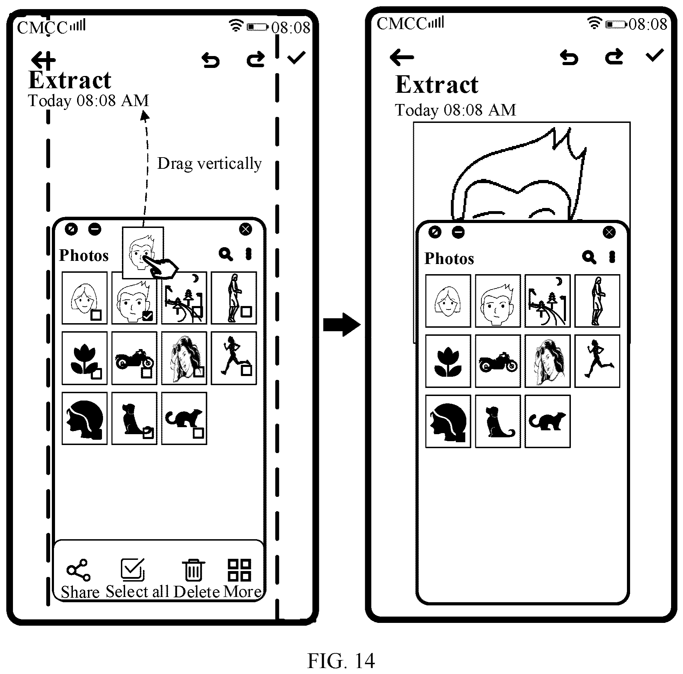

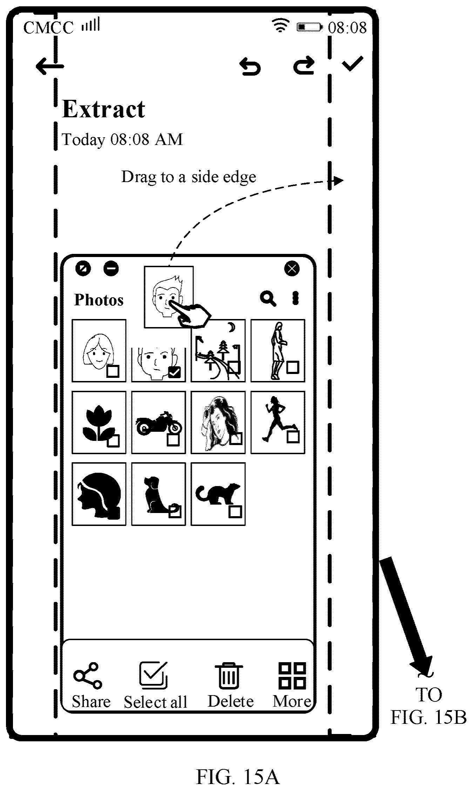

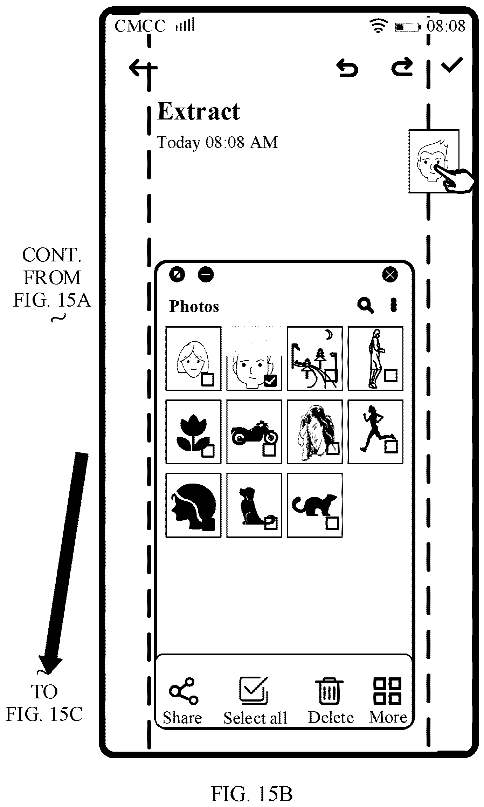

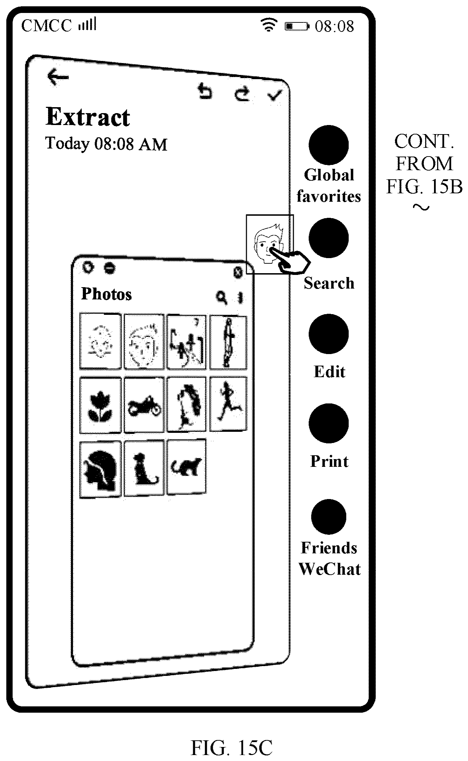

Similarly, when the electronic device is in a multi-window state of a small window, the user may also complete a process of transmitting information across applications by using a multi-window function or the "cross-application transmission interface". FIG. 14 and FIG. 15A to FIG. 15C show a process in which a user completes information transmission across applications by using a screen splitting function and a "cross-application transmission interface" of an electronic device in a small window state, respectively. In the small window state, the user interface displayed by the electronic device may include application interfaces of two different applications, where an application interface of one application is displayed in full screen, and an application interface of the other application is displayed in a small window (floating window) on the top. When information is transmitted across applications in a small window state, the user may directly drag an element in one application interface into the other application interface by using a multi-window function. A specific operation process is similar to an operation process of performing cross-application transmission in a split-screen state in FIG. 12A and FIG. 12B. It may be understood that, in a small window state, the information transmission manner may be dragging information from a small window (floating window) on the top into an interface displayed in full screen, or dragging information from an interface displayed in full screen into a small window (floating window) on the top. In addition, in a small window state, the user may alternatively perform transmission by using the "cross-application transmission interface". A specific operation process is similar to the operation process shown in FIG. 13A to FIG. 13C. Therefore, details are not described herein. For details, refer to FIG. 14 and FIG. 15A to FIG. 15C, and the foregoing related descriptions of FIG. 12A, FIG. 12B, and FIG. 13A to FIG. 13C for understanding.

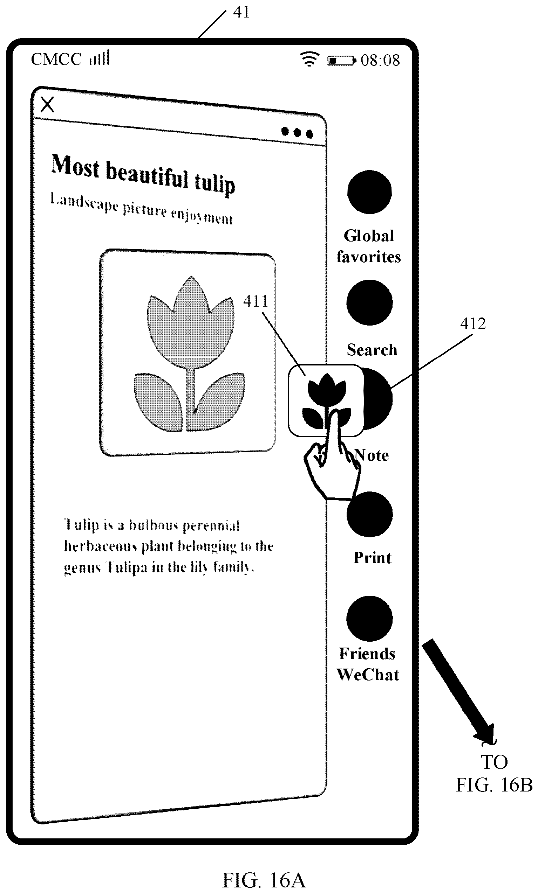

After the information is transmitted across applications by using the "cross-application transmission interface", the electronic device may further provide different prompt manners and display different interface effects for the user based on a type of an application service to which the information is transmitted and a result of information transmission. With reference to FIG. 16A-FIG. 21C, the following describes an interface style that may be displayed by the electronic device after the user transmits information across applications by using the "cross-application transmission interface".
① After the transmission is completed, the user is prompted by using a snack bar. Refer to FIG. 16A to FIG. 16C.

As shown in FIG. 16A, a user interface 41 is a cross-application transmission interface in which the user transmits the image 411 across applications. At this time, the user is placing the pulled information element, namely, the image 411, onto the icon of "note" on the right side.

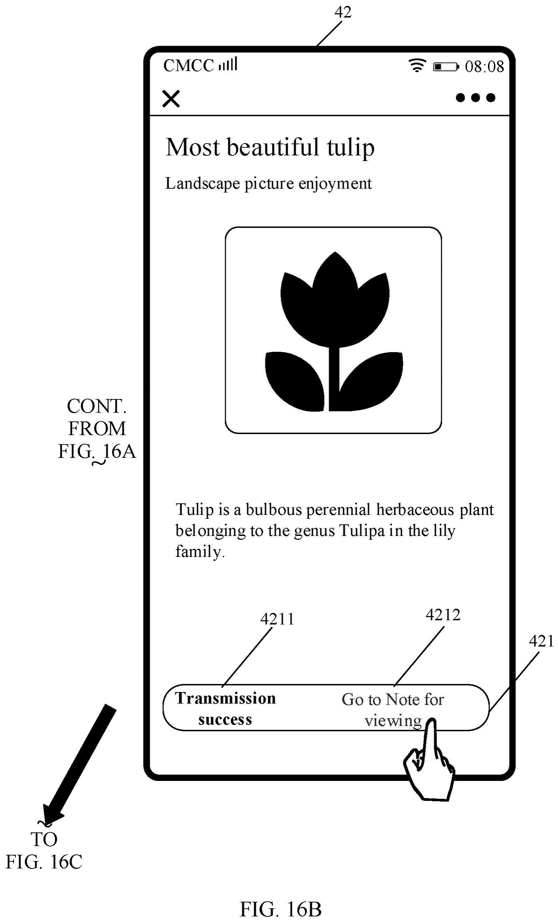

As the user releases the finger, the electronic device may transmit the image 411 to the application service "note" in response to the user operation. If transmission succeeds, the electronic device may display a user interface 42 shown in FIG. 16B.

As shown in FIG. 16B, a snack bar 421 may be displayed below the user interface 42. Specifically, the snack bar 421 may include prompt information 4211 and a jump control 4212.

The prompt information 4211 may include a text "transmission success", which is used to prompt the user that the electronic device already successfully transmits the image 411 to the application service "note".

The jump control 4212 may respond to a touch operation of the user, so that the electronic device jumps from a current interface to an interface of the application service "note".

In addition, if the user does not perform any operation on the snack bar 421, the snack bar 421 may disappear automatically after being displayed for a period of time (for example, 2s-3s). Alternatively, when the snack bar 421 is still displayed in the user interface 42, the user may tap a position other than a position at which the snack bar 421 is located in the user interface 42, so as to make the snack bar 421 disappear.

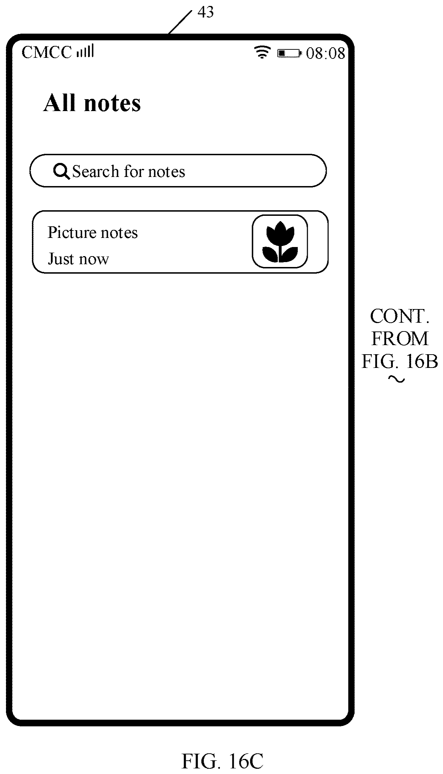

As shown in FIG. 16B, after the user taps the jump control 4212, the electronic device may display a user interface 43 shown in FIG. 16C in response to the operation. The user interface 43 is an interface of the application service "note". It can be seen from the user interface 43 that the image 411 has been transmitted by the electronic device to the "note".

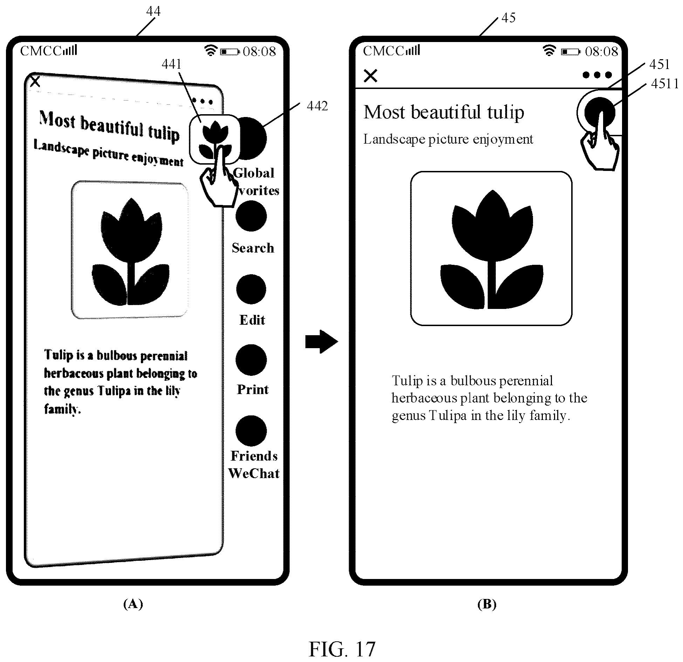

It should be understood that FIG. 16A to FIG. 16C show only an example of the user interface provided in this embodiment of this application, and should not constitute a limitation on this embodiment of this application. For example, when the user transmits the pulled element to another application service in an immersive scenario, the electronic device may still use the snack bar to prompt the user in the interface.
(2) After the transmission is completed, a capsule is generated to prompt the user. Refer to FIG. 17-FIG. 18F.

As shown in (A) in FIG. 17, a user interface 44 is a cross-application transmission interface in which the user transmits the image 441 across applications. At this time, the user may be placing the pulled information element, namely, the image 441, onto the icon of "global favorites" on the right side.

As the user releases the finger, the electronic device may transmit the image 441 to the global favorites (that is, collect the image 441 to the global favorites) in response to the user operation. If the collection succeeds, the electronic device may display a user interface 45 shown in (B) in FIG. 16.

As shown in (B) in FIG. 17, if the electronic device successfully collects the image 411 to the global favorites, a capsule 451 may be displayed on a right side edge of the user interface 45. Specifically, an icon 4511 of the "global favorites" may be displayed in the capsule 451. In addition, the user may change a specific position of the capsule 451 on the right side edge by pressing and holding, and then dragging the capsule 451. In addition, the user may further perform a tap operation on the capsule 451 shown in (B) in FIG. 17, so that the electronic device jumps from the current interface to the interface of the application service "global favorites". For details about the interface of the "global favorites" after the jumping, refer to the user interface 43 shown in FIG. 16B and the foregoing related description. Details are not described herein again.

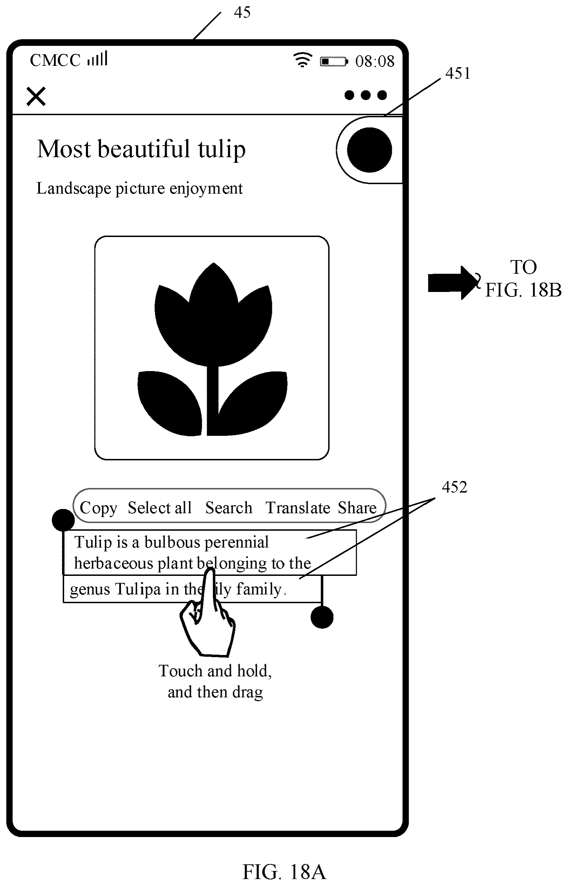

Optionally, the capsule 451 may disappear automatically after being displayed on the side edge of the screen for a period of time. Alternatively, when the user does not actively close the capsule 451, the capsule 451 may be displayed on the side edge of the screen all the time, so that the user may continue to pull up another information element included in the interface currently displayed by the electronic device, and place the information element into the "global favorites". For details, refer to FIG. 18A to FIG. 18F.

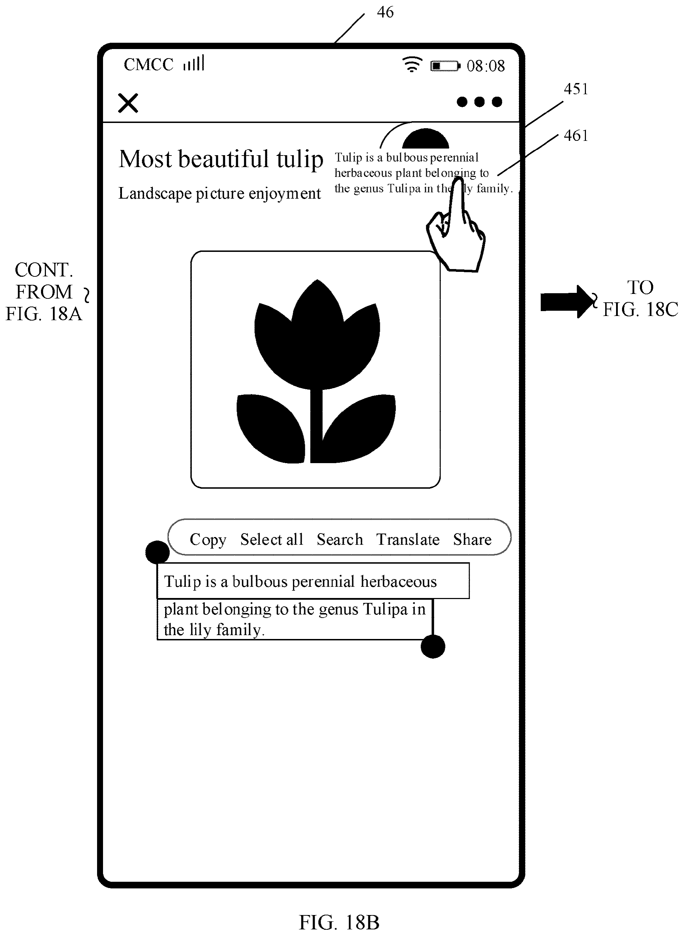

As shown in FIG. 18A, the user interface 45 is the user interface 45 shown in (B) in FIG. 17. It may be understood that, in this case, the user has collected the image 441 to the "global favorites", and in this case, the user interface 45 still displays the capsule 451. If the user subsequently further wants to collect another element in the interface to the "global favorites", the user may pull up the element in the interface and move the element to the capsule 451, and then release the finger. As shown in FIG. 18A, after the user selects the text 452, the user may pull up the text 452 by touching and holding the text 452, and then directly drag the text 452 onto the capsule 451, and the electronic device may display a user interface 46 shown in FIG. 18B in response to the user operation.

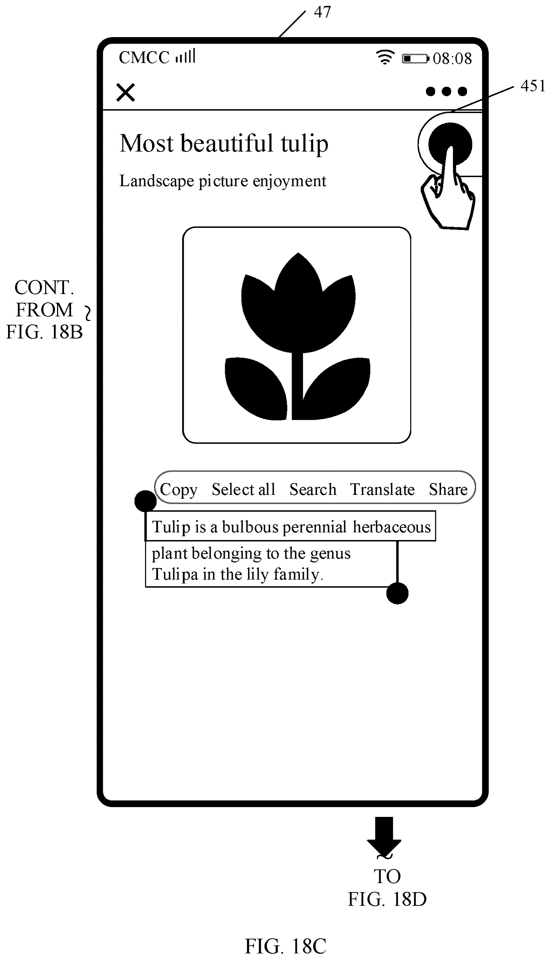

As shown in FIG. 18B, in the user interface 46, after the text 452 is dragged onto the capsule 451, the electronic device may enlarge the capsule 451 for ease of user operation, that is, the capsule 451 in the user interface 46 may be larger than the capsule 451 in the user interface 45, and the electronic device may shrink the original text 452 to the text 461 in the user interface 46. In this case, if the user releases the finger for the text 461, the electronic device may transmit the text 461 (or the text 452) to the global favorites (that is, collect the text 461 to the global favorites) in response to the user operation. If the collection succeeds, the electronic device may display a user interface 47 shown in FIG. 18C.

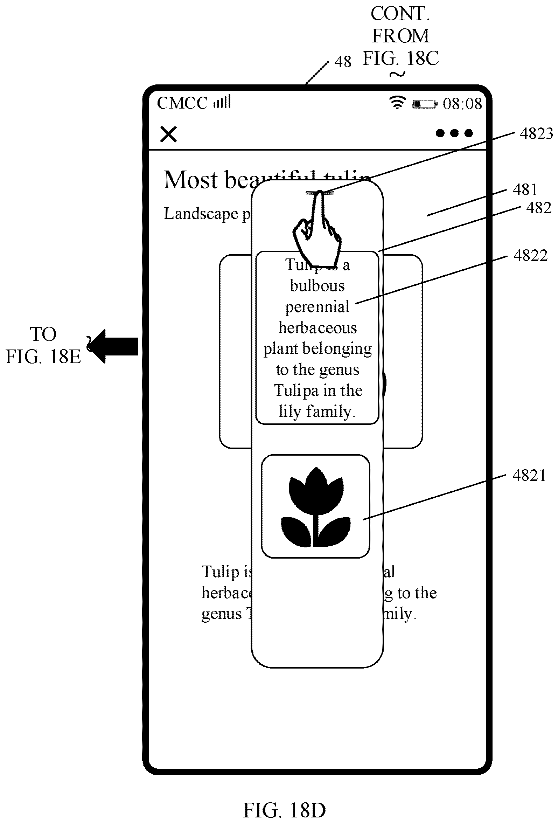

As shown in FIG. 18C, the capsule 451 is still displayed in the user interface 47. The user may open the interface of the application service "global favorites" by performing a tap operation on the capsule 451 shown in FIG. 18C. In a possible implementation, after the user taps the capsule 451, the electronic device may display the interface of the application service "global favorites" in the interface in a form of a small window. For details, refer to a user interface 48 shown in FIG. 18D.

As shown in FIG. 18D, the user interface 48 may include a main interface 481 and a sub-interface 482. The main interface 481 may be an application interface of an application "browser" in the electronic device, and the sub-interface 482 is a small window interface of the application service "global favorites". It can be seen from the user interface 48 that the sub-interface 482 may include an image 4821, a text 4822, and a function expansion control 4823.

The image 4821 corresponds to the image 441 in the foregoing description.

The text 4822 corresponds to the text 452 or the text 461 in the foregoing description.

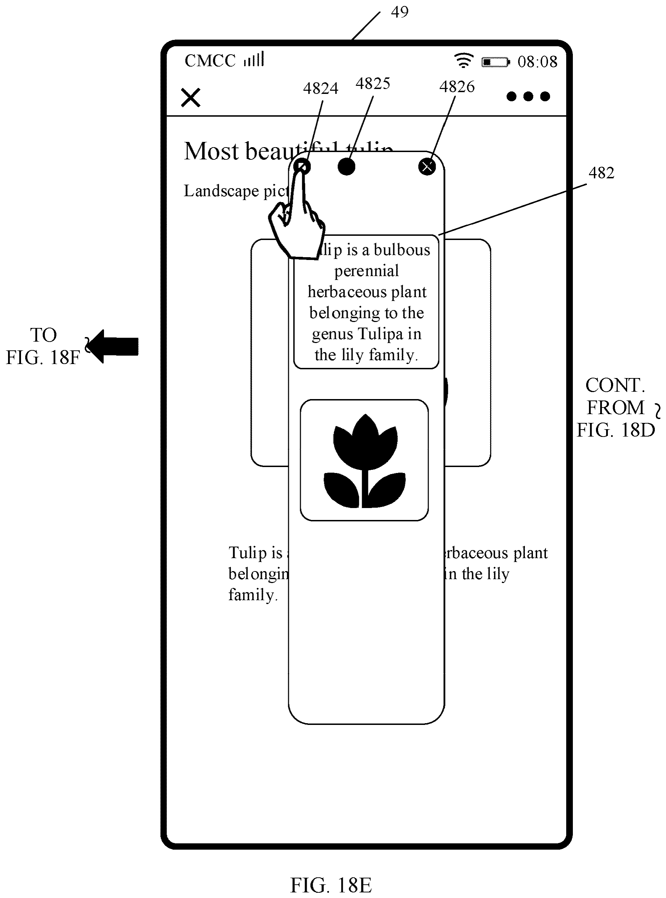

The function expansion control 4823 may respond to a touch operation of the user, for example, a tap operation shown in FIG. 18D, so that the electronic device displays the user interface 49 shown in FIG. 18E.

As shown in FIG. 18E, in the user interface 49, the sub-interface 482 displays an expand control 4824, a minimization control 4825, and a closing control 4826.

The minimization control 4825 may respond to the user operation, so that the electronic device collapses the sub-interface 482 and displays it on the side edge of the screen in a form of a capsule. The closing control 4826 may respond to the user operation, so that the electronic device closes the sub-interface 482.

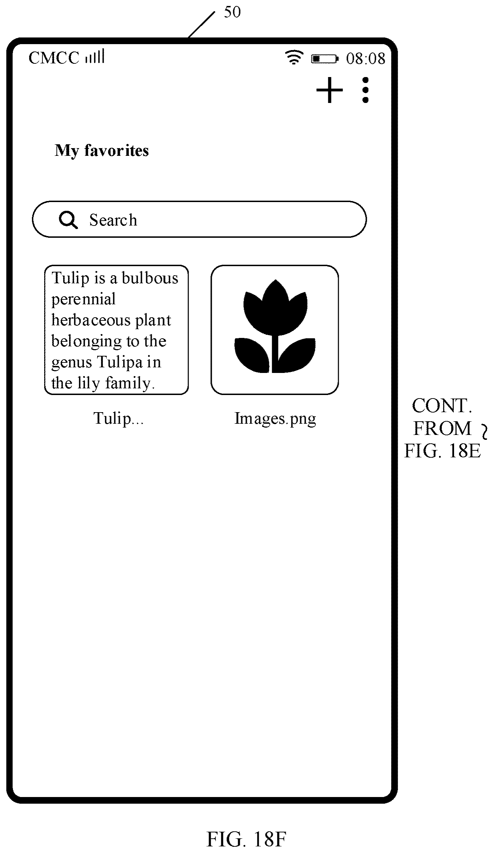

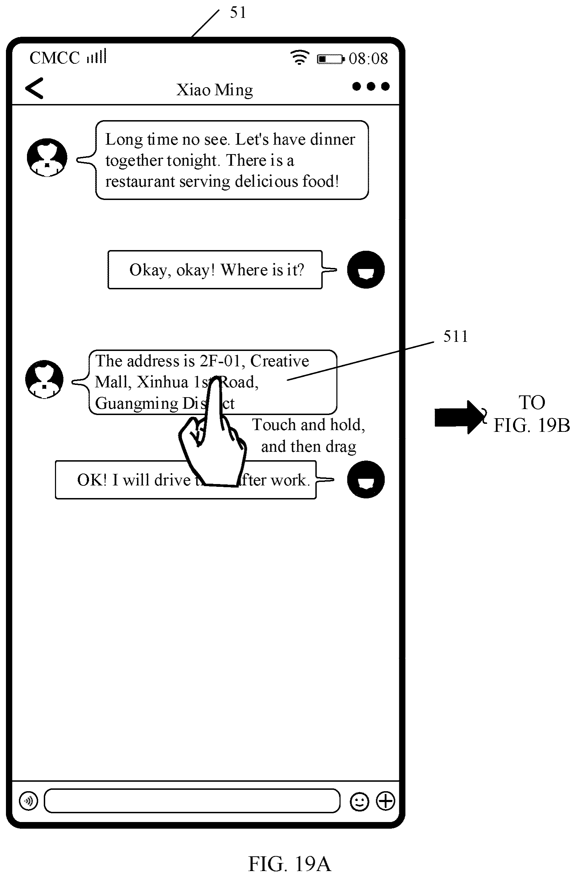

The expand control 4824 may respond to the user operation, so that the electronic device displays the interface of the application service "global favorites" in full screen. As shown in FIG. 18E, the electronic device may display a user interface 50 shown in FIG. 18F in response to a tap operation performed by the user on the expand control 4824. It can be seen from the user interface 50 that, in this case, the electronic device has displayed the interface of the application service "global favorites" in full screen, and the text image 441 and the text 452 that are previously collected by the user are also correspondingly displayed in the user interface 50.
③ After the transmission is completed, a small window of an application is displayed in the original interface or a new application interface is directly displayed in full screen. Refer to FIG. 19A to FIG. 19D.

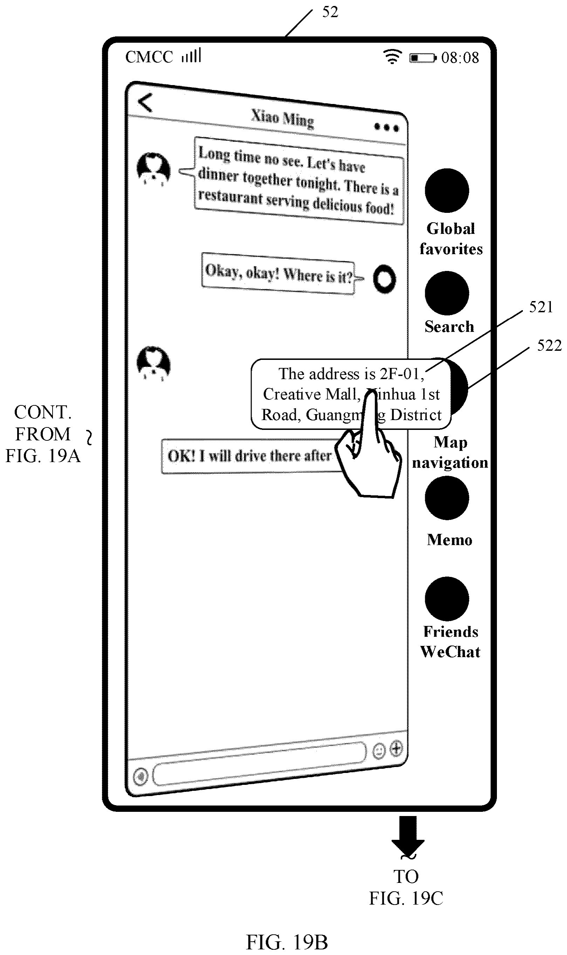

As shown in FIG. 19A, the user interface 51 is a chat interface of the application "WeChat^{®}". The user may perform a touch and hold operation on the text 511, pull up the text 511 that includes location information, and drag the text 511 to a side edge of the electronic screen. The electronic device may display a user interface 52 shown in FIG. 19B in response to the operation.

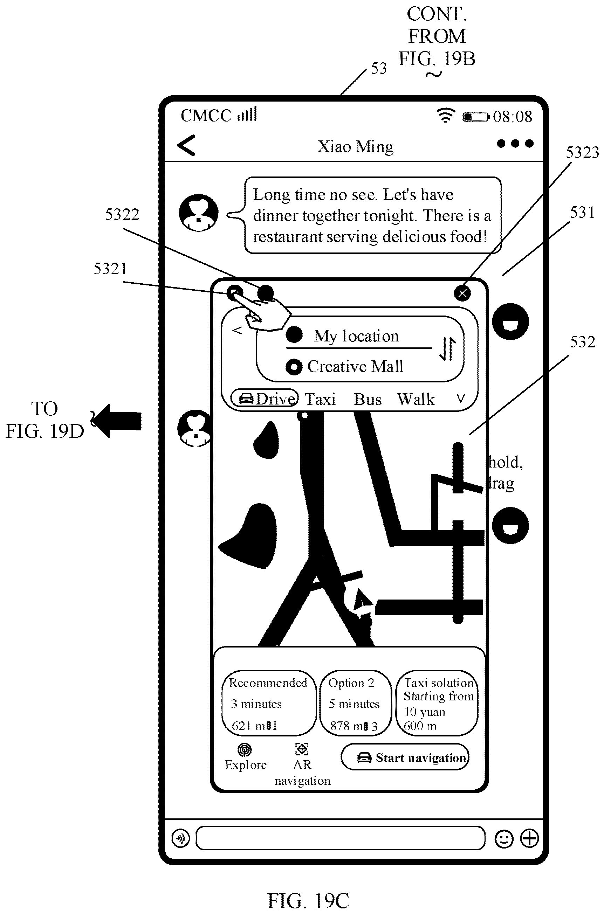

As shown in FIG. 19B, the user interface 52 is the cross-application transmission interface. With reference to the foregoing description, it can be learned that the user may drag the text 521 obtained by shrinking the text 511 onto any icon in an icon bar on the right side of the user interface 52, and then release the finger, so as to transmit the text 521 (or the text 511) to an application service corresponding to the icon. As shown in FIG. 19B, after the user drags the text 521 onto an icon 522 of "map navigation", and then releases the finger, the electronic device may display a user interface 53 shown in FIG. 19C in response to the user operation.

As shown in FIG. 19C, the user interface 53 may include a main interface 531 and a sub-interface 532. The main interface 531 may be an application interface of the application "WeChat^{®}" in the electronic device, and the sub-interface 532 is a small window interface of the application "Amap^{®}". The user may adjust a specific position of the sub-interface 532 in the user interface 53 by pressing and holding, and then dragging the sub-interface 532. It can be seen from the user interface 53 that the sub-interface 532 may include an expand control 5321, a minimization control 5322, and a closing control 5323.

The minimization control 5322 may respond to the user operation, so that the electronic device collapses the sub-interface 532 and displays it on the side edge of the screen in a form of a capsule. The closing control 5323 may respond to the user operation, so that the electronic device closes the sub-interface 532.

The expand control 5321 may respond to the user operation, so that the electronic device displays the interface of the application "Amap^{®}" in full screen, that is, displays the sub-interface 532 in full screen. As shown in FIG. 19C, the electronic device may display a user interface 54 in response to a tap operation performed by the user on the expand control 4824. It can be seen from the user interface 54 that, in this case, the electronic device has displayed the interface of the application "Amap^{®}" in full screen.

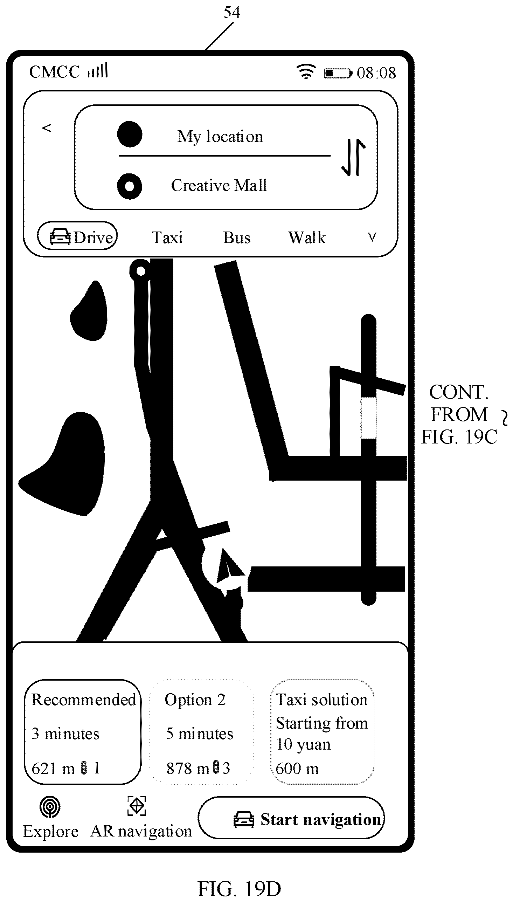

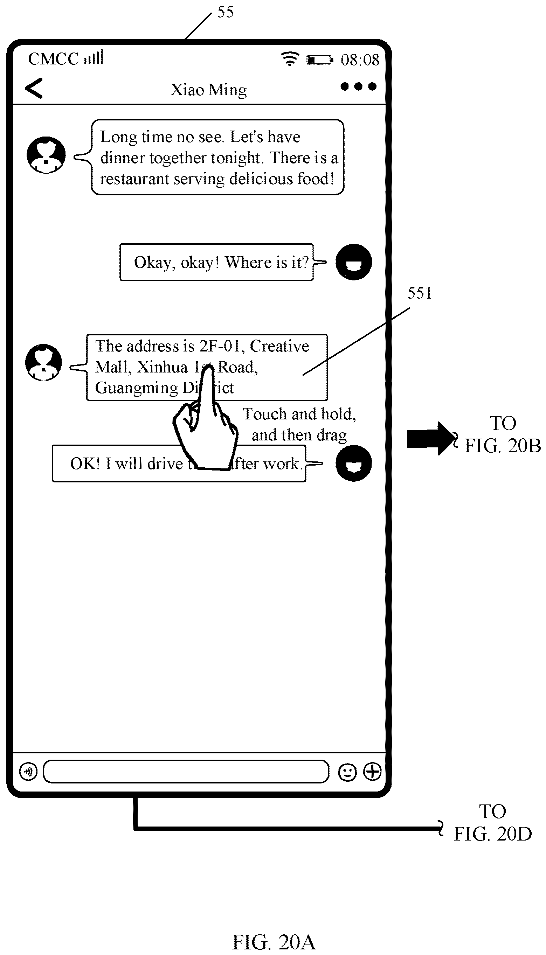

Optionally, after the user places the text 521 onto the icon 522 of "map navigation", and then releases the finger, in response to the user operation, the electronic device may alternatively not display the user interface 53 shown in FIG. 19C, but directly display the user interface 54 shown in FIG. 19D, that is, directly display a new application interface in full screen.
④ After the cross-device transmission is completed, a snack bar is displayed in the original interface to prompt the user, and another device is controlled to apply a small window or directly display a new application interface in full screen. Refer to FIG. 20A to FIG. 20D.

It should be noted in advance that, in this embodiment of this application, after the electronic device establishes a communication connection to another intelligent device, the electronic device may further transmit information across devices based on the "cross-application transmission interface" provided in this application.

FIG. 20A to FIG. 20D show examples of a specific process in which when an electronic device establishes a communication connection to an in-vehicle terminal, the electronic device sends text information that includes location information in WeChat to the in-vehicle terminal by using a "cross-application transmission interface", and uses the in-vehicle terminal to navigate the location information.

As shown in FIG. 20A to FIG. 20D, the electronic device 1900 has established a communication connection to the in-vehicle terminal through Bluetooth, Wi-Fi, or the like. The electronic device 1900 may be an electronic device that supports an interaction manner of "cross-application transmission interface" according to an embodiment of this application.

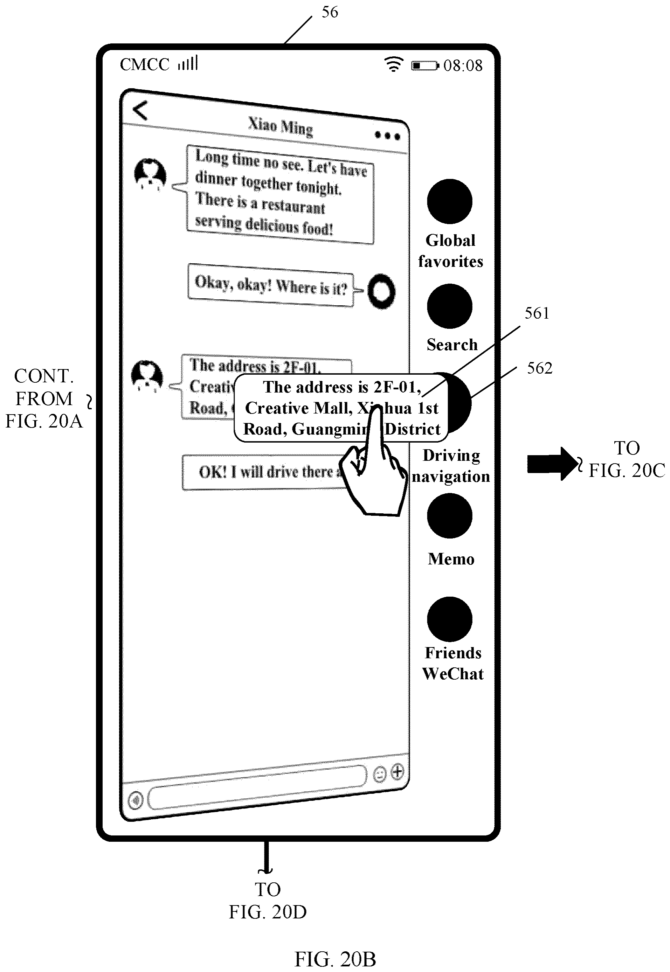

As shown in FIG. 20A, the user interface 55 is a chat interface of the application "WeChat^{®}". The user may perform a touch and hold operation on the text 551, pull up the text 551 that includes location information, and drag the text 551 to a side edge of the screen of the electronic device. The electronic device 1900 may display a user interface 56 shown in FIG. 20B in response to the operation.

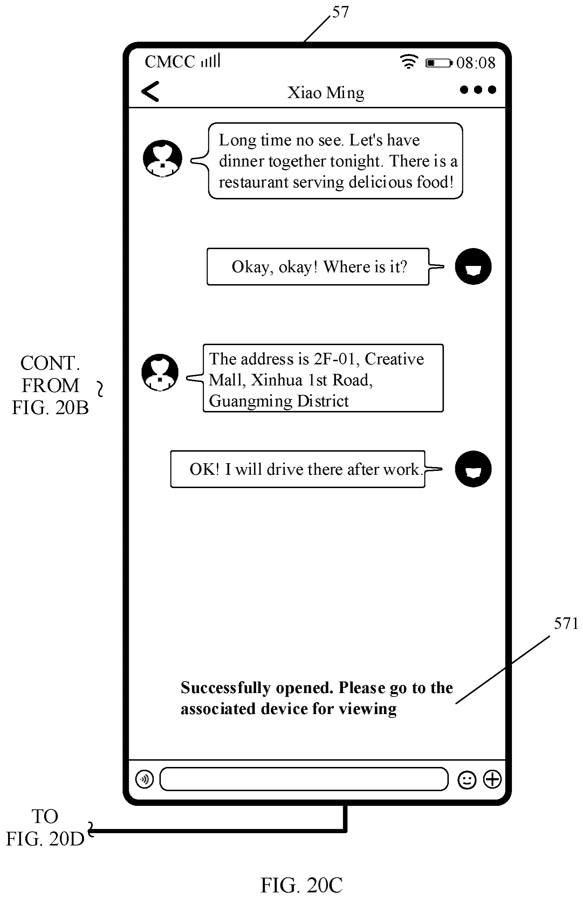

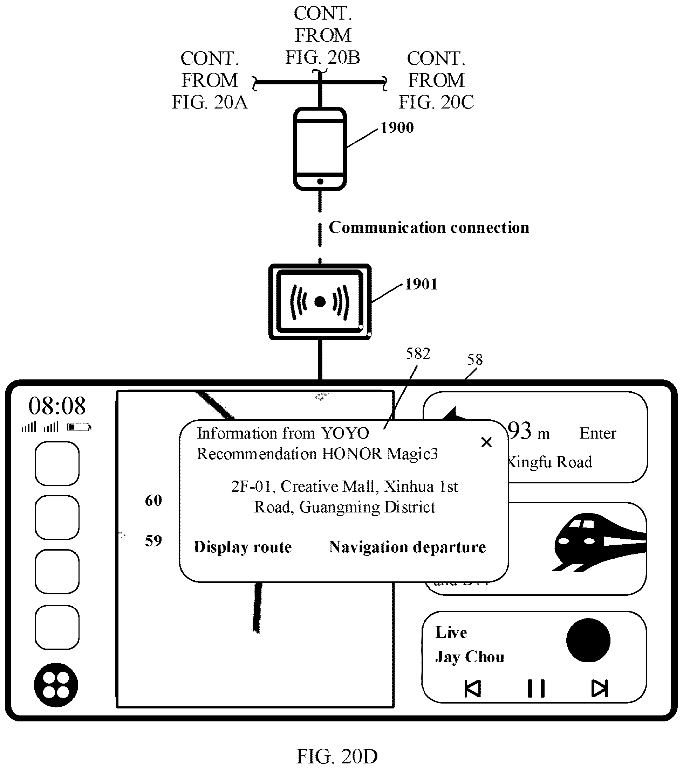

As shown in FIG. 20B, for a specific function of an element included in the user interface 56, refer to the foregoing related description of the user interface 52 in FIG. 19A to FIG. 19D, where a text 561 corresponds to the foregoing text 521, and an icon 562 of "driving navigation" corresponds to the foregoing icon 522 of "map navigation". "Driving navigation" is an in-vehicle infotainment navigation service provided by the electronic device 1900. After the electronic device 1900 establishes a communication connection to another in-vehicle terminal such as an in-vehicle terminal 1901, the user may control the in-vehicle terminal to perform navigation by using the "driving navigation" service provided by the electronic device 1900. As shown in FIG. 20B, the user places the text 561 onto the icon 562 of "driving navigation" and then releases the finger. In response to the user operation, the electronic device 1900 may display a user interface 57 shown in FIG. 20C, and transmit the text 561 to the in-vehicle terminal 1901, so that the in-vehicle terminal 1901 displays a user interface 58 shown in FIG. 20D.

As shown in FIG. 20C, a snack bar 571 may be displayed below the user interface 57. Specifically, the snack bar 571 may be used to display prompt information "Successfully opened. Please go to the associated device for viewing", so as to prompt the user that the electronic device 1900 has successfully sent the text 561 that includes the location information to the in-vehicle terminal 1901, and the in-vehicle terminal 1901 has opened a navigation application based on the received text 561, and navigated the foregoing location information.

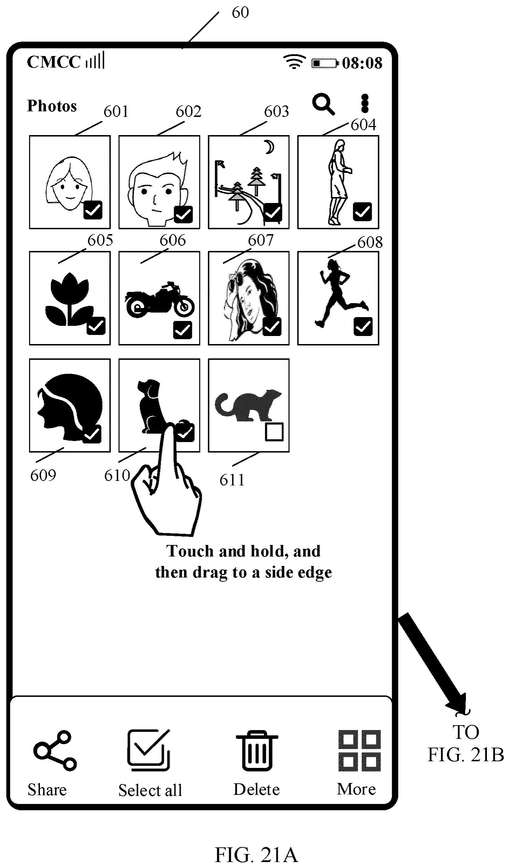

As shown in FIG. 20D, the user interface 58 is a user interface displayed after the in-vehicle terminal 1901 receives the text that is transmitted from the electronic device 1900 based on the "cross-application transmission interface". Specifically, the user interface 58 may be an application interface of a navigation application (for example, "Amap^{®}") installed in the in-vehicle terminal 1901. The user interface 58 may further display an information bar 582. The information bar 582 may be used to remind the user of a source device of the location information, and prompt the user to determine whether to navigate to the location corresponding to the location information.
⑤ Information transmission across devices is not successful. Toast feedback is displayed in the original interface to prompt the user. Refer to FIG. 21A to FIG. 21C.

It should be understood that, for the electronic device provided in this application, information transmission across applications by using the "cross-application transmission interface" cannot be successfully performed every time. For example, when a size of the information element exceeds an upper limit specified by the target application service, or a format of the information element does not comply with stipulation of the target application service, the information element cannot be transmitted to the target application service by using the "cross-application transmission interface". In this case, the electronic device may display the toast feedback in the interface, so as to prompt the user that the information cannot be successfully transmitted.

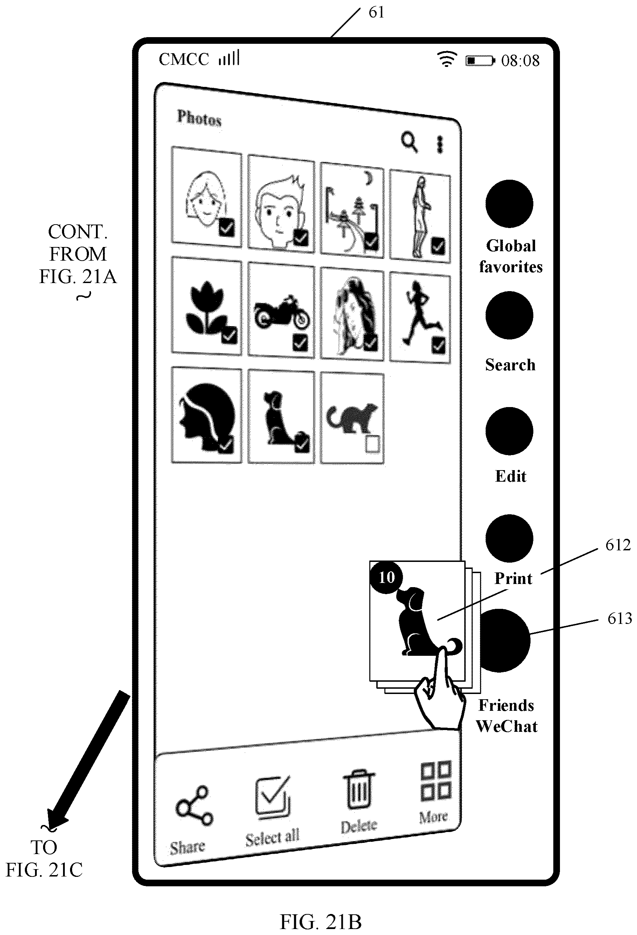

As shown in FIG. 21A, the user interface 60 is an application interface of the application "album", and displays 11 images in total, namely, an image 601-an image 611. The 10 images of the image 601-the image 610 are images that have been selected by the user. The user may perform an operation of pressing and holding and then dragging any image (for example, the image 610 shown in FIG. 21A) in the 10 images to a side edge, so that the electronic device displays a user interface 61 shown in FIG. 21B.

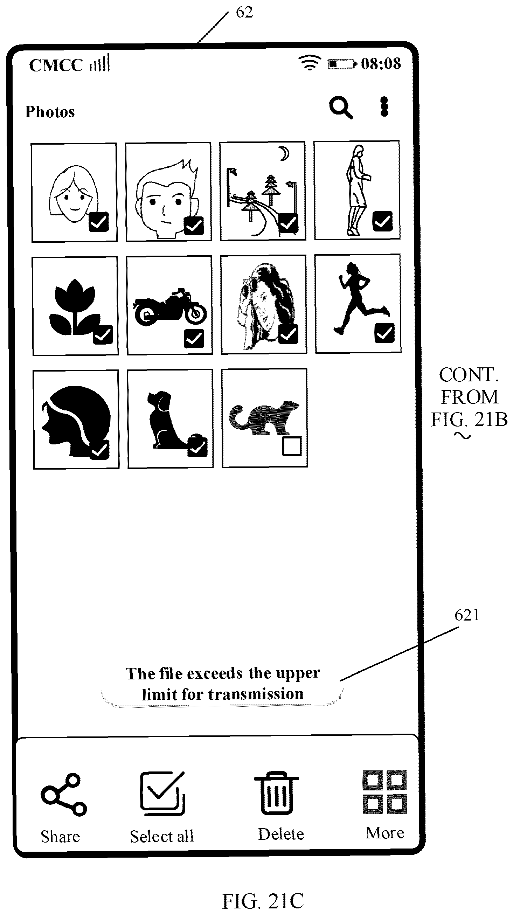

As shown in FIG. 21B, the user interface 61 is the cross-application transmission interface. In the user interface 61, an image thumbnail set 612 is a thumbnail set formed after the user drags and pulls up the image 601 to the image 610 in the user interface 60, and a number "10" displayed in a badge in an upper left corner of the image thumbnail set indicates that the user selects 10 images in total. If transmission succeeds, the electronic device may display a contacts interface of the application "WeChat^{®}", so that the user shares all the images included in the image thumbnail set 612 with a WeChat friend. However, because WeChat sets a limitation on a quantity of images to be sent by the user each time (it is assumed herein that a maximum quantity does not exceed 9), and the image thumbnail set 612 includes 10 images in total, which exceed a quantity limit specified by WeChat, the process of transmitting the image 601-the image 610 by using the "cross-application transmission interface" cannot be successfully performed. Therefore, after the user may press and hold, and drag the image thumbnail set 612 onto an application service icon of "Friends WeChat", and then release the finger, the electronic device may display a user interface 62 shown in FIG. 21C in response to the operation.

As shown in FIG. 21C, toast feedback 621 may be displayed below the user interface 62. Specifically, the toast feedback 621 may display prompt information "The file exceeds the upper limit for transmission", and be used to prompt the user that a quantity of files to be transmitted exceeds a limit of the target application service, and consequently the transmission process fails. Unlike the snack bar 421 mentioned in the foregoing description, the toast feedback 621 generally does not display a control for interface jump.

In addition, if the user does not perform any operation on the toast feedback 621, the toast feedback 621 may disappear automatically after being displayed for a period of time (for example, 2s-3s). Alternatively, when the toast feedback 621 is still displayed in the user interface 62, the user may tap a position other than a position at which the toast feedback 621 is located in the user interface 62, so as to make the toast feedback 621 disappear.

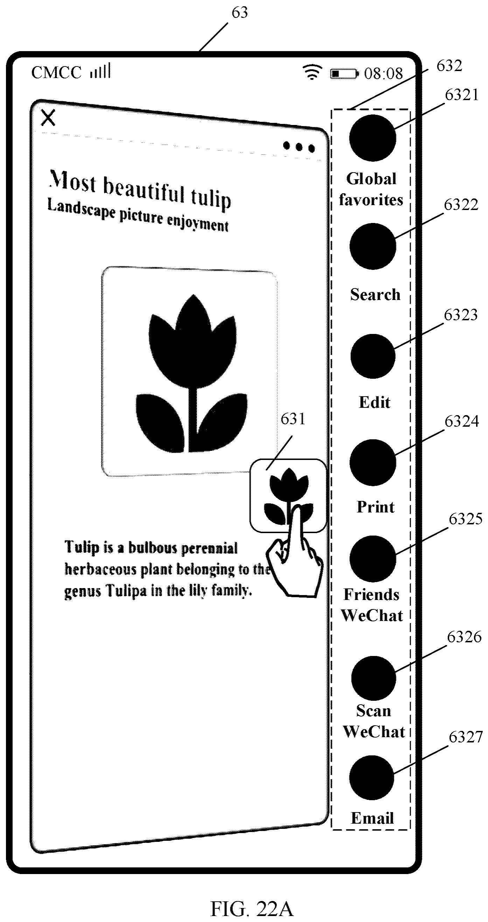

In addition, when the user transmits the information by using the "cross-application transmission interface", the electronic device may recommend, for the user based on the information, a plurality of application services that can receive the information, and display icons of these application services on the right side of the cross-application transmission interface. Specifically, a maximum quantity of these application service icons may be 20. Optionally, when the quantity of these application service icons exceeds a specific threshold (for example, 7), to ensure tidiness and observability of an interface, during display, the electronic device may simultaneously display only some (for example, seven) of these application service icons in the cross-application transmission interface. When none of the icons currently displayed in the cross-application transmission interface is an application service expected by the user, the user may further place the pulled element in blank space above or below the icon region of the "cross-application transmission interface", so that the electronic device updates the icons in the icon region. For details, refer to FIG. 22A to FIG. 22E.

As shown in FIG. 22A, a user interface 63 is a cross-application transmission interface in which the user transmits the image 631 across applications. The icon region 632 in the user interface 63 displays a total of seven icons: an icon 6321 of "global favorites", an icon 6322 of "search", an icon 6323 of "edit", an icon 6324 of "print", an icon 6325 of "Friends WeChat", an icon 6326 of "scan", and an icon 6327 of "email".

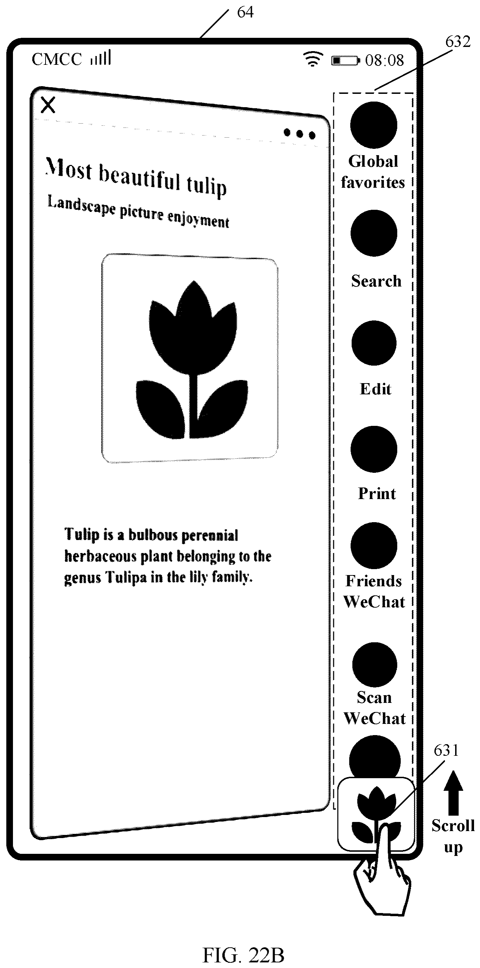

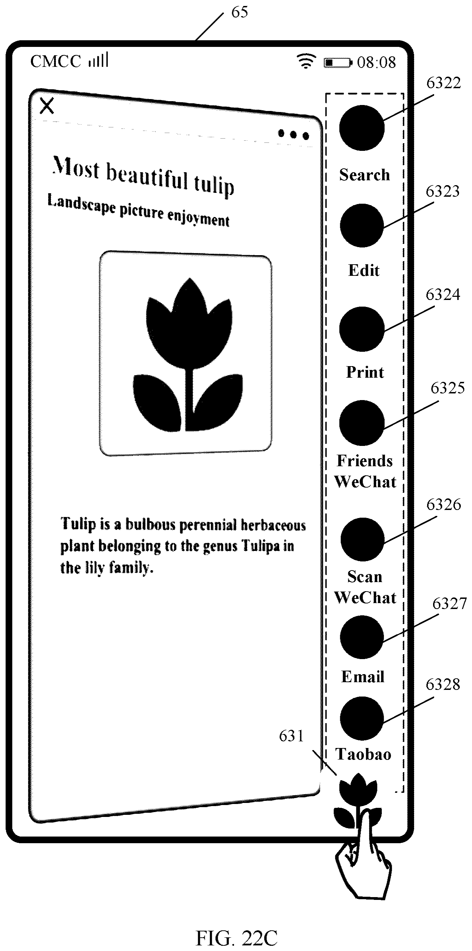

In this case, it is assumed that none of the application services corresponding to the icons displayed in the user interface 63 is the target application service of the user. In this case, in the user interface 64 shown in FIG. 22B, the user may drag the image 631 to the bottom of the icon region 6321, and in response to the user operation, the electronic device may update (scroll up to update) the icons in the icon region 632, and display a user interface 65 shown in FIG. 22C.

As shown in FIG. 22C, in the user interface 65, the icon region 632 also displays seven icons: an icon 6322 of "search", an icon 6323 of "edit", an icon 6324 of "print", an icon 6325 of "Friends WeChat", an icon 6326 of "scan", an icon 6327 of "email", and an icon 6328 of "Taobao". With reference to the user interface 63 shown in FIG. 22A, it can be seen that the icon 6321 of "global favorites" that is originally displayed on top of the icon region 632 is no longer displayed in the user interface 65 due to update. In addition, in comparison with the user interface 63, in the user interface 65, the original icon 6322 of "search", the original icon 6323 of "edit", the original icon 6324 of "print", the original icon 6325 of "Friends WeChat", the original icon 6326 of "scan", and the original icon 6327 of "email" each move one position upward, and a bottommost position in the user interface 65 is a newly displayed icon, that is, the icon 6328 of "Taobao".

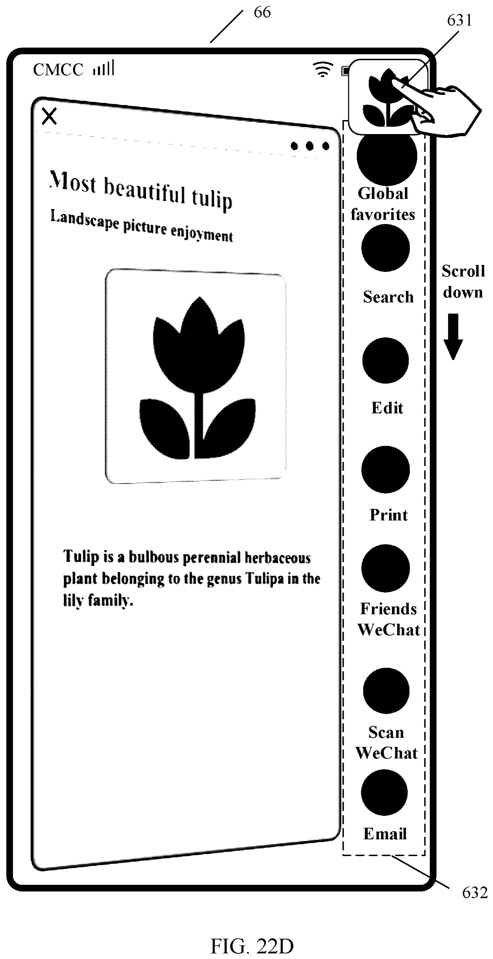

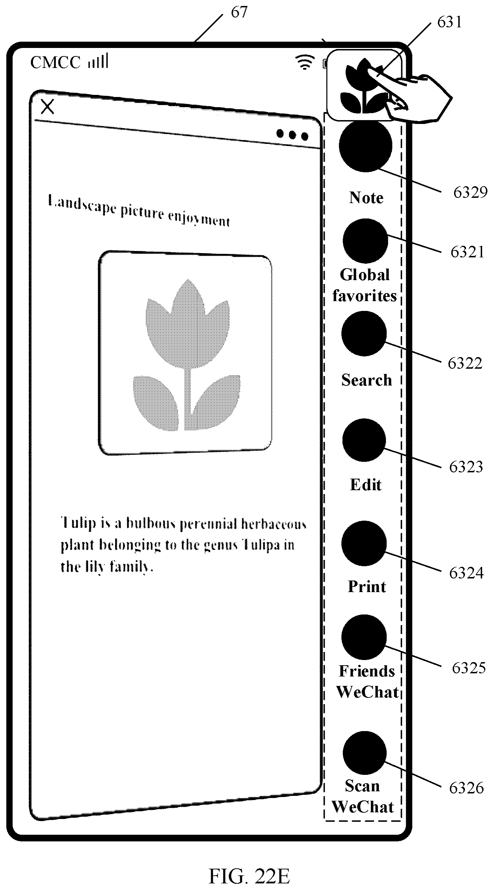

Similarly, in the user interface 66 shown in FIG. 22D, the user may alternatively drag the image 631 to the top of the icon region 6321, and in response to the user operation, the electronic device may update (scroll down to update) the icons in the icon region 632, and display a user interface 67 shown in FIG. 22E.

As shown in FIG. 22E, in the user interface 67, the icon region 632 also displays seven icons: an icon of "print", an icon 6321 of "global favorites", an icon 6322 of "search", an icon 6323 of "edit", an icon 6324 of "print", an icon 6325 of "Friends WeChat", and an icon 6326 of "scan". With reference to the user interface 63 shown in FIG. 22A, it can be seen that the icon 6327 of "email" that is originally displayed at the bottom of the icon region 632 is no longer displayed in the user interface 65 due to update. In addition, in comparison with the user interface 63, in the user interface 65, the original icon 6321 of "global favorites", the original icon 6322 of "search", the original icon 6323 of "edit", the original icon 6324 of "print", the original icon 6325 of "Friends WeChat", and the original icon 6326 of "scan" each move one position downward, and a topmost position in the user interface 65 is a newly displayed icon, that is, the icon 6329 of "note".

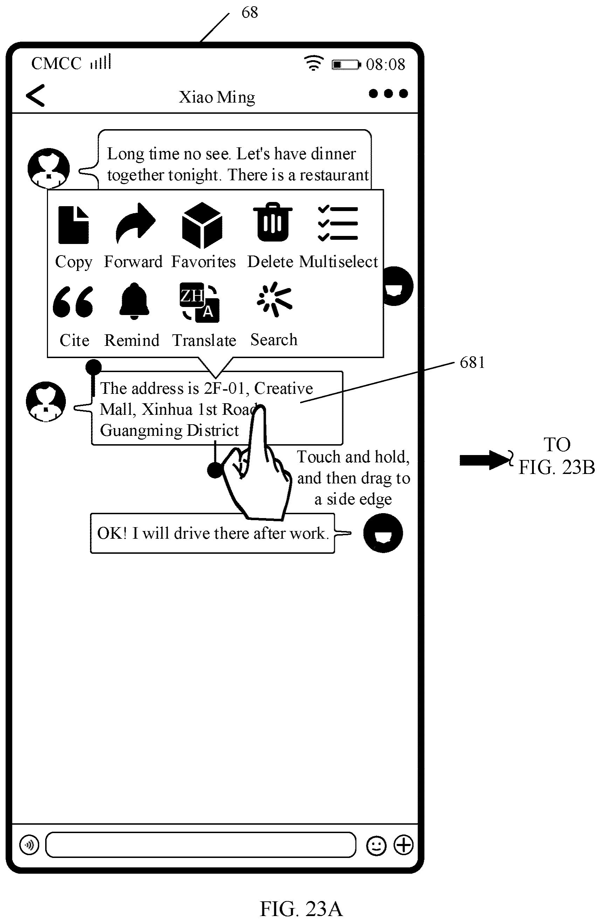

In addition, in some embodiments, the electronic device may further divide an icon region into two parts. One part of the region is used to display a fixed icon, and the other part of the region is used to display an icon recommended by the electronic device for personality of the user. Specifically, for such an icon recommended by the electronic device for the personality of the user, the electronic device may first recognize the pulled information element, and obtain, based on a recognition result, an application service icon that is provided in the cross-application transmission interface and that meets a user requirement. In other words, when the user pulls up two elements successively, even if the two elements are elements of a same type (for example, the two elements are both texts or images), when content included in the two elements is different (for example, image content is different or characters in the text are different), icons in the icon regions in both of two user interfaces of the "cross-application transmission interface" that are displayed by the electronic device based on the two elements may also be different. It should be understood that "different" mentioned herein may include different icon types and different icon sequences. In this embodiment of this application, the electronic device may display, at a higher position in the icon region, an icon that is more consistent with a current requirement of the user. For details, refer to FIG. 23A-FIG. 26B.

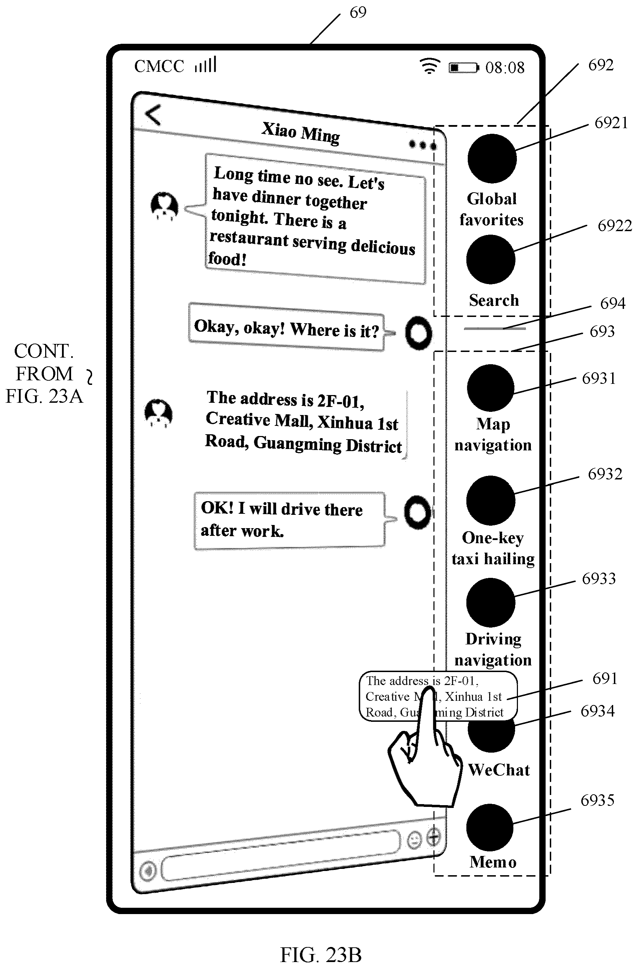

FIG. 23A and FIG. 23B are schematic diagrams of a cross-application transmission interface that is displayed by an electronic device for a user based on location information included in a text according to an embodiment of this application.

As shown in FIG. 23A, the user interface 68 is a chat interface of the application "WeChat^{®}". The user may perform a touch and hold operation on the text 681, and pull up the text 681 that includes location information. After the user pulls up the text 681, the electronic device may recognize the text information in response to the operation. After the electronic device recognizes that the text 681 includes the location information, the electronic device determines, based on the location information, that the user currently has an intention to set off for the location. In this case, the electronic device recommends a corresponding application service for the user based on the user intention, displays, in a subsequent "cross-application transmission interface" interface, an icon of an application service recommended by the electronic device for the user in the icon region, and places, at a higher position in the icon region based on sorting of application services, an icon corresponding to an application service that is more consistent with a current intention of the user. As shown in FIG. 23A, after the user pulls up the text 681 and drags it to a side edge of the electronic screen, the electronic device may display a user interface 69 shown in FIG. 23B in response to the operation.

As shown in FIG. 23B, the user interface 69 is the cross-application transmission interface. In the user interface 69, a text 691 is a text obtained after the text 681 is shrunk, an icon region on the right side may be divided into a fixed icon region 692 and a recommended icon region 693, and the two regions may be distinguished by using a separation line 694.

The fixed icon region 692 may include an icon 6921 of "global favorites" and an icon 6922 of "search". It may be understood that, regardless of a specific element shared by the user based on the electronic device, the cross-application transmission interface displayed by the electronic device based on the element displays the fixed icon region 692, and icons included in the fixed icon region 692 are the icon 6921 of "global favorites" and the icon 6922 of "search".

The recommended icon region 693 may include an icon 6931 of "map navigation", an icon 6932 of "one-key taxi hailing", an icon 6933 of "driving navigation", an icon 6934 of "WeChat", and an icon 6935 of "memo". The icon 6931 of "map navigation" may be used to open map software in the electronic device to navigate a location and enter an application interface of the navigation. The icon 6932 of "one-key taxi hailing" may be used to enter an application interface of a taxi hailing service based on a taxi hailing service provided by the map software. The icon 6933 of "driving navigation" is mainly used to transmit the foregoing location information across devices to an in-vehicle terminal that is communicatively connected to the electronic device. For details, refer to the foregoing related descriptions of FIG. 20A to FIG. 20D. It may be understood that because the text information 681 includes location information, the electronic device may determine, based on the location information, that the user currently has an intention to set off for the location. Therefore, in the recommended icon region 693, the icon 6931 of "map navigation", the icon 6932 of "one-key taxi hailing", and the icon 6933 of "driving navigation" are displayed at an upper position in the recommended icon region 693 because these icons are most consistent with the current intention of the user, so that the user makes a selection.

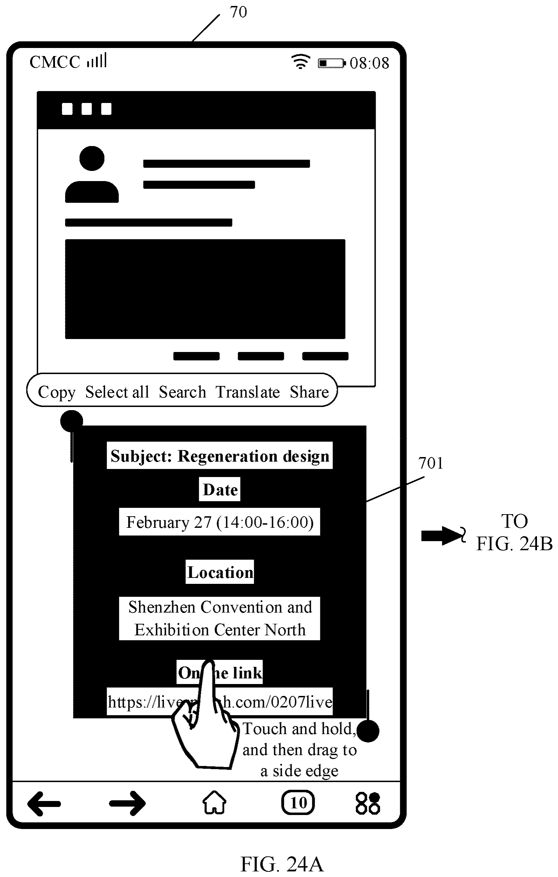

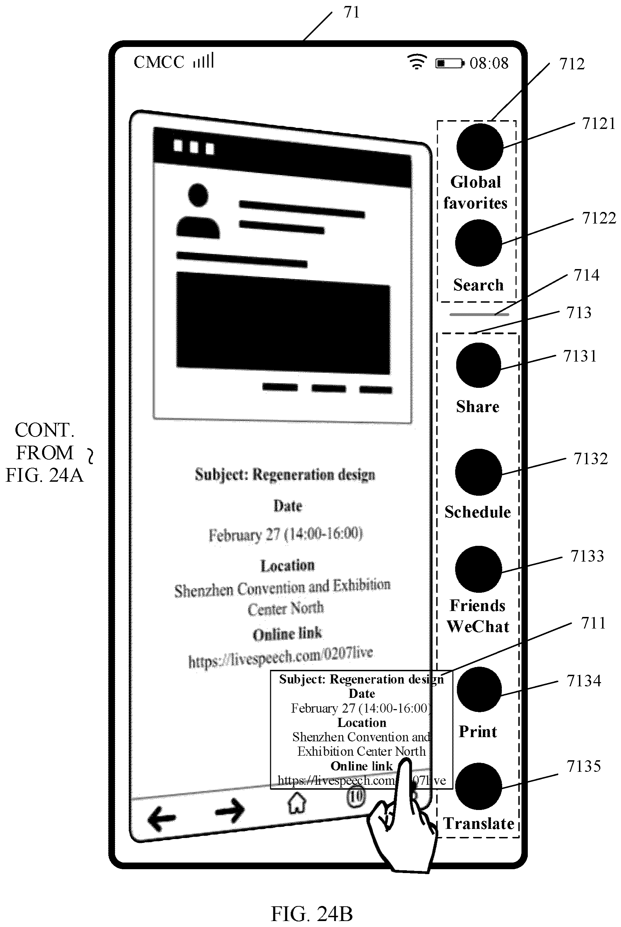

FIG. 24A and FIG. 24B are schematic diagrams of a cross-application transmission interface that is displayed by an electronic device for a user based on information such as a time and a location included in a text according to an embodiment of this application.

As shown in FIG. 24A, a user interface 70 is an application interface of the application "browser". The user may perform a touch and hold operation on the text 701, and pull up the text 701 that includes location information. After the user pulls up the text 701, the electronic device may recognize the text information in response to the operation. After the electronic device recognizes that the text 701 includes the time and location information, the electronic device determines, based on the time and location information, that the text information may include specific schedule information. In this case, the electronic device recommends a corresponding application service for the user based on the user intention, displays, in a subsequent "cross-application transmission interface" interface, an icon of an application service recommended by the electronic device for the user in the icon region, and places, at a higher position in the icon region based on sorting of application services, an icon corresponding to an application service that is more consistent with a current intention of the user.

As shown in FIG. 24A, after the user pulls up the text 701 and drags it to a side edge of the electronic screen, the electronic device may display a user interface 71 shown in FIG. 24B in response to the operation.

As shown in FIG. 24B, the user interface 71 is the cross-application transmission interface. In the user interface 71, a text 711 is a text obtained after the text 711 is shrunk, an icon region on the right side may be divided into a fixed icon region 712 and a recommended icon region 713, and the two regions may be distinguished by using a separation line 714.

The fixed icon region 712 may include an icon 7121 of "global favorites" and an icon 7122 of "search". It may be understood that, regardless of a specific element shared by the user based on the electronic device, the cross-application transmission interface displayed by the electronic device based on the element displays the fixed icon region 712, and icons included in the fixed icon region 712 are the icon 7121 of "global favorites" and the icon 7122 of "search".

The recommended icon region 713 may include an icon 7131 of "share", an icon 7132 of "schedule", an icon 7133 of "Friends WeChat", an icon 7134 of "print", and an icon 7135 of "translate". The icon 7131 of "share" may be used to share a text 701 with another device through Bluetooth, email, or the like based on a sharing service provided by the electronic device. The icon 7132 of "schedule" is mainly used to add the time and location information in the text 701 to the schedule. The icon 7133 of "Friends WeChat" may be used to send the text 701 to a WeChat friend by using a chat interface of WeChat. It may be understood that because the text 701 includes time and location information, the electronic device may determine, based on the time and location information, that the text information may include specific schedule information, and the user currently has an intention to share the schedule or add the schedule. Therefore, in the recommended icon region 713, the icon 7131 of "share", the icon 7132 of "schedule", and the icon 7133 of "Friends WeChat" are displayed at an upper position in the recommended icon region 713 because these icons are most consistent with the current intention of the user, so that the user makes a selection.

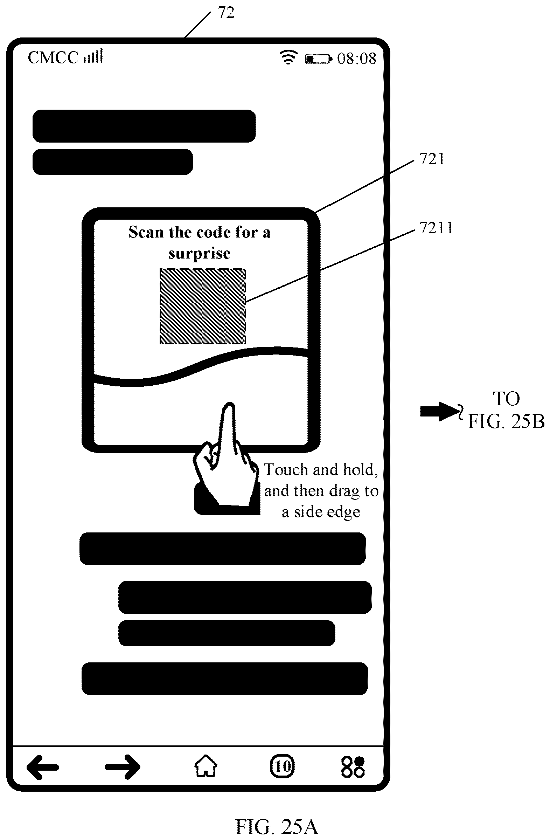

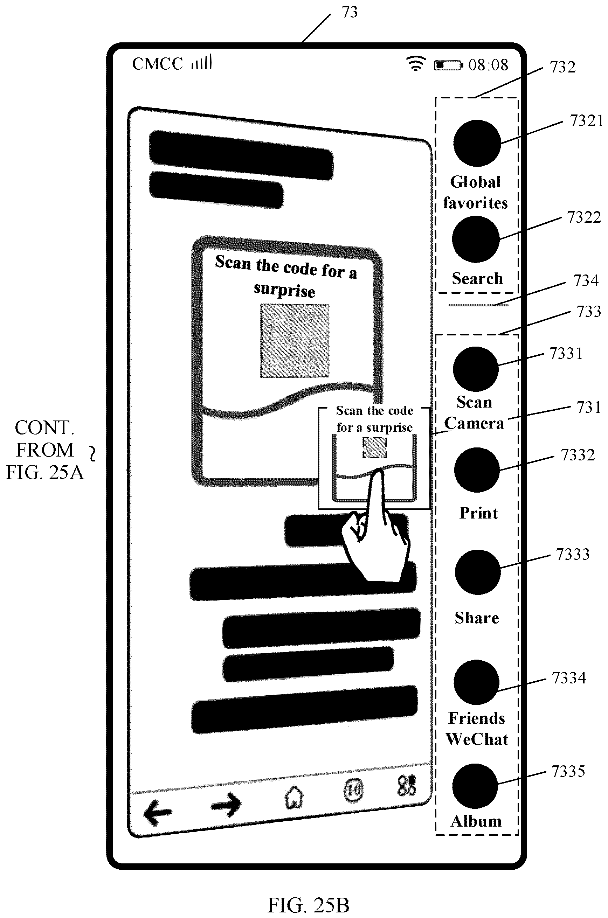

FIG. 25A and FIG. 25B are schematic diagrams of a cross-application transmission interface that is displayed by an electronic device for a user based on a QR code image included in an image according to an embodiment of this application.

As shown in FIG. 25A, a user interface 72 is an application interface of the application "browser". The user may perform a touch and hold operation on the image 721 and pull up the image 721 that includes the QR code image 7211 (the QR code image 7211 shown in FIG. 25A and FIG. 25B is merely for ease of understanding, and may be presented in another form in an actual application scenario, which is not limited in this application). After the user pulls up the image 721, the electronic device may recognize the image 721 in response to the operation. After the electronic device recognizes that the image 721 includes the QR code image, the electronic device determines, based on the QR code image, that the user may need to scan the QR code in the image 721 in this case. In this case, the electronic device recommends a corresponding application service for the user based on the user intention, displays, in a subsequent "cross-application transmission interface" interface, an icon of an application service recommended by the electronic device for the user in the icon region, and places, at a higher position in the icon region based on sorting of application services, an icon corresponding to an application service that is more consistent with a current intention of the user.

As shown in FIG. 25A, after the user pulls up the image 721 and drags it to a side edge of the electronic screen, the electronic device may display a user interface 73 shown in FIG. 25B in response to the operation.

As shown in FIG. 25B, the user interface 73 is the cross-application transmission interface. In the user interface 73, an image 731 is an image obtained after the image 721 is shrunk, an icon region on the right side may be divided into a fixed icon region 732 and a recommended icon region 733, and the two regions may be distinguished by using a separation line 734.

For a specific function of the fixed icon region 732, refer to the foregoing related description of the fixed icon region 712. Details are not described herein again.

The recommended icon region 733 may include an icon 7331 of "scan camera", an icon 7332 of "print", an icon 7333 of "share", an icon 7334 of "Friends WeChat", and an icon 7335 of "album". The icon 7331 of "scan camera" may be used to scan an image 731 based on a "scan" service provided by the application "camera". The icon 7332 of "print" is mainly used to send the image 731 to a printing device for printing. The icon 7333 of "share" may be used to share the image 731 with another device through Bluetooth, email, or the like based on the sharing service provided by the electronic device. It may be understood that because the image 721 includes a QR code, the electronic device may determine, based on a QR code image, that the user may need to scan the image, or the user wants to print or share the image. Therefore, in the recommended icon region 733, the icon 7331 of "scan camera", the icon 7332 of "print", and the icon 7333 of "share" are displayed at an upper position in the recommended icon region 733 because these icons are most consistent with the current intention of the user, so that the user makes a selection.

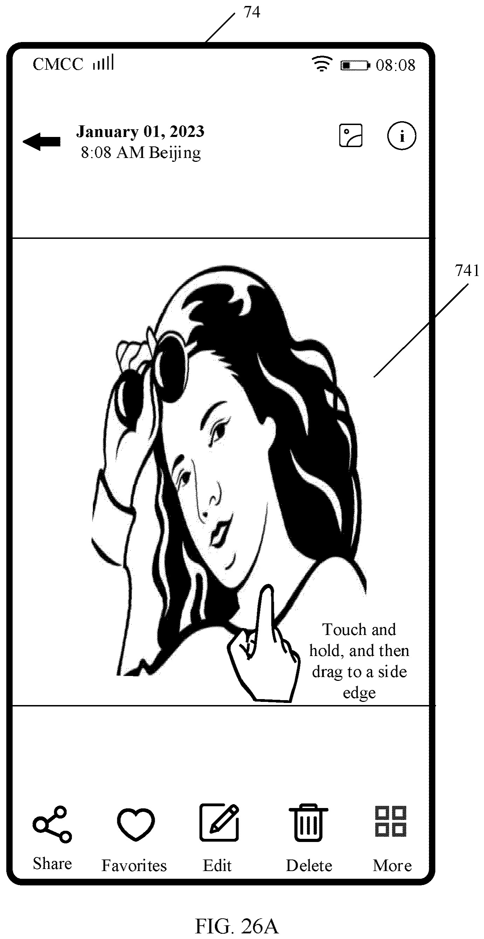

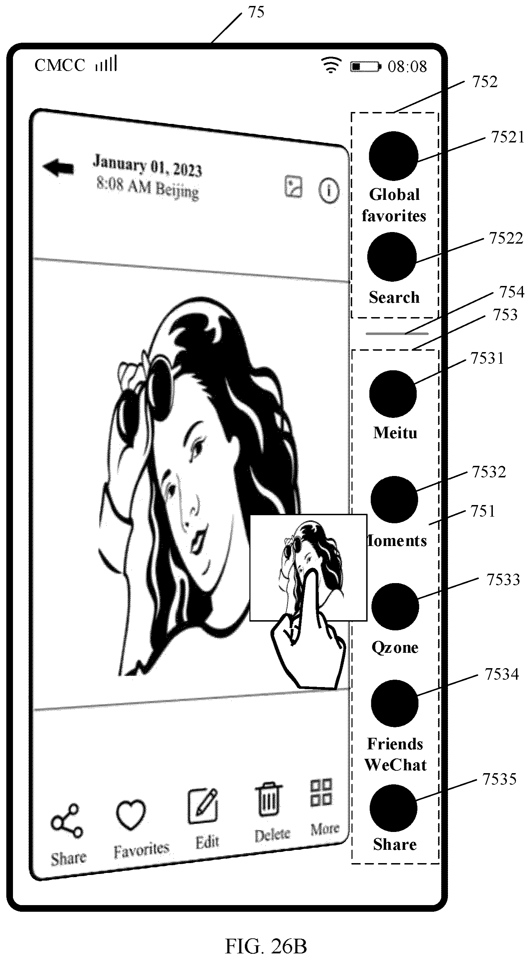

FIG. 26A and FIG. 26B are schematic diagrams of a cross-application transmission interface that is displayed by an electronic device for a user based on a human face image included in an image according to an embodiment of this application.

As shown in FIG. 26A, a user interface 74 is an interface of the application "camera". The user may perform a touch and hold operation on an image 741, and pull up the image 741 that includes the human face image. After the user pulls up the image 741, the electronic device may recognize the image 741 in response to the operation. After the electronic device recognizes that the image 741 includes the human face image, the electronic device may determine, based on the human face image, that the user may need to beautify the image 741 or share the image 741 with social software in this case. In this case, the electronic device recommends a corresponding application service for the user based on the user intention, displays, in a subsequent "cross-application transmission interface" interface, an icon of an application service recommended by the electronic device for the user in the icon region, and places, at a higher position in the icon region based on sorting of application services, an icon corresponding to an application service that is more consistent with a current intention of the user.

As shown in FIG. 26A, after the user pulls up the image 741 and drags it to a side edge of the electronic screen, the electronic device may display a user interface 75 shown in FIG. 26B in response to the operation.

As shown in FIG. 26B, the user interface 75 is the cross-application transmission interface. In the user interface 75, an image 751 is an image obtained after the image 751 is shrunk, an icon region on the right side may be divided into a fixed icon region 752 and a recommended icon region 753, and the two regions may be distinguished by using a separation line 754.

For a specific function of the fixed icon region 752, refer to the foregoing related description of the fixed icon region 712. Details are not described herein again.

The recommended icon region 753 may include an icon 7531 of "Meitu", an icon 7532 of "Moments", an icon 7533 of "Qzone", an icon 7534 of "Friends WeChat", and an icon 7535 of "share". The icon 7531 of "Meitu" may be used to beautify the image 751. The icon 7532 of "Moments" is mainly used to share the image 751 with WeChat Moments. The icon 7533 of "QQ" may be used to share the image 751 with Qzone. It may be understood that because the image 751 includes a QR code, the electronic device may determine, based on the human face image, that the user may need to beautify the image 741 or share the image 741 with social software. Therefore, in the recommended icon region 753, the icon 7531 of "Meitu", the icon 7532 of "Moments", and the icon 7533 of "Qzone" are displayed at an upper position in the recommended icon region 753 because these icons are most consistent with the current intention of the user, so that the user makes a selection.

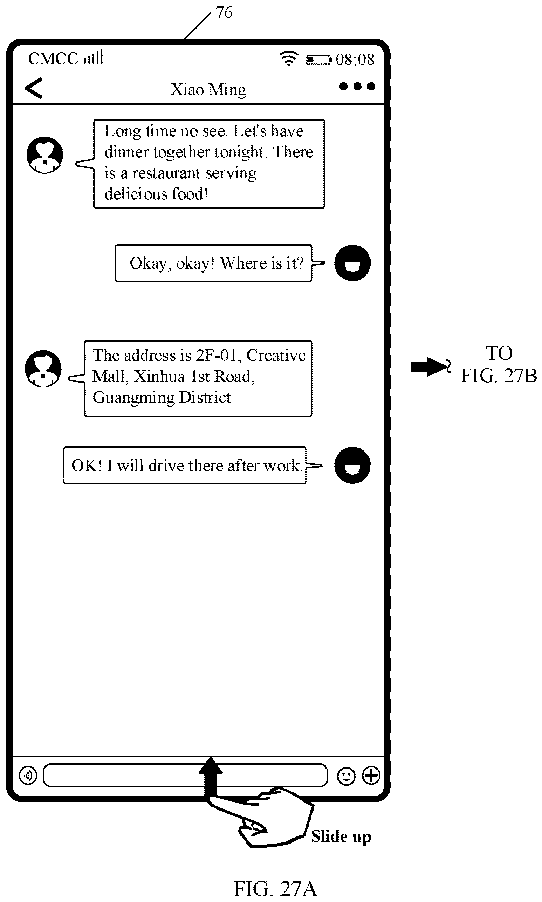

In some embodiments, in addition to being used to display an icon of an application service, an icon region in the cross-application transmission interface may be further used to display a thumbnail of an application interface of an application that runs in a background of the electronic device. After the user places the pulled information element onto the thumbnail and releases the finger, the information element is transmitted to an application interface corresponding to the thumbnail. For details, refer to FIG. 27A to FIG. 27E.

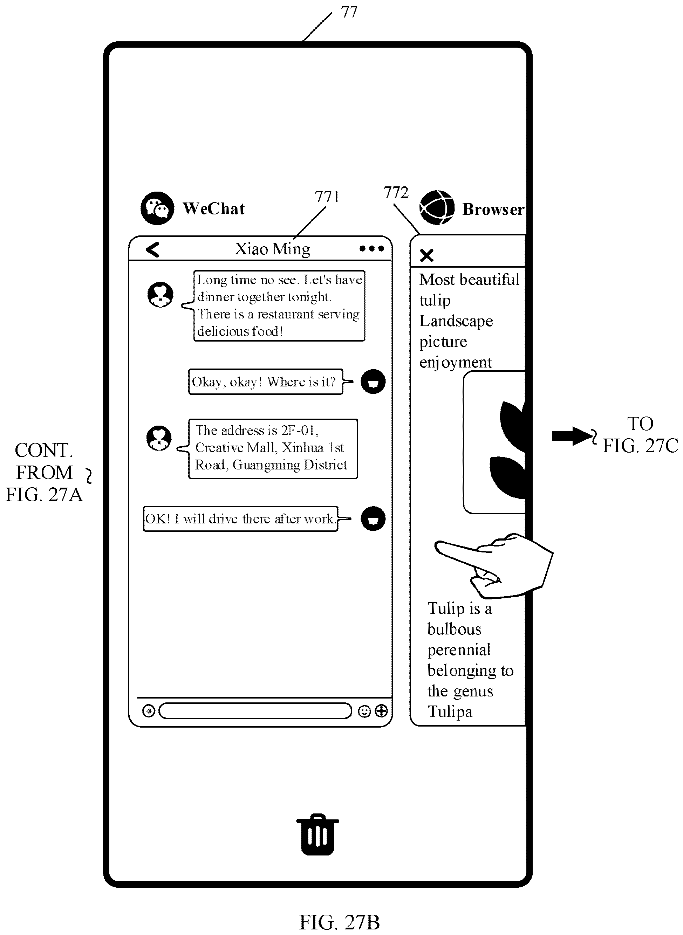

As shown in FIG. 27A, a user interface 76 is a chat interface of a friend (Xiao Ming) in the application "WeChat^{®}". The user slides up at a lower boundary of the screen of the electronic device. The electronic device may display a user interface 77 shown in FIG. 27B in response to the operation.

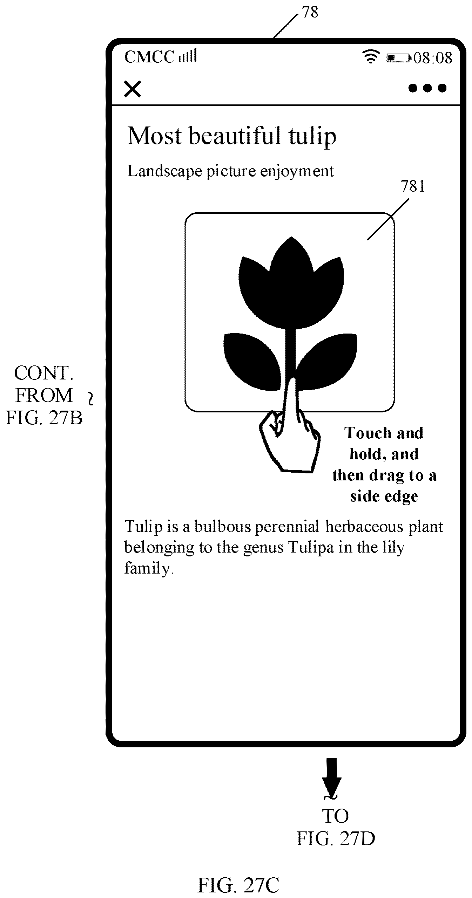

As shown in FIG. 27B, the user interface 77 is an application navigation interface, and the interface may display application interface thumbnails of all applications that are currently opened by the electronic device. An application interface thumbnail 771 is a thumbnail of the chat interface of the friend (Xiao Ming) in the application "WeChat^{®}", and an application interface thumbnail 772 is a thumbnail of a web page browsing interface in the application "browser". Herein, an application corresponding to an application interface displayed by the electronic device is referred to as a foreground application, and an opened application whose application interface is not displayed on the electronic screen is referred to as a background application. In this case, in the user interface 77, the user may tap any application interface thumbnail displayed in the user interface 77, to switch an application corresponding to the application interface thumbnail to a foreground application, and display the application interface thumbnail on the screen in full screen. As shown in FIG. 27B, the user may tap the application interface thumbnail 772, so that the electronic device switches the application "browser" to a foreground application. It should be understood that in this case, the application "WeChat^{®}" is not closed and is to run in the background. When the user switches the application "WeChat^{®}" to a foreground application by using the application navigation interface, the electronic device still displays the user interface 76 on the screen. In response to the user operation of switching the application "browser" to a foreground application, the electronic device may display a user interface 78 shown in FIG. 27C.

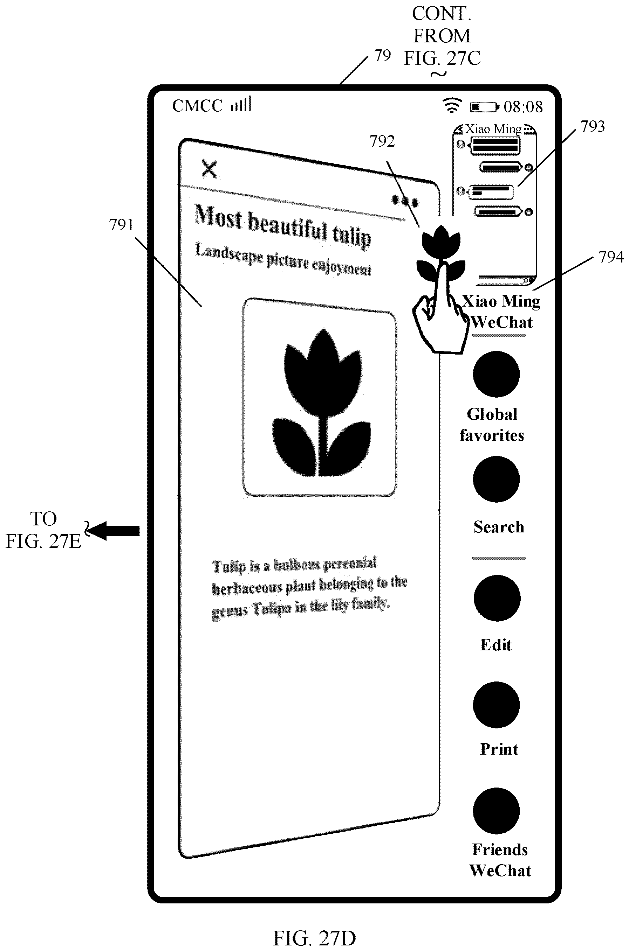

As shown in FIG. 27C, the user interface 78 may be the application interface of the application "browser" in the electronic device, and the user may press and hold, and drag an image 781 in the user interface 78, so that the electronic device displays a user interface 79 shown in FIG. 27D.

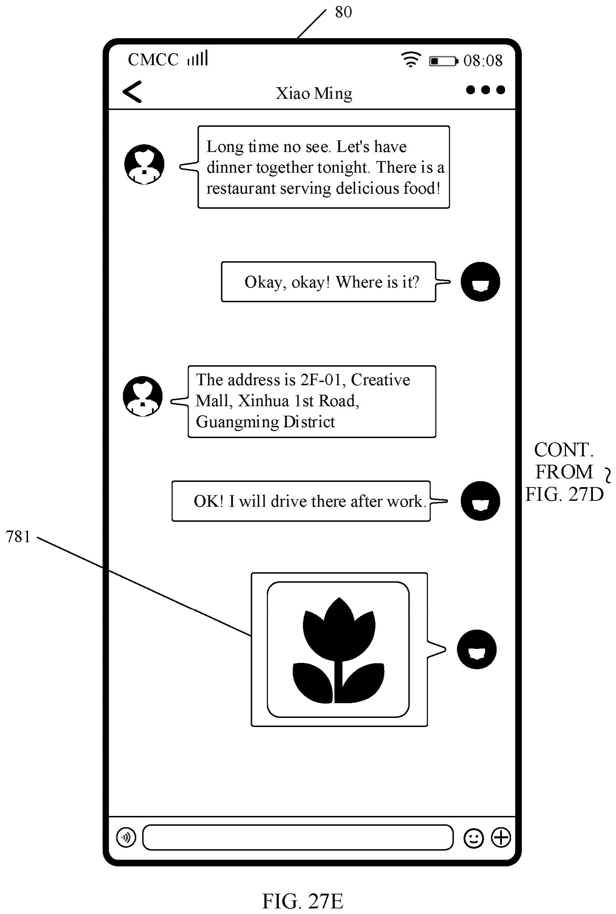

As shown in FIG. 27D, the user interface 79 may include a sub-interface 791, an image 792, an application interface thumbnail 793, and a text description 794. The image 792 is a thumbnail obtained by shrinking the image 781. The text description 794 may be used to explain to the user an application corresponding to the application interface thumbnail 793 and a corresponding contact. The application interface thumbnail 793 is a thumbnail of the foregoing user interface 76. After the user drags the image 792 onto the application interface thumbnail 793 and releases the finger, the electronic device may display a user interface 80 shown in FIG. 27E in response to the user operation.

As shown in FIG. 27E, the user interface 80 may be the chat interface of the friend (Xiao Ming) in the application "WeChat". It can be seen from the user interface 80 that in this case, the user has sent the image 781 obtained from the application "browser" to the WeChat friend "Xiao Ming". In other words, after the user drags the image 792 in the user interface 79 onto the application interface thumbnail 793 and releases the finger, the user may not need to perform another operation, and the electronic device can spontaneously send the image 792 (or the image 781) to the WeChat friend Xiao Ming.

It should be understood that FIG. 27A to FIG. 27E show only examples of the user interface provided in this embodiment of this application, and should not constitute a limitation on this embodiment of this application. For example, for applications "WPS^{®}", "QQ^{®}", and the like, a background application may alternatively be displayed in the cross-application transmission interface. This is not limited in this application.

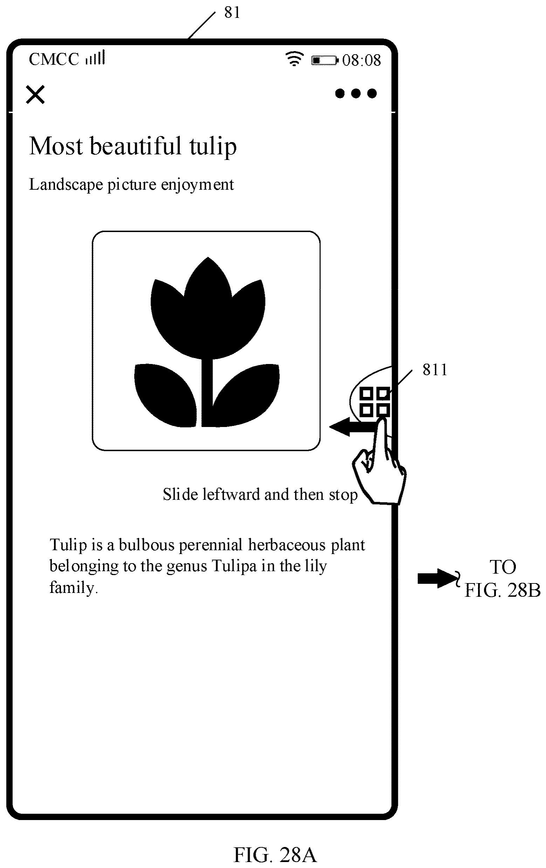

In addition, in some embodiments, after the user pulls up the information element, the electronic device may directly invoke a side application bar, and display a corresponding application service icon for the user in the side application bar. Descriptions are provided below with reference to FIG. 28A-FIG. 29B.

FIG. 28A to FIG. 28D show two different manners of invoking a side application bar of an electronic device.

First, the user may invoke the side application bar of the electronic device by performing a conventional operation of sliding inward on a side edge of a screen.

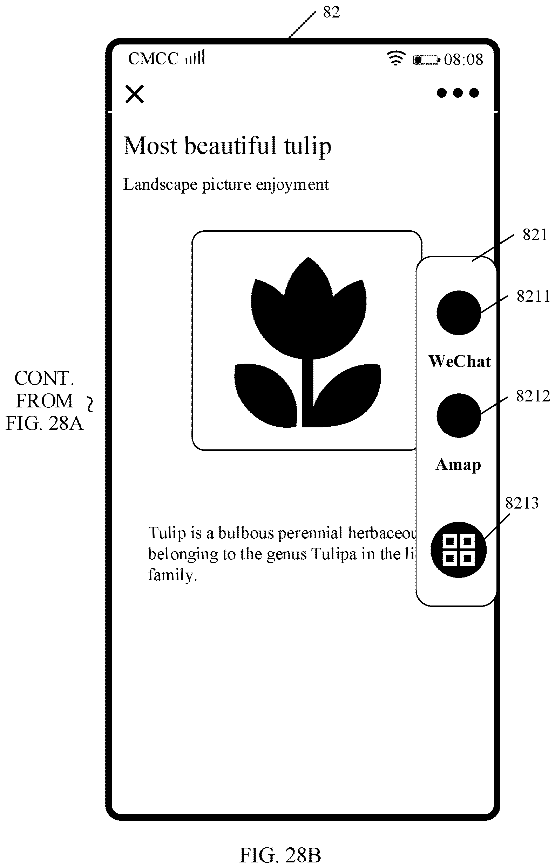

As shown in FIG. 28A, a user interface 81 may be an application interface of an application "browser" in the electronic device, may be an application interface of an application "microblog^{®}", or may be an application interface of another application. This is not limited in this application. The user may invoke an icon 811 of the side application bar of the electronic device by performing an operation of sliding inward to the left of the screen on the right side of the screen (in this case, the user does not release the finger). Subsequently, if the user releases the finger, the electronic device may display a user interface 82 shown in FIG. 28B in response to the operation.

As shown in FIG. 28B, the user interface 82 may display a side application bar 821. The side application bar 821 may display one or more application icons that are added by the user to the side application bar 821, for example, an icon 8211 of "WeChat^{®}" and an icon 8212 of "Amap^{®}" that are shown in FIG. 28B. This is not limited thereto. The user may further continue to add another application icon to the side application bar 821 by using an application list control 8213. Any icon may respond to a user operation, so that the electronic device opens a corresponding application. When the user opens another application in the current application interface by using the side application bar 821, the electronic device may display the two application interfaces in a split-screen manner, and the user may transmit, based on the two interfaces, an information element provided by one application to the other application (for details, refer to the foregoing related descriptions of FIG. 2A and FIG. 2B). This is a "smart multi-window function" provided by the electronic device.

Then, the user may invoke the side application bar of the electronic device by performing an operation of pressing and holding, and pulling up the information element in the interface.

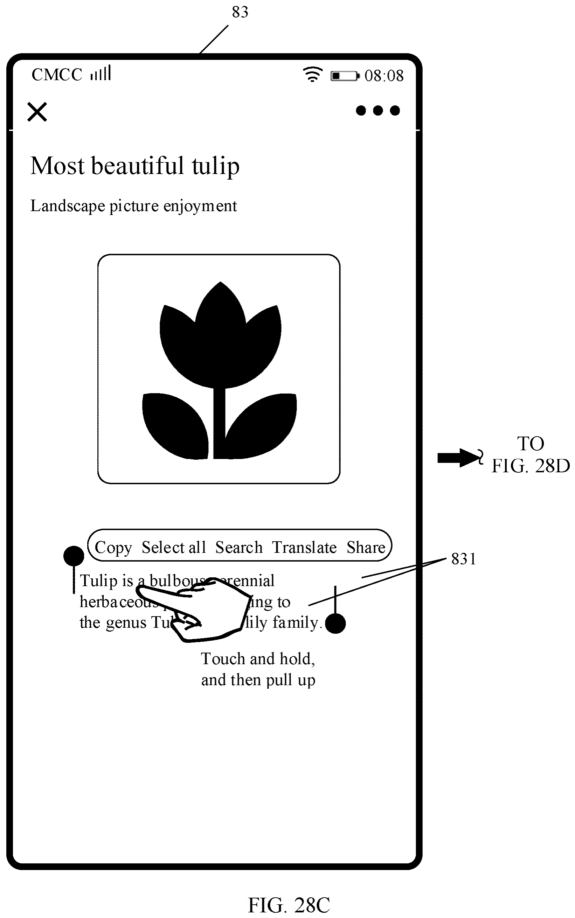

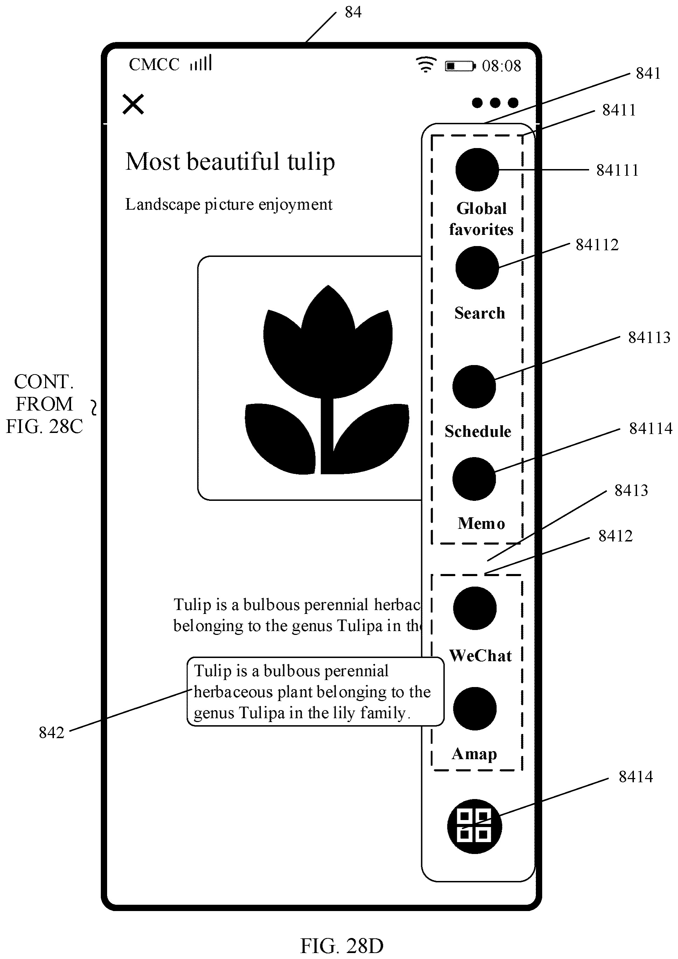

As shown in FIG. 28C, a user interface 83 may be an application interface of an application "browser" in the electronic device, may be an application interface of an application "microblog^{®}", or may be an application interface of another application. This is not limited in this application. Specifically, the user interface 83 and the user interface 81 in the foregoing description may be a same interface. The user may press and hold a text 831 already selected by the user in the user interface 83 to pull up the text 831. After the user pulls up the text 831 (which may not need to be dragged to a side edge), the electronic device may display a user interface 84 shown in FIG. 28D in response to the operation.

As shown in FIG. 28D, the user interface 84 may display a text 842 and a side application bar 821. The text 842 is a text obtained by shrinking the pulled text 831. The side application bar 841 may include an application list control 8414 and two regions, namely, a smart transfer icon region 8411 and a smart multi-window icon region 8412. The two regions may be separated by using a separation line 8413.

The smart transfer icon region 8411 may display a plurality of application service icons. It should be understood that, the icons displayed in the smart transfer icon region 8411 each may be used to transmit the element (namely, the text 842) pulled up by the user across applications, without requiring a screen splitting function provided by the electronic device. This transmission manner and a manner of transmission by using the "cross-application transmission interface" in the foregoing embodiments may be referred to as a "smart transfer" function of the electronic device in this application. Optionally, the icons displayed in the smart transfer icon region 8411 may also include a fixedly displayed icon that is set by the user and an icon recommended and displayed by the electronic device for the user based on content in the text 842. For example, of the icon 84111 of "global favorites", the icon 84112 of "search", the icon 84113 of "schedule", and the icon 84114 of "memo" shown in FIG. 28D, the icon 84111 of "global favorites" and the icon 84112 of "search" may be fixedly displayed icons, whereas the icon 84113 of "schedule" and the icon 84114 of "memo" may be icons recommended and displayed by the electronic device for the user based on the content in the text 842.

The smart multi-window icon region 8412 may display one or more application icons. This part of icons may be all or some of icons included in the side application bar 821 in the user interface 82 shown in FIG. 28B. Unlike the smart transfer icon region 8411, the icons in the smart multi-window icon region 8412 cannot be used to transmit the text 842 across applications, and are displayed only in the user interface 84. In addition, if a quantity of application service icons recommended by the electronic device for the text 842 exceeds a specific quantity, the side application bar may preferentially display an application service icon recommended by the electronic device for the text 842, and no longer display the smart multi-window icon region 8412 and an application icon included therein.

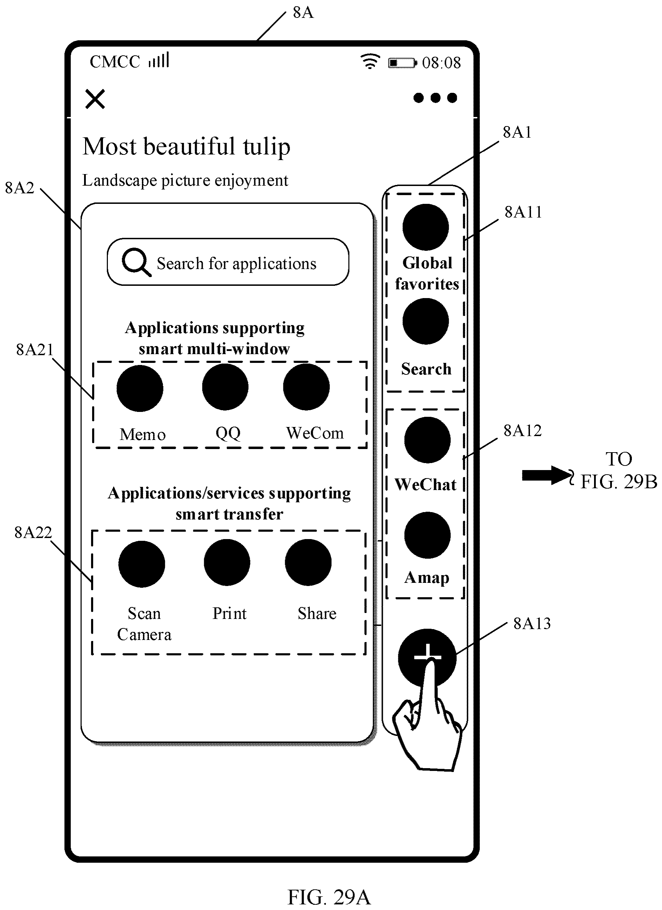

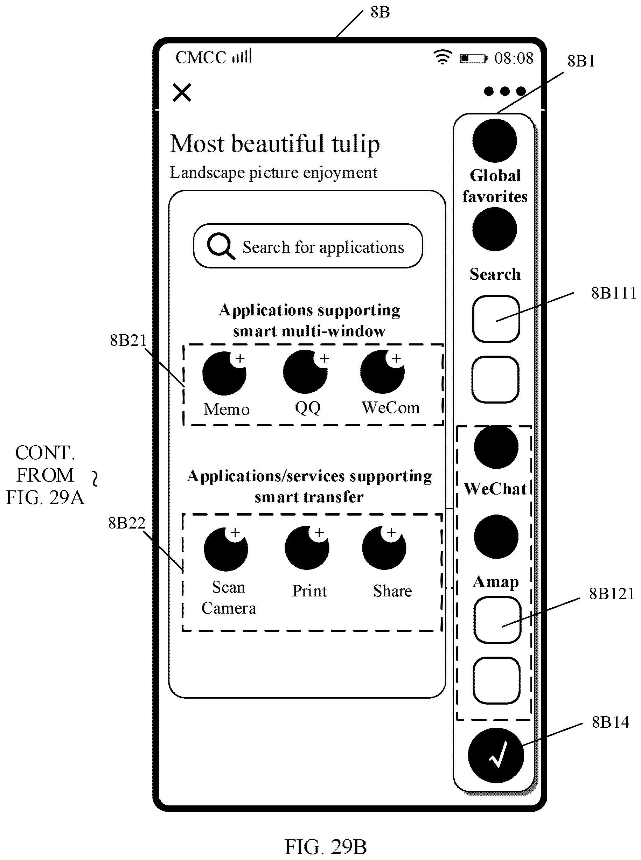

The application list control 8414 may be used to display an icon that may be added to the side application bar 841, including a fixedly displayed application service icon that may be added to the smart transfer icon region 8411 and an application icon that may be added to the smart multi-window icon region 8412. For details, refer to FIG. 29A and FIG. 29B.

FIG. 29A and FIG. 29B show a specific process of adding an icon to a side application bar by a user.

In response to a tap operation performed by the user on the application list control (for example, the application list control 8213 or the application list control 8414 in the foregoing description) in the side application bar, the electronic device may display a user interface 8A shown in FIG. 29A. The user interface 8A may include a side application bar 8A1 and an icon display interface 8A2.

The side application bar 8A1 may include a smart transfer icon region 8A11, a smart multi-window icon region 8A12, and an addition control 8A13 that is configured to add an icon to the side application bar 8A1.

The icon display interface 8A2 may display a smart multi-window icon display region 8A21 and a smart transfer icon display region 8A22. It may be understood that the icon in the smart multi-window icon display region 8A21 may be added to the smart multi-window icon region 8A12 in the side application bar 8A1. The icon in the smart transfer icon display region 8A22 may be added to the smart transfer icon region in the side application bar 8A1.

As shown in FIG. 29A, in response to a tap operation performed by the electronic device on the addition control 8A11, the electronic device may display a user interface 8B shown in FIG. 29B. As shown in the user interface 8B, a to-be-added symbol is displayed in the upper right corner of each icon displayed in the icon display interface 8B2, and a blank position is displayed in each of the smart transfer icon region 8B11 and the smart multi-window icon region 8B12 in the side application bar 8B1, and is used to store an icon newly added by the user.

Specifically, the user may tap any icon in the smart multi-window icon display region 8B21 or the smart transfer icon display region 8B22 to add the icon to a blank icon position in the smart transfer icon region 8B11 or the smart multi-window icon region 8B12. For example, the user may tap the icon of "memo" in the smart multi-window icon display region 8B21 to add the icon to the blank position 8B121 in the smart multi-window icon region 8B12, or the user may tap the icon of "scan camera" in the smart transfer icon display region 8B22 to add the icon to the blank position 8B111 in the smart transfer icon region 8B11. Then, the user may tap a confirmation control 8B14 in the side application bar 8B1, and the electronic device may save the icon option added by the user. When the side application bar is displayed next time, the newly added icon is displayed in the side application bar.

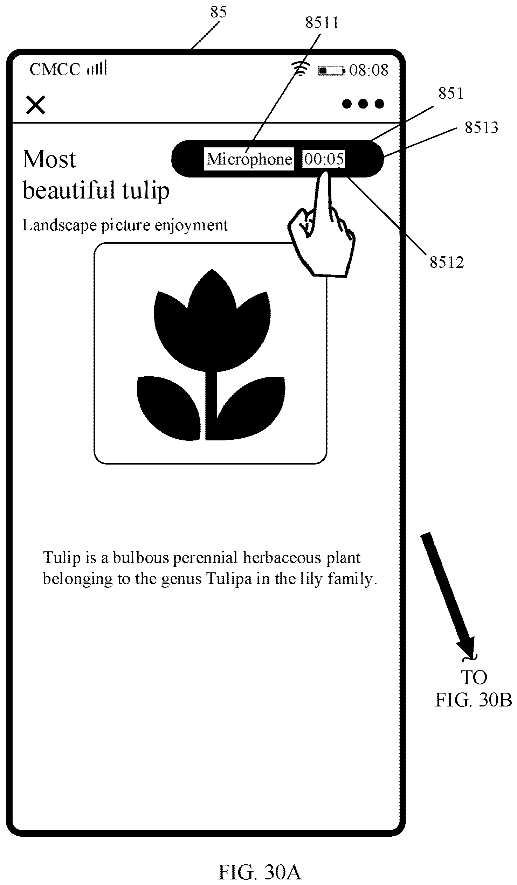

Currently, most intelligent devices further provide a quick screen recording function for a user. For example, in some scenarios, the user may double-tap a screen by using two knuckles to record a screen of a current interface presentation process of the electronic device. Therefore, for the quick screen recording function provided by the electronic device, a process of transmitting a recorded video across applications by using a cross-application transmission interface in a screen recording scenario is described below with reference to FIG. 30A to FIG. 30C.

FIG. 30A to FIG. 30C are schematic diagrams of an interface change process of an electronic device when a user transmits a recorded video across applications based on a cross-application transmission interface.

As shown in FIG. 30A, a user interface 85 may be an application interface of an application "browser" in the electronic device, may be an application interface of an application "microblog^{®}", or may be an application interface of another application. This is not limited in this application. In this case, the user has enabled the screen recording function of the electronic device by performing a related operation. In the user interface 85, a screen recording function box may include a microphone control 8511, a time control 8512, and an option control 8513.

The microphone control 8511 may respond to a user operation, so that the electronic device starts/stops recording an external sound.

The time control 8512 may be configured to display duration of recording in real time, and may further respond to a user operation, so that the electronic device stops recording a screen.

The option control 8513 may respond to a user operation, so that the electronic device displays more screen recording setting options, such as whether to record an operation trajectory of the user on the screen.

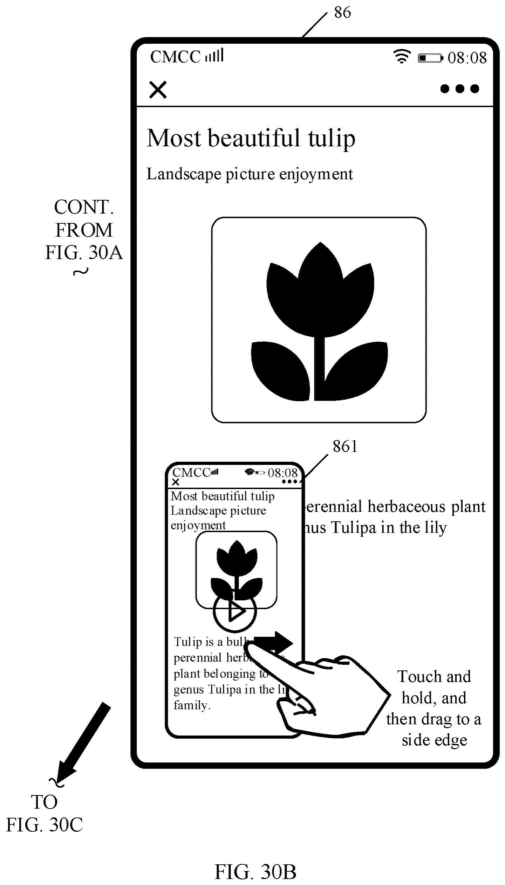

For example, as shown in FIG. 30A, in response to a tap operation performed by the user on the time control 8512, the electronic device may stop a screen recording process, and display a user interface 86 shown in FIG. 30B.

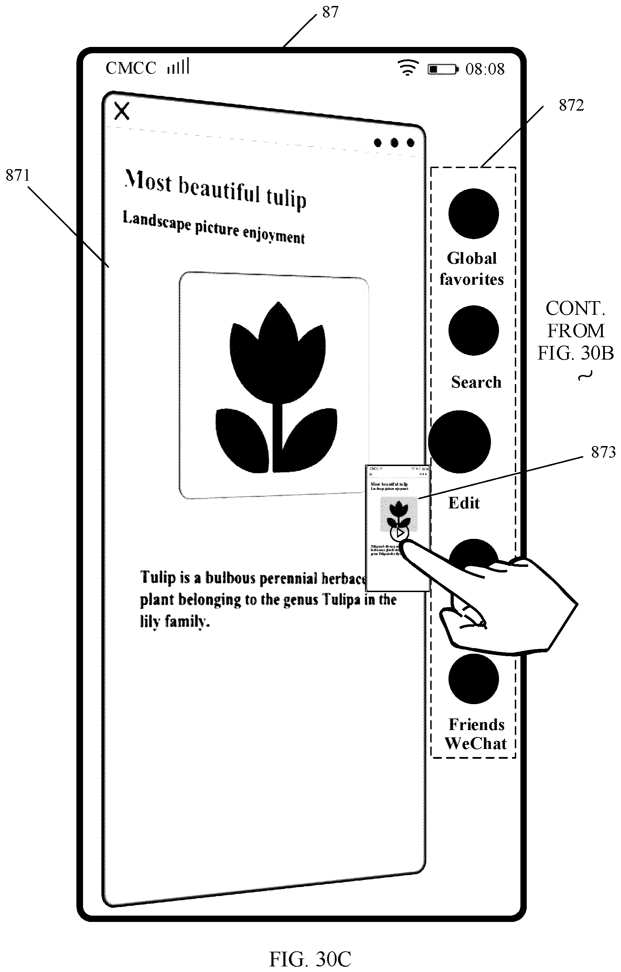

As shown in FIG. 30B, the user interface 86 may include a video file 861. The video file 861 is a video recorded by the electronic device in response to a screen recording operation of the user. After the screen recording, the video file 861 may be displayed in the user interface 86, and usually last for two to three seconds, so that the user can directly tap the video file 861 to perform an operation such as editing or saving on the video file 861. If the user does not perform an operation on the video file 861, the electronic device may automatically save the video file 861 in an album. In this embodiment of this application, within duration during which the electronic device displays the video file 861 in the user interface 86, the user may perform a touch and hold operation on the video file 861 and drag the video file 861 to a side edge of the screen of the electronic device, and then transmit the video file 861 across applications by using the "cross-application transmission interface". As shown in FIG. 30B, the electronic device may display a user interface 87 shown in FIG. 30C in response to the user operation of touching and holding, and dragging the video file 861 to the side edge.

As shown in FIG. 30C, the user interface 87 is the cross-application transmission interface. The user interface 87 may include a sub-interface 871, an icon region 872, and a video file 873.

For specific content and functions of the sub-interface 871 and the icon region 872, refer to the foregoing descriptions. Details are not described herein again.

Similarly, to avoid excessive blocking of the icon region 872, when the video file 861 approaches the icon region, the electronic device shrinks the original video file 861 to obtain the video file 873.

Similarly, in the user interface 87, the user places the video file 873 onto the corresponding icon in the icon region 872 and releases the finger. The electronic device may transmit the information element to the application service corresponding to the icon in response to the user operation, and display a corresponding application interface.

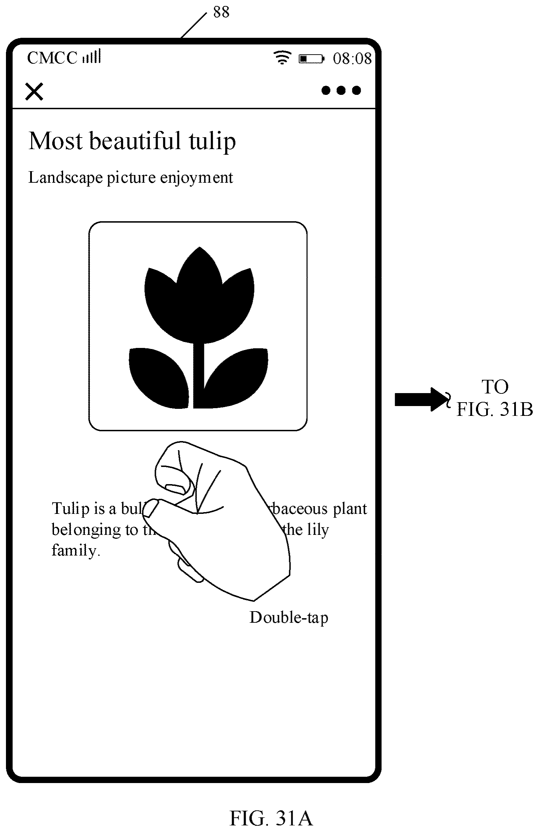

In addition, after the user captures the image of the electronic device by using the quick screenshot function, the user may further edit the captured image, and then transmit the edited image on the editing page by using the "cross-application transmission interface". For details, refer to FIG. 31A to FIG. 31E.

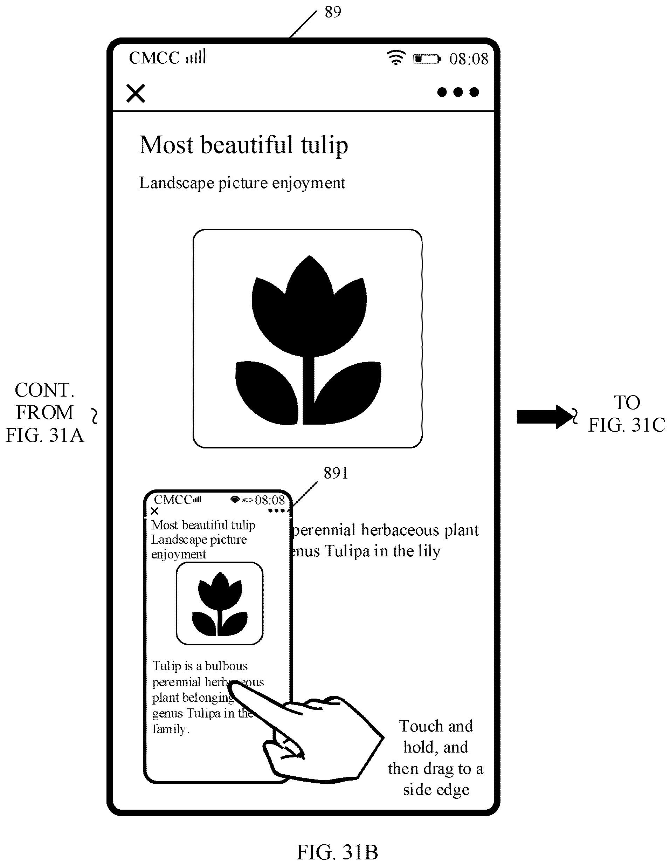

As shown in FIG. 31A, a user interface 88 may be an application interface of an application "browser" in the electronic device, may be an application interface of an application "microblog^{®}", or may be an application interface of another application. This is not limited in this application. In response to a quick screenshot operation performed by the user on the user interface 88, for example, a knuckle double-tap operation shown in FIG. 31A, the electronic device may quickly obtain a full-screen image of the user interface 88, and display a user interface 89 shown in FIG. 31B.

As shown in FIG. 31B, the user interface 89 may include a screenshot image 891. The screenshot image 891 is an image obtained by the electronic device in response to the knuckle screenshot that is performed by the user on the user interface 88. After the screenshot, the screenshot image 891 may be displayed in the user interface 89, and usually last for two to three seconds, so that the user can directly tap the screenshot image 891 to perform an operation such as editing or saving on the screenshot image 891. If the user does not perform an operation on the screenshot image 891, the electronic device may automatically save the screenshot image 891 in an album.

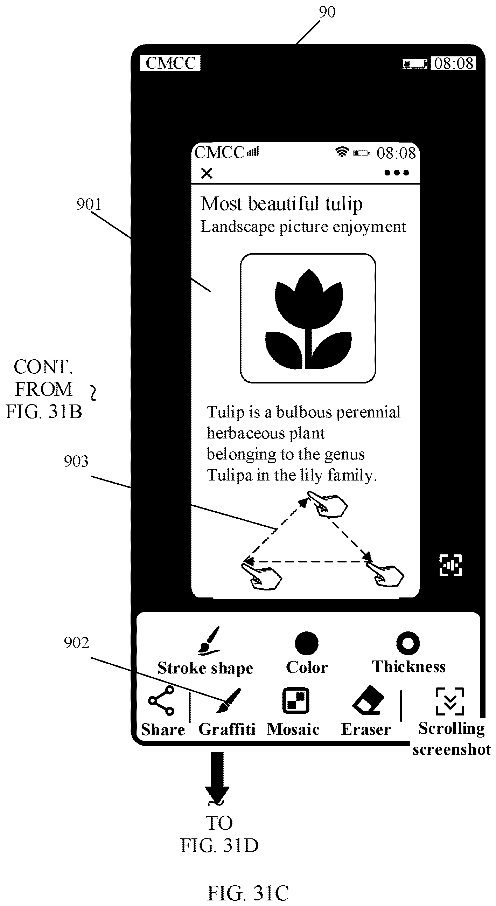

In this embodiment of this application, within duration during which the electronic device displays the screenshot image 891 in the user interface 89, the electronic device may display a user interface 90 shown in FIG. 31C in response to a tap operation performed by the user on the screenshot image 891 shown in FIG. 31B. The user interface 90 is an edit interface of the screenshot image 891, and may include a thumbnail 901 and a graffiti option 902.

The thumbnail 901 may be the thumbnail in the foregoing user interface 88.

The graffiti option 902 may respond to a user operation, so that the electronic device draws a touch trajectory of the user on the screen onto the thumbnail 901 in response to a touch operation performed by the user on the screen.

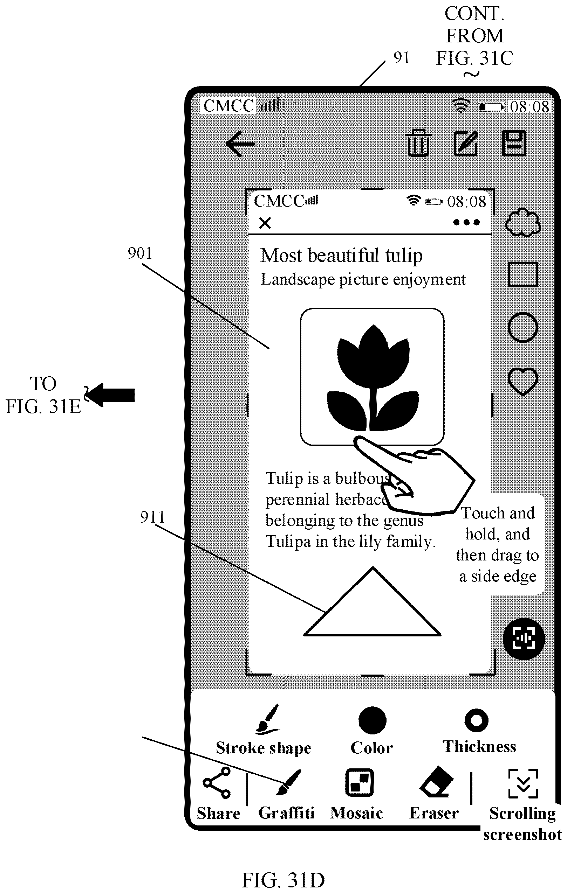

As shown in FIG. 31C, the user may draw graffiti on the thumbnail 901 based on a trajectory shown by a dashed line with an arrow shown in FIG. 31D. In response to the user operation (in this embodiment of this application, the operation may be referred to as an "eighth operation"), the electronic device may draw the trajectory shown by the dashed line with an arrow onto the thumbnail 901, and display a user interface 91 shown in FIG. 31D. Optionally, in the user interface 90, the image included in the thumbnail 901 may also be pulled up by the user after being touched and held, so that the electronic device displays the cross-application transmission interface provided in this application, and performs transmission based on the cross-application transmission interface. After the user taps a text recognition control in the user interface 90, the electronic device may also recognize the text included in the image 901. The text may also be pulled up by the user after being touched and held, so that the electronic device displays the cross-application transmission interface provided in this application, and performs transmission based on the cross-application transmission interface. For details, refer to the foregoing related descriptions of FIG. 7A to FIG. 7D, FIG. 8A, and FIG. 8B. Details are not described herein again. As shown in FIG. 31D, in the user interface 91, a triangular pattern 911 drawn by the user is already displayed on the thumbnail 901.

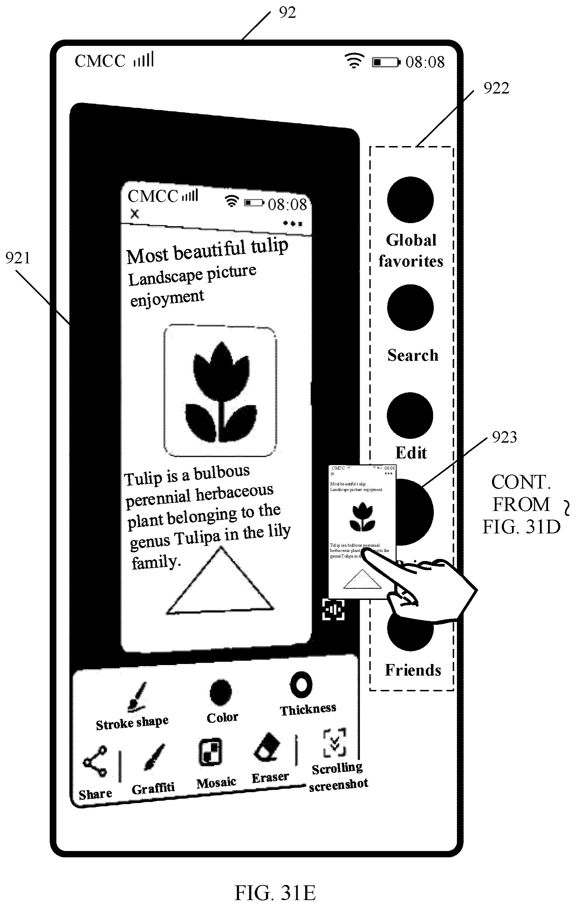

It may be understood that the user interface 91 is still an edit interface of the image. In the user interface 91, the user may also perform a touch and hold operation on the thumbnail 901, and drag the thumbnail 901 to a side edge of the screen of the electronic device, and then transmit the thumbnail 901 across applications by using the "cross-application transmission interface". As shown in FIG. 31D, the electronic device may display a user interface 92 shown in FIG. 31E in response to a user operation of touching and holding, and dragging the thumbnail 901 (in this case, the thumbnail 901 already carries a pattern drawn by the user, that is, a triangular pattern 911) to the side edge.

As shown in FIG. 31E, the user interface 92 is the cross-application transmission interface. The user interface 92 may include a sub-interface 921, an icon region 922, and an image 923.

For specific content and functions of the sub-interface 921 and the icon region 922, refer to the foregoing descriptions. Details are not described herein again.

Similarly, to avoid excessive blocking of the icon region 922, when the thumbnail 901 approaches the icon region, the electronic device shrinks the original thumbnail 901 again to obtain the image 923 (the image 923 also carries a pattern drawn by the user, that is, a triangular pattern 911). Similarly, in the user interface 92, the user places the image 923 onto the corresponding icon in the icon region 922 and releases the finger. The electronic device may transmit the information element to the application service corresponding to the icon in response to the user operation, and display a corresponding application interface.

In this embodiment of this application, the user interface 88 may be referred to as a "fifth interface", the user interface 89 may be referred to as a "sixth interface", the user interface 91 may be referred to as a "seventh interface", the user interface 90 may be referred to as an "edit interface", the image 891 and the image 901 may be referred to as a "first image", the user interface 95 may be referred to as a "seventh interface", and a tap operation performed by the user on the screenshot image 891, an operation in which the user may draw graffiti on the thumbnail 901 based on a trajectory shown by a dashed line with an arrow shown in FIG. 31D, and an operation in which the user performs a touch and hold operation on the thumbnail 901, and drags the thumbnail 901 to the side edge of the screen of the electronic device may be collectively referred to as an "eighth operation".

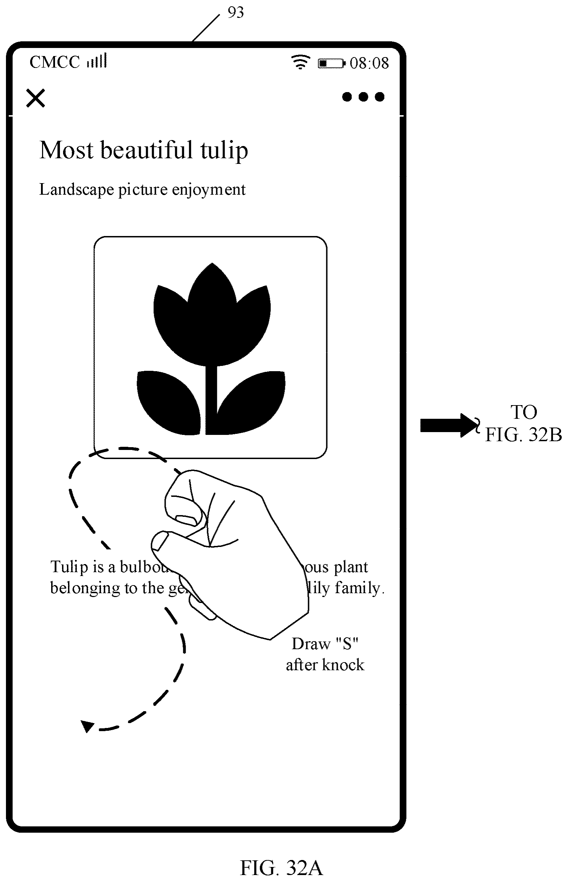

In addition, in some embodiments, the electronic device further provides a long screenshot function for the user. A long screenshot, also referred to as a scrolling screenshot, is an effective method for capturing current content in an interface, in which all content in the interface can be obtained, instead of capturing only a visible part. The long screenshot may be widely used in a web page browsing scenario, and is useful for investigating web page information or collecting materials. Generally, a procedure for the scrolling screenshot is to first scroll a web page by using a rolling function, and continuously capture content of the web page. After capturing of the content of the web page is completed, a program automatically combines all the content to form a complete long screenshot. The "cross-application transmission interface" provided in this application is also applicable to an image captured by the user by using the long screenshot function. For details, refer to FIG. 32A to FIG. 32D.

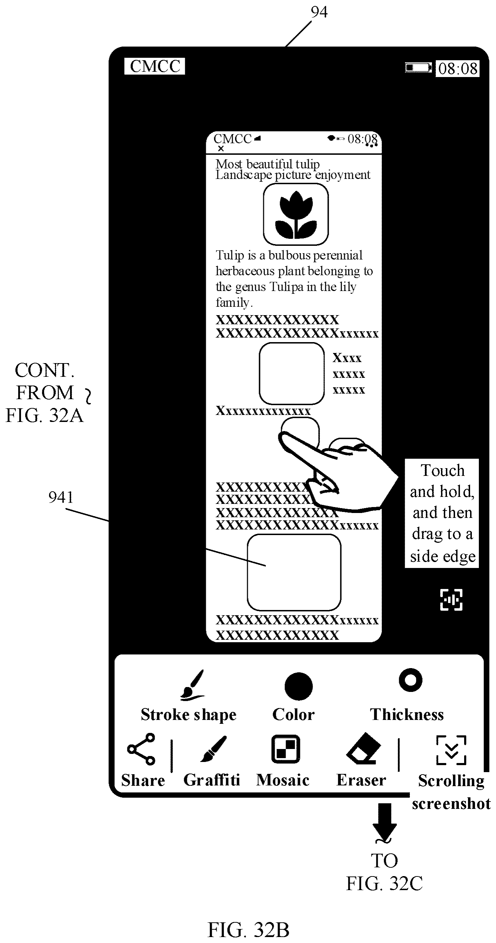

As shown in FIG. 32A, as shown in FIG. 32A, a user interface 93 may be an application interface of an application "browser" in the electronic device, may be an application interface of an application "microblog^{®}", or may be an application interface of another application. This is not limited in this application. In response to a long screenshot operation performed by the user on the user interface 93, for example, an operation of drawing an "S" trajectory after knuckle knock shown in FIG. 32A, the electronic device may quickly scroll a web page, and continuously capture content of the web page. After the user taps the screen again (the operation is not shown in FIG. 32A), it indicates that content of the web page required by the user is completely captured. Then, the electronic device combines all the captured content to form a complete long screenshot, and displays a user interface 94 shown in FIG. 32B.

As shown in FIG. 32B, the user interface 94 may include a long screenshot image 941. The long screenshot image 941 is an image obtained by the electronic device in response to the long screenshot operation performed by the user on the user interface 93. After the long screenshot, the user may perform an operation such as editing or saving on the long screenshot image 941 in the user interface 94 by using a related edit option.

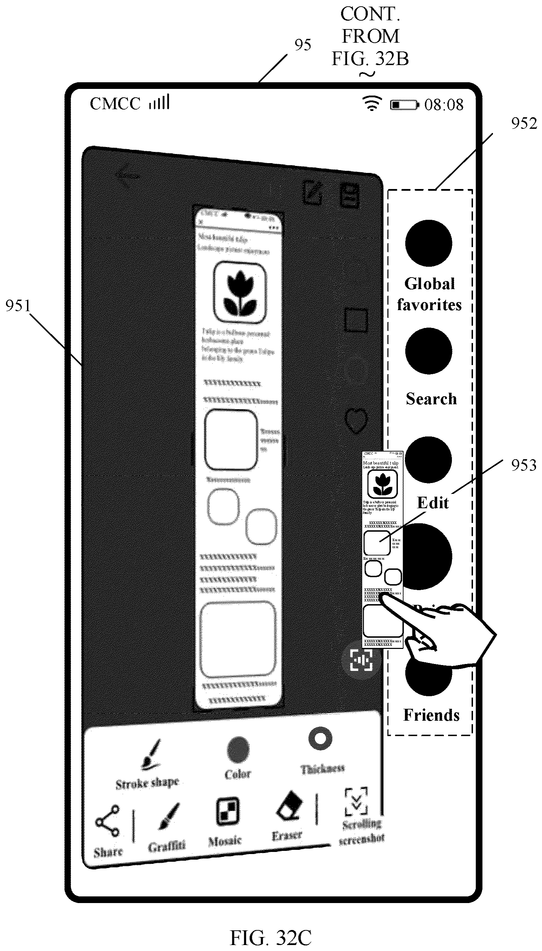

In this embodiment of this application, the electronic device may further display a user interface 95 shown in FIG. 32C in response to the user operation of touching and holding, and dragging the long screenshot image 941 to the side edge, as shown in FIG. 32B.

As shown in FIG. 32C, the user interface 95 is the cross-application transmission interface. The user interface 95 may include a sub-interface 951, an icon region 952, and an image 953.

For specific content and functions of the sub-interface 951 and the icon region 952, refer to the foregoing descriptions. Details are not described herein again.

Similarly, to avoid excessive blocking of the icon region 952, when the long screenshot image 941 approaches the icon region, the electronic device shrinks the long screenshot image 941 to obtain the image 953.

Similarly, in the user interface 95, the user places the image 953 onto the corresponding icon in the icon region 952 and releases the finger. The electronic device may transmit the information element to the application service corresponding to the icon in response to the user operation, and display a corresponding application interface.

Optionally, when a size of the long screenshot image 941 exceeds an upper limit specified by the application service, or a format of the long screenshot image 941 does not comply with stipulation of the target application service, the long screenshot image 941 cannot be transmitted to the target application service by using the "cross-application transmission interface". In this case, the electronic device may also display the toast feedback in the interface, so as to prompt the user that the information cannot be successfully transmitted.

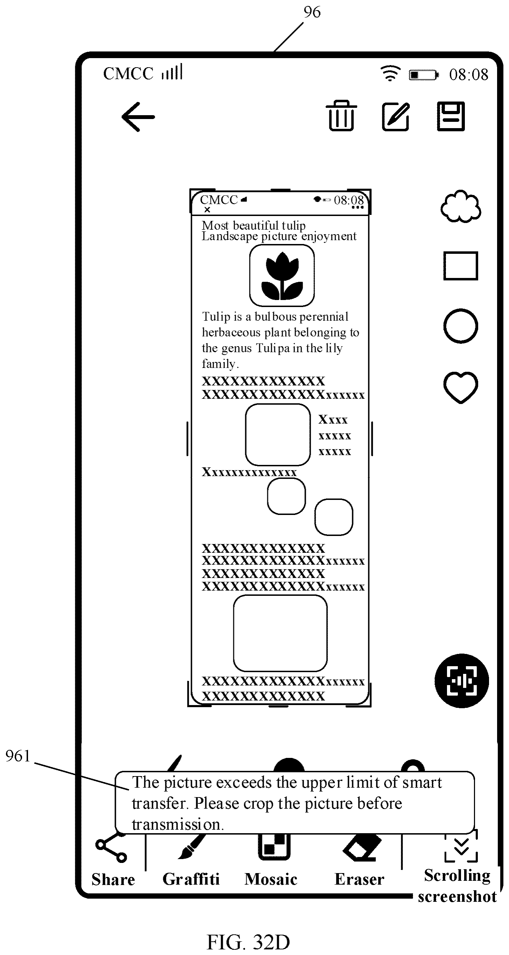

For example, when transmission of the long screenshot image 941 fails, the electronic device may display a user interface 96 shown in FIG. 32D. Toast feedback 961 may be displayed below the user interface 96. Specifically, the toast feedback 961 may display prompt information "The picture exceeds the upper limit of smart transfer. Please crop the picture before transmission." to prompt the user that the transmitted image exceeds a limit of the target application service, and consequently the transmission process fails.

Similarly, if the user does not perform any operation on the toast feedback 961, the toast feedback 961 may disappear automatically after being displayed for a period of time (for example, 2s-3s). Alternatively, when the toast feedback is still displayed in the user interface 96, the user may tap a position other than a position at which the toast feedback 961 is located in the user interface 96, so as to make the toast feedback 961 disappear.

In this embodiment of this application, the user interface 93 may be referred to as a "fifth interface", the user interface 94 may be referred to as a "sixth interface", the long screenshot image 941 or the image 953 may be referred to as a "first image", the user interface 95 may be referred to as a "seventh interface", and an operation in which the user places the image 953 onto the corresponding icon in the icon region 952 and releases the finger may be referred to as a "ninth operation".

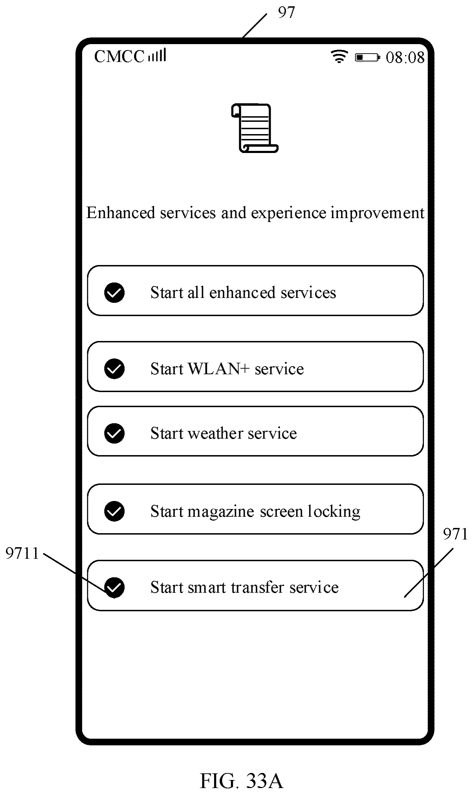

The following describes the system setting interfaces involved in the "smart transfer" function. A user interface involved in enabling the "smart transfer" function by the electronic device is first described with reference to FIG. 33A to FIG. 33C.

As shown in FIG. 33A, the user interface 97 may be a use navigation interface that is displayed by the electronic device for the user when the user powers on the electronic device for the first time after the electronic device is delivered from the factory. In the user interface 97, a smart transfer service tab 971 may include an on/off control 9711, which may be set to an enabled state by default, that is, the electronic device has enabled the "smart transfer" function by default. Certainly, the user may alternatively tap the on/off control 9711, so that the electronic device disables the "smart transfer" function.

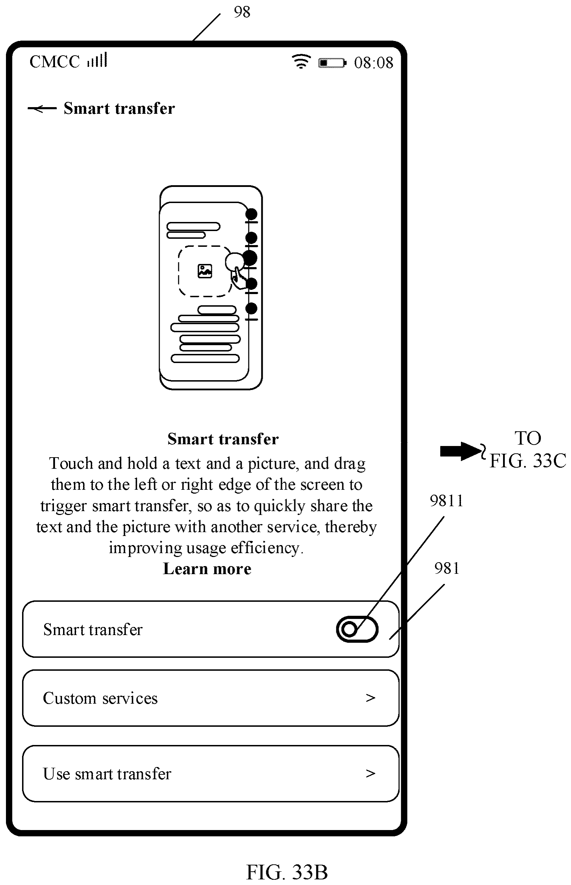

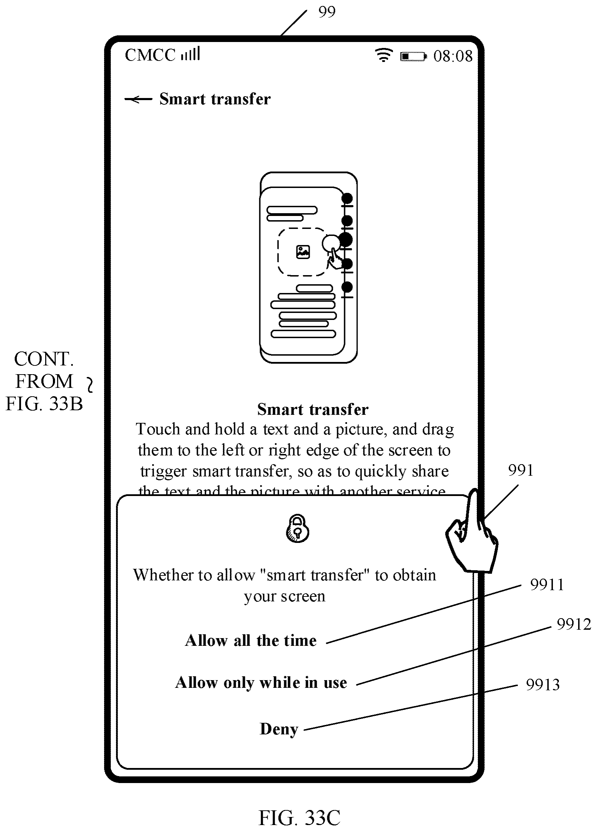

In addition, in a process in which the user daily uses the electronic device, the user may alternatively enable or disable the "smart transfer" function by using a related interface in system settings of the electronic device. As shown in FIG. 33B, the user may open the "smart transfer" setting interface, that is, the user interface 98, in the system settings, and enable or disable the "smart transfer" function by manipulating the on/off control 9811 in the "smart transfer" tab 981. If the on/off control 9711 is displayed in a disabled state in this case, the user may tap the on/off control 9811 to enable the "smart transfer" function, and the electronic device displays a user interface 99 shown in FIG. 33C in response to the user operation.

As shown in FIG. 33C, the user interface 99 may include a prompt box 991, which may be used to inquire whether the user agrees to expose a screen picture of the electronic device to "smart transfer". The prompt box 991 may include an "allow all the time" option 9911, an "allow only while in use" option 9912, and a "deny" option 9913. After the user taps the "allow all the time" option 9911 or the "allow only while in use" option 9912, the electronic device may successfully enable the "smart transfer" function. After the user taps the "deny" option 9913, the electronic device cannot enable the "smart transfer" function.

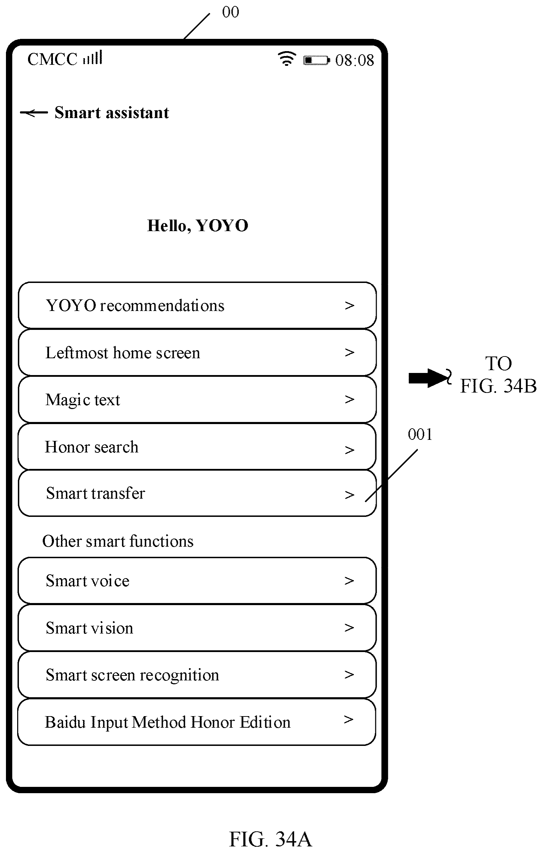

FIG. 34A to FIG. 34D show some system setting interfaces for understanding the "smart transfer" function and editing an application service icon on a smart transfer page.

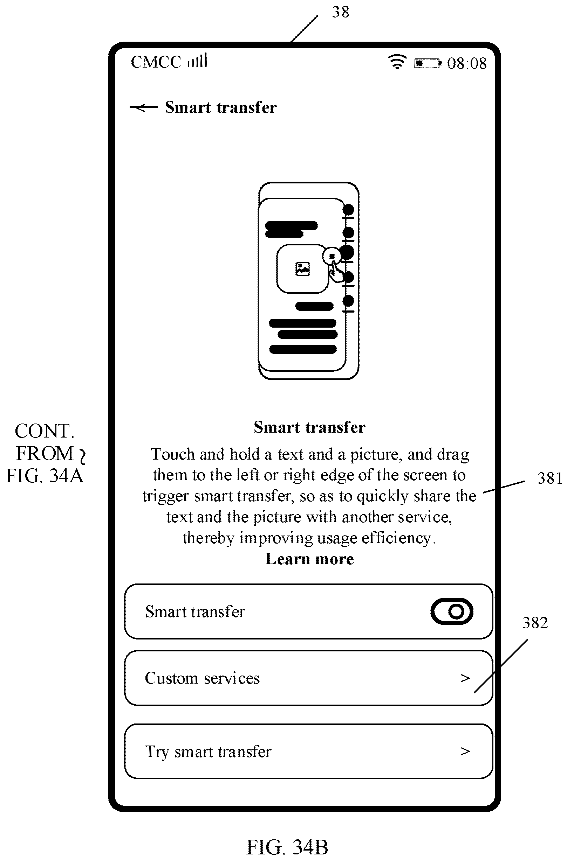

As shown in FIG. 34A, a user interface 00 is an interface that is in the "system settings" in the electronic device and that is related to a "smart assistant" function. In the user interface 00, the user may tap the "smart transfer" tab, so that the electronic device displays a user interface 38 shown in FIG. 34B.

As shown in FIG. 34B, the user interface 38 and the user interface 98 in the foregoing description may be a same user interface. The user interface 38 may display a "learn more" control 381 and a "custom service" tab 382.

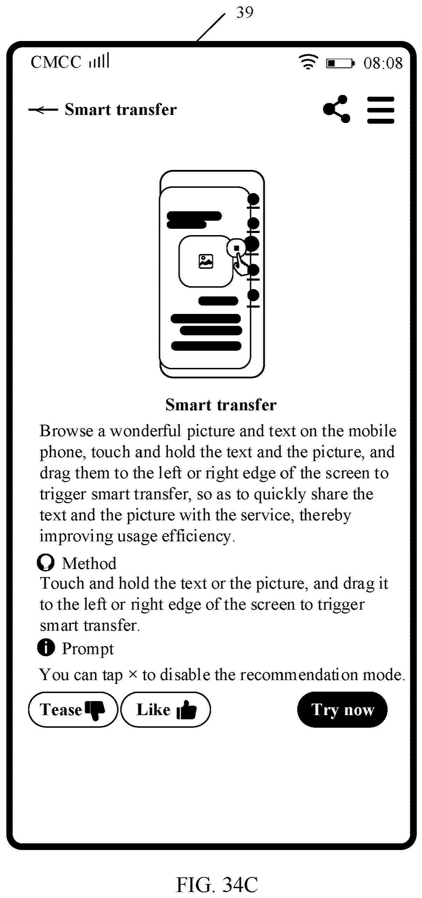

The "learn more" control 381 may respond to a tap operation of the user, so that the electronic device displays a user interface 39 shown in FIG. 34C. The user interface 39 is a user interface provided by system settings, and may be used to display a specific effect, a specific operation step, and the like of the "smart transfer" function to the user.

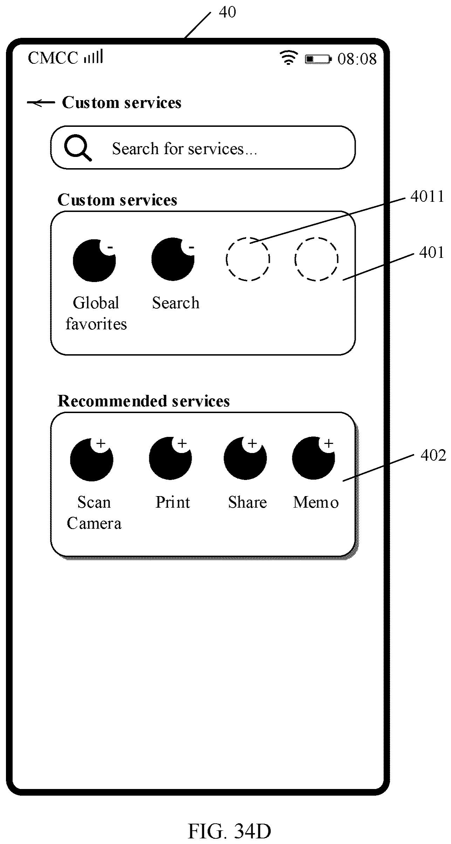

The "custom service" tab 382 may respond to a tap operation of the user, so that the electronic device displays a user interface 40 shown in FIG. 34D. With reference to the foregoing description, it can be learned that, of the icons displayed in the cross-application transmission interface, some icons are icons customized by the user and fixedly displayed in the icon region, and the other icons are icons recommended by the electronic device for the user based on an element pulled up by the user. Therefore, in the user interface 40, an icon displayed in an icon display card 401 is an icon that has been determined by the user to be fixedly displayed in the icon region, and an icon displayed in an icon display card 402 is an icon that has not been set by the user to be fixedly displayed in the icon region. The user may tap a removal symbol "-" in the upper right corner of any icon in the icon display card 401, so that the icon is no longer fixedly displayed in the icon region of the cross-application transmission interface. Similarly, the user may tap an addition symbol "+" in the upper right corner of any icon in the icon display card 402, so that the icon is fixedly displayed in the icon region of the cross-application transmission interface (after being added, the icon is also displayed in the blank icon region such as 4011 of the icon display card 401).

It should be understood that FIG. 33A-FIG. 34D show only examples of the user interface related to the "system settings" provided in this embodiment of this application, and should not constitute a limitation on this embodiment of this application. For example, the icon display card 402 may include more or fewer application service icons. This is not limited in this application.

The following describes the electronic device provided in this application.

The electronic device may be a mobile phone, a tablet computer, a wearable device, an in-vehicle device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or a dedicated camera (for example, a single-lens reflex camera or a card digital camera), or the like. A specific type of the electronic device is not limited in this application.

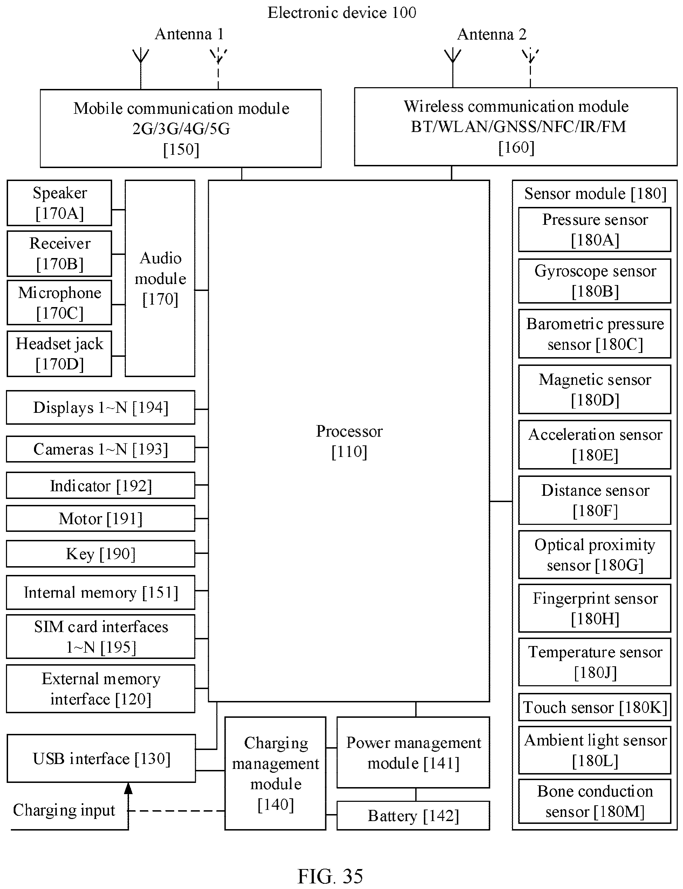

FIG. 35 shows an example of a structure of the electronic device.

As shown in FIG. 35, the electronic device 100 may include a processor 110, an external memory interface 120, an internal memory 151, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on instruction operation code and a timing signal, to complete control of instruction fetching and instruction execution.

A memory may be further disposed in the processor 110 to store instructions and data. In some embodiments, the memory in the processor 110 is a cache memory. The memory may store instructions or data recently used or cyclically used by the processor 110. If the processor 110 needs to use the instructions or the data again, the processor may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (derail clock line, SCL). In some embodiments, the processor 110 may include a plurality of groups of I2C buses. The processor 110 may be separately coupled to the touch sensor 180K, the charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transfer an audio signal to the wireless communication module 160 through the I2S interface, to implement a function of answering a call by using a Bluetooth headset.

The PCM interface may also be used for audio communication, to sample, quantize, and encode an analog signal. In some embodiments, the audio module 170 may be coupled to the wireless communication module 160 through a PCM bus interface. In some embodiments, the audio module 170 may also transfer an audio signal to the wireless communication module 160 through the PCM interface, to implement a function of answering a call by using a Bluetooth headset. Both the I2S interface and the PCM interface may be used for audio communication.

The UART interface is a universal serial data bus used for asynchronous communication. The bus may be a bidirectional communication bus, and converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transfer an audio signal to the wireless communication module 160 through the UART interface, to implement a function of playing music by using a Bluetooth headset.

The MIPI interface may be configured to connect the processor 110 to peripheral devices such as the display 194 and the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a shooting function of the electronic device 100. The processor 110 communicates with the display 194 through the DSI interface, to implement a display function of the electronic device 100.

The GPIO interface may be configured by software. The GPIO interface may be configured as a control signal or may be configured as a data signal. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, an MIPI interface, or the like.

The USB interface 130 is an interface that complies with USB standard specifications, and may be specifically a Mini USB interface, a Micro USB interface, a USB Type C interface, or the like. The USB interface 130 may be configured to connect to a charger to charge the electronic device 100, or may be configured to transmit data between the electronic device 100 and a peripheral device, or may be configured to connect to a headset to play audio through the headset. The interface may alternatively be configured to connect to another electronic device, for example, an AR device.

It may be understood that an interface connection relationship between modules illustrated in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input by using a wireless charging coil of the electronic device 100. When charging the battery 142, the charging management module 140 may further supply power to the electronic device by using the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 151, the display 194, the camera 193, the wireless communication module 160, and the like. The power management module 141 may be further configured to monitor parameters such as a battery capacity, a quantity of battery cycles, and a battery health status (leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used together with a tuning switch.

The mobile communication module 150 may provide a solution for wireless communication that is applied to the electronic device 100 and that includes 2G/3G/4G/5G and the like. The mobile communication module 150 may include at least one filter, switch, power amplifier, low noise amplifier (low noise amplifier, LNA), and the like. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert, by using the antenna 1, an amplified signal into an electromagnetic wave for radiation. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low frequency baseband signal into a medium or high frequency signal. The demodulator is configured to demodulate a received electromagnetic wave signal into a low frequency baseband signal. Then, the demodulator transfers, to the baseband processor for processing, the low frequency baseband signal obtained through demodulation. The low frequency baseband signal is processed by the baseband processor and then transferred to the application processor. The application processor outputs a sound signal by using an audio device (not limited to the speaker 170A, the receiver 170B, and the like), or displays an image or a video by using the display 194. In some embodiments, the modem processor may be an independent device. In some other embodiments, the modem processor may be independent of the processor 110 and disposed in a same device as the mobile communication module 150 or another functional module.

The wireless communication module 160 may provide a solution for wireless communication that is applied to the electronic device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave by using the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert, by using the antenna 2, the to-be-sent signal into an electromagnetic wave for radiation. In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 implements a display function by using the GPU, the display 194, the application processor, and the like. The GPU is a microprocessor for image processing, and is connected to the display 194 and the application processor. The GPU is configured to perform mathematical and geometric computing for graphics rendering. The processor 110 may include one or more GPUs, which execute program instructions to generate or change display information. The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode or active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 100 may include one or N displays 194, where N is a positive integer greater than 1.

The electronic device 100 may implement a shooting function by using the ISP, the camera 193, the video codec, the GPU, the display 194, the application processor, and the like.

The ISP is configured to process data fed back by the camera 193. For example, during photographing, a shutter is opened, and light is transferred to a photosensitive element of the camera through a lens. An optical signal is converted into an electrical signal. The photosensitive element of the camera transfers the electrical signal to the ISP for processing, to convert the electrical signal into an image visible to naked eyes. The ISP may further perform algorithm optimization on noise, brightness, and complexion of the image. The ISP may further optimize parameters such as exposure and a color temperature of a shooting scene. In some embodiments, the ISP may be disposed in the camera 193.

The camera 193 is configured to capture a still image or a video. An optical image of an object is generated through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG) 1, MPEG2, MPEG3, and MPEG4.

The NPU is a neural-network (neural-network, NN) computing processor, which quickly processes input information by referring to a biological neural network structure, for example, by referring to a transferring mode between human brain neurons, and may further perform self-learning continuously. Applications such as intelligent cognition of the electronic device 100, for example, image recognition, face recognition, speech recognition, and text understanding, may be implemented by using the NPU.

The external memory interface 120 may be configured to connect to an external memory card, for example, a Micro SD card, to expand a storage capability of the electronic device 100. The external memory card communicates with the processor 110 through the external memory interface 120, to implement a data storage function. For example, files such as music and a video are stored in the external memory card.

The internal memory 151 may be configured to store computer-executable program code, and the executable program code includes instructions. The internal memory 151 may include a program storage area and a data storage area. The program storage area may store an operating system, an application required by at least one function (for example, a sound playing function or an image playing function), and the like. The data storage area may store data (for example, audio data and a phone book) and the like created during use of the electronic device 100. In addition, the internal memory 151 may include a high-speed random access memory, and may further include a nonvolatile memory, for example, at least one magnetic disk storage device, a flash memory device, or a universal flash storage (universal flash storage, UFS). The processor 110 performs various function applications and data processing of the electronic device 100 by running the instructions stored in the internal memory 151 and/or instructions stored in the memory disposed in the processor.

The electronic device 100 may implement audio functions such as music playing and sound recording by using the audio module 170, the speaker 170A, the receiver 170B, the microphone 170C, the headset jack 170D, the application processor, and the like.

The audio module 170 is configured to convert digital audio information into an analog audio signal for output, and is further configured to convert an analog audio input into a digital audio signal. The audio module 170 may be further configured to encode and decode an audio signal. In some embodiments, the audio module 170 may be disposed in the processor 110 or some functional modules of the audio module 170 may be disposed in the processor 110.

The speaker 170A, also referred to as a "loudspeaker", is configured to convert an audio electrical signal into a sound signal. The electronic device 100 may be configured to listen to music or answer a hands-free call by using the speaker 170A.

The receiver 170B, also referred to as an "earpiece", is configured to convert an audio electrical signal into a sound signal. When a call is answered or a voice message is listened to by using the electronic device 100, the receiver 170B may be put close to a human ear to listen to a voice.

The microphone 170C, also referred to as a "mic" or "mike", is configured to convert a sound signal into an electrical signal. When making a call or sending a voice message, a user may make a sound by approaching the mouth to the microphone 170C, to input a sound signal to the microphone 170C. At least one microphone 170C may be disposed in the electronic device 100. In some other embodiments, two microphones 170C may be disposed in the electronic device 100, to implement a noise reduction function in addition to collecting a sound signal. In some other embodiments, three, four, or more microphones 170C may alternatively be disposed in the electronic device 100, to collect a sound signal, reduce noise, further recognize a sound source, implement a directional sound recording function, and so on.

The headset jack 170D is configured to connect to a wired headset. The headset jack 170D may be the USB interface 130, or may be a 3.5 mm open mobile electronic device platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed in the display 194. There are many types of pressure sensors 180A, such as a resistive pressure sensor, an inductive pressure sensor, and a capacitive pressure sensor. The capacitive pressure sensor may include at least two parallel plates having a conductive material. When force is applied to the pressure sensor 180A, capacitance between electrodes changes. The electronic device 100 determines intensity of a pressure based on a change of the capacitance. When a touch operation is performed on the display 194, the electronic device 100 detects intensity of the touch operation based on the pressure sensor 180A. The electronic device 100 may also calculate a touch position based on a detected signal of the pressure sensor 180A. In some embodiments, touch operations performed at a same touch position but having different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The gyroscope sensor 180B may be configured to determine a motion posture of the electronic device 100. In some embodiments, angular velocities of the electronic device 100 around three axes (namely, an x axis, a y axis, and a z axis) may be determined by using the gyroscope sensor 180B. The gyroscope sensor 180B may be configured to implement image stabilization during shooting. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may be further used in scenarios of navigation and a motion sensing game.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall sensor. The electronic device 100 may detect opening/closing of a flip leather case by using the magnetic sensor 180D. In some embodiments, when the electronic device 100 is a flip phone, the electronic device 100 may detect opening/closing of a flip cover based on the magnetic sensor 180D, and further set features such as automatic unlocking of the flip cover based on a detected opening/closing state of the leather case or a detected opening/closing state of the flip cover.

The acceleration sensor 180E may detect magnitudes of acceleration in various directions (usually on three axes) of the electronic device 100, and may detect a magnitude and a direction of gravity when the electronic device 100 is still. The acceleration sensor 180E may be further configured to recognize a posture of the electronic device, and is applied to applications such as switching between a landscape mode and a portrait mode and a pedometer.

The distance sensor 180F is configured to measure a distance. The electronic device 100 may measure a distance in an infrared manner or a laser manner. In some embodiments, in a shooting scene, the electronic device 100 may measure a distance by using the distance sensor 180F, to implement fast focusing.

The optical proximity sensor 180G may include, for example, a light-emitting diode (LED) and an optical detector, for example, a photodiode. The light-emitting diode may be an infrared light-emitting diode. The electronic device 100 emits infrared light to the outside by using the light-emitting diode. The electronic device 100 uses the photodiode to detect reflected infrared light from a nearby object. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to implement automatic screen-off to save power. The optical proximity sensor 180G may alternatively be used in a leather case mode or a pocket mode to automatically unlock or lock a screen.

The ambient light sensor 180L is configured to sense ambient light brightness. The electronic device 100 may adaptively adjust brightness of the display 194 based on the sensed ambient light brightness. The ambient light sensor 180L may be further configured to automatically adjust white balance during photographing. The ambient light sensor 180L may further cooperate with the optical proximity sensor 180G to detect whether the electronic device 100 is in a pocket to prevent an accidental touch.

The fingerprint sensor 180H is configured to collect a fingerprint. The electronic device 100 may implement fingerprint unlocking, application lock accessing, fingerprint-based photographing, fingerprint-based incoming call answering, and the like by using a feature of the collected fingerprint.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 degrades performance of a processor located near the temperature sensor 180J, to reduce power consumption and implement thermal protection. In some other embodiments, when the temperature is less than another threshold, the electronic device 100 heats the battery 142, to prevent the electronic device 100 from being abnormally powered off due to a low temperature. In some other embodiments, when the temperature is less than still another threshold, the electronic device 100 boosts an output voltage of the battery 142, to avoid abnormal power-off due to a low temperature.

The touch sensor 180K is also referred to as a "touch control device". The touch sensor 180K may be disposed in the display 194. The touch sensor 180K and the display 194 constitute a touchscreen, which is also referred to as a "touch control screen". The touch sensor 180K is configured to detect a touch operation performed on or near the touch sensor. The touch sensor may transfer the detected touch operation to the application processor to determine a type of a touch event. A visual output related to the touch operation may be provided by using the display 194. In some other embodiments, the touch sensor 180K may alternatively be disposed on a surface of the electronic device 100, at a position different from that of the display 194.

The bone conduction sensor 180M may obtain a vibration signal. In some embodiments, the bone conduction sensor 180M may obtain a vibration signal of a vibration bone in a human vocal-cord part. The bone conduction sensor 180M may alternatively be in contact with a human pulse to receive a blood pressure pulse signal. In some embodiments, the bone conduction sensor 180M may alternatively be disposed in a headset, to form a bone conduction headset in combination with the headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure pulse signal obtained by the bone conduction sensor 180M, to implement a heart rate detection function.

The key 190 includes a power-on/off key, a volume key, and the like. The key 190 may be a mechanical key, or may be a touch key. The electronic device 100 may receive a key input and generate a key signal input related to user settings and function control of the electronic device 100.

The motor 191 may generate a vibration prompt. The motor 191 may be configured to provide a vibration prompt for an incoming call, and may also be configured to provide vibration feedback for a touch. For example, touch operations performed on different applications (for example, photographing and audio playing) may correspond to different vibration feedback effects. The motor 191 may also correspond to different vibration feedback effects for touch operations performed on different regions of the display 194. Different application scenarios (for example, a time reminder, information receiving, an alarm clock, and a game) may also correspond to different vibration feedback effects. A touch vibration feedback effect may be further customized.

The indicator 192 may be an indicator light, may be configured to indicate a charging status or a power change, and may be further configured to indicate a message, a missed incoming call, a notification, and the like.

The SIM card interface 195 is configured to connect to a SIM card. The SIM card may be inserted into the SIM card interface 195 or removed from the SIM card interface 195 to implement contact with and separation from the electronic device 100. The electronic device 100 may support one or N SIM card interfaces, where N is a positive integer greater than 1. The SIM card interface 195 may support a Nano SIM card, a Micro SIM card, a SIM card, and the like. A plurality of cards may be simultaneously inserted into a same SIM card interface 195. The plurality of cards may be of a same type or different types. The SIM card interface 195 may also be compatible with SIM cards of different types. The SIM card interface 195 may also be compatible with an external memory card. The electronic device 100 interacts with a network by using the SIM card, to implement functions such as a call and data communication. In some embodiments, the electronic device 100 uses an eSIM, that is, an embedded SIM card. The eSIM card may be embedded in the electronic device 100 and cannot be separated from the electronic device 100.

In this application, after the user pulls up the information element in the interface, the GPU in the electronic device may perform, based on the content displayed in the display 194, three-dimensional transformation on the content to create, on the screen, a visual effect of pushing the original interface inward, and display a recommended application and/or service icon on a side edge of the screen of the electronic device.

In addition, in this embodiment of this application, after the user pulls up the information element in the interface, the processor 110 may recognize the information element, including recognizing a type of the information element and specific content in the information element, and determine a corresponding application icon and/or application service icon based on a recognition result, and generate a corresponding program instruction. The program instruction may be used to change display information in the display 194, for example, update an interface in the display to a cross-application transmission interface. The icon displayed in the cross-application transmission interface is the foregoing application icon and/or application service icon determined by the processor 110 based on the recognition result.

In some embodiments, after the user completes information transmission by using the "cross-application transmission interface", the processor 110 may further obtain a type of application service to which the user transmits information, generate a corresponding program instruction based on the obtained result, and display a corresponding interface (for example, the interface may display a snack bar, a capsule, a small window, and the like) on the screen with reference to the GPU, so as to feed back a result of information element transmission to the user.

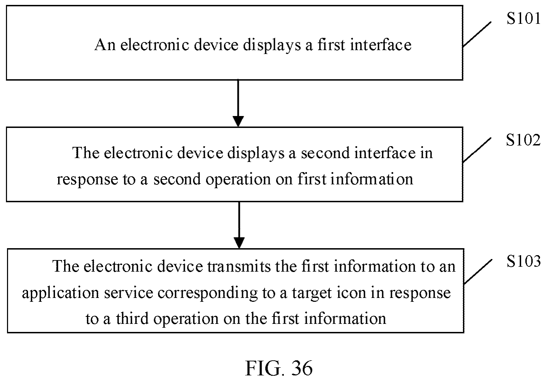

The following describes an information transmission method provided in this application. Through implementation of this method, the electronic device may display a corresponding application service icon for a user in an interface through a user operation of touching and holding, and then dragging an information element by the user, and the user may place the pulled element onto a corresponding icon, and transmit the element to an application service corresponding to the icon. This method ensures that the electronic device can efficiently and quickly complete information transmission between applications, thereby effectively reducing an operation step required by the user to complete information transmission across applications, improving interaction efficiency between the user and the electronic device, and further improving user experience. As shown in FIG. 36, the method may include but is not limited to the following steps.

S101: An electronic device displays a first interface.

The electronic device may be the electronic device 100 in the foregoing description. The first interface includes a first sub-interface and a second sub-interface, the first sub-interface is used to display an application interface of a first application, the second sub-interface is used to display an application interface of a second application, the first sub-interface includes first information, and the second sub-interface is used to transmit the first information to the second application through a first operation on the first information.

The first information is any one of an image, a text, an audio file, a video file, and a document file, or may be information in another form. This is not limited in this application.

S102: The electronic device displays a second interface in response to a second operation on the first information.

The second operation may be used to select the first information. Specifically, the second operation may be an operation of touching and holding the first information and then dragging the first information to a side edge of the first interface (namely, a side edge of the display). When the user does not release the finger, the pulled first information moves in the first interface with a fingertip of the user. When the user drags the first information to a position that has a distance from a right side edge or a left side edge of the screen being less than a specific threshold, the electronic device may display the second interface. In the second interface, an application service corresponding to the at least one application service icon is an application service that may receive the foregoing first information. For example, when the foregoing first information is an image, a friend chat service of WeChat^{®} may send the image, a moment share service of WeChat^{®} may be used to share the image, a portrait beautification service of Meitu^{®} may beautify the image, and a search service provided by the electronic device may perform intelligent search on the image, and so on. Therefore, the at least one application service icon may include application service icons corresponding to these services.

In a possible implementation, the at least one application service icon may include at least one first icon, and the at least one first icon is an application service icon recommended based on the first information. Optionally, the second interface further includes an icon region, the at least one application service icon is displayed in the icon region, the at least one application service icon further includes at least one second icon, the at least one second icon is an application service icon that is customized to be displayed, and the at least one first icon is displayed above the at least one second icon.

In other words, at least one application service icon in the second interface may be divided into two parts, where one part is a fixedly displayed icon (namely, the at least one second icon), and the other part of icon may be an application service icon recommended by the user for the user based on the first information. Optionally, a separation line used for distinguishing may be displayed between the two parts of icons. The at least one second icon is an icon that is customized to be displayed by the user based on a use habit and use frequency of the user. Regardless of information shared by the user based on the electronic device, the icon displayed by the electronic device based on the information may include this part of icon, so as to meet a requirement of the user to the greatest extent. However, the at least one first icon is recommended by the electronic device based on the element included in the first information. When the user shares other information by using this method, an application service icon recommended by the electronic device may be different from an icon in the at least one first icon. For details, refer to the foregoing related descriptions of FIG. 23A-FIG. 26B. Details are not described herein again.

It should be understood that, in a process of daily use of the electronic device, the user often performs drag operations on some elements. These drag operations may not be intended to transmit the dragged elements across applications (for example, during document editing, a text is dragged to change a position or a paragraph of the text). Therefore, how to guide, with reference to a user operation and an operation habit of the user, the user in using the transmission method provided in this application, and to set a trigger rule for this method for the user is a key to further improve interaction efficiency between the user and the electronic device. Therefore, in a possible implementation, the first interface further includes a first trigger region and a second trigger region, the first trigger region is greater than the second trigger region, the second operation includes a first sub-operation and a second sub-operation, the first sub-operation is an operation of moving the first information to the first trigger region, the second sub-operation is an operation of moving the first information to the second trigger region, and the displaying a second interface in response to a second operation on the first information in the first interface includes: displaying a light band guide special effect in the first interface in response to the first sub-operation when a stay time of the first information in the first trigger region reaches first duration, where the light band guide special effect is used to indicate to move the first information to the second trigger region; and displaying the second interface in response to the second sub-operation.

In this implementation, the first interface may include the first trigger region and the second trigger region. Optionally, specific sizes and positions of the first trigger region and the second trigger region may not be displayed in the user interface. In other words, the user cannot directly observe specific outlines of the two regions in the first interface, and the sizes and positions of the two regions may be stored in the electronic device only in a form perceivable to the electronic device (for example, program code). When the user drags the first information onto the first trigger region, the electronic device may display a special effect in the first interface (for example, an edge of the first interface), so as to prompt the user to further drag the image in a direction closer to the second trigger region. The special effect may be a special effect visible to the user such as a light emitting special effect or a shadow special effect, or may be another special effect perceivable to the user. This is not limited in this application. Optionally, the electronic device may alternatively display a special effect in the first interface only after the user drags the first information into the first trigger region and continuously stays the first information in the first trigger region for duration T. Specifically, T may be set to 600 milliseconds. When the user continues to drag the first information into the second trigger region, the electronic device may immediately display the second interface in response to the operation.

In an optional implementation, the second interface further includes a portal closing trigger region. When the user drags the pulled first information into the third trigger region, the electronic device may no longer display the second interface, but display the first interface again. In addition, when the user does not release the finger, and when the first interface is displayed again, the first information in the first interface is still in a state of being pulled up by the user, so that the user reselects a manner of transmitting the information across applications. For details, refer to the foregoing related descriptions of FIG. 9A-FIG. 15C. Details are not described herein again.

S103: The electronic device transmits the first information to an application service corresponding to a target icon in response to a third operation on the first information.

Optionally, the third operation is an operation of associating the first information with the target icon. For example, the third operation is an operation of moving the first information to the target icon.

In the second interface, the user associates the first information with the target icon through the third operation, and the electronic device may transmit the first information to the application service corresponding to the target icon in response to the third operation. Specifically, the third operation may be an operation of dragging the first information near the target icon, may be an operation of dragging the first information onto the target icon and releasing the finger, or may be another operation of associating the first information with the target icon, provided that the third operation is capable of selecting, from the at least one application service icon, the target icon required by the user, and associating the first information with the target icon.

It may be understood that the information transmission process provided in this application is continuous throughout a process from pulling up the first information by the user to placing the first information into the application service corresponding to the target icon. "Continuous" mentioned herein means that the user does not need to perform an operation such as copying or pasting, and does not need to perform an application switching operation, and throughout the operation process, the finger of the user may not need to leave the screen of the electronic device. The operation is simple and quick, thereby effectively improving efficiency of transmitting information across applications by the user, and improving user experience.

Optionally, the second interface may further display a sub-interface. Element content displayed in the sub-interface is the same as element content (except a status bar) displayed in the first interface. Actually, the sub-interface displayed in the second interface may be considered as an interface obtained after the electronic device performs three-dimensional transformation on all element content (except the status bar) in the first interface. In the second interface, the sub-interface may create, on the screen, a visual effect of pushing inward an original interface (namely, the first interface). It may be understood that this visual effect of "portal opening" implies a behavior of transmitting an element (namely, the first information), and is more intuitive than copying and pasting. In addition, this information transmission manner ensures an effective browsing region of a user interface, and is capable of transmitting the first information to another application service while a historical application interface (namely, the first interface) is viewed by using the sub-interface, thereby further improving user experience. Optionally, in the second interface, a background behind the sub-interface may be set to a picture obtained after a blur effect is superimposed on a home screen background (namely, a home screen wallpaper) of the electronic device, so as to provide a better visual effect for the user.

It may be understood that the electronic device may recommend, for the user based on the first information, a plurality of application services that can receive the first information, and display icons of these application services on a right side of the second interface. Specifically, an upper limit of a quantity of these application service icons may be 20. In a possible implementation, the at least one application service icon includes at least one icon displayed in the icon region and at least one icon not displayed in the icon region, the target icon is not displayed in the icon region, and the second interface further includes a third trigger region; in response to a seventh operation on the first information, the electronic device may update the at least one icon displayed in the icon region until the target icon is displayed in the icon region, where the seventh operation is an operation of moving the first information to the third trigger region. In other words, when the quantity of these application service icons exceeds a specific threshold (for example, 7), to ensure tidiness and observability of an interface, during display, the electronic device may simultaneously display only some (for example, seven) of these application service icons in the second interface. When none of the icons currently displayed in the second interface is an application service expected by the user, the user may further place the first information into the third trigger region, so that the electronic device updates the icon in the icon region. Specifically, the third trigger region may be arranged right above and/or right below the icon region. For details, refer to the foregoing related descriptions of FIG. 22A to FIG. 22E.

To guide the user in accurately placing the first information into an application service required by the user, in a process of dragging the first information onto the target icon, when the first information is close to the target icon (it is assumed herein that throughout the dragging process, the target icon is always an icon that is in the at least one application icon and that is closest to the first information), the target icon may be enlarged, and the target icon may be moved in the second interface, so that the target icon is closer to the first information, and a visual effect that the target icon is absorbed by the first information (that is, a moving direction of the first information is opposite to a moving direction of the target icon, and the target icon and the first information approach each other) is created in the second interface, so as to prompt the user that the first information is already associated with the target icon, and if the finger is released at this position, the first information is transmitted to the application service corresponding to the target icon. Optionally, the electronic device enlarges the target icon in the second interface and/or moves the position of the target icon in the first interface only when a distance between the first information and the target icon is less than a first threshold.

After the first information is transmitted to the application service corresponding to the target icon, the electronic device may further display a third interface. The third interface may be set to different interface effects based on a type of an application service to which the first information is transmitted and a result of information transmission. For example, the third interface may display one or more of a floating window, a capsule (a minimum floating window), a snack bar, toast feedback, and an application service interface (full-screen display) corresponding to the target icon, so as to prompt the user to learn a transmission result of the first information, so that the user performs a next operation. For details, refer to the foregoing related descriptions of FIG. 16A-FIG. 21C. Details are not described herein again.

An embodiment of this application further provides an electronic device. The electronic device includes one or more processors and a memory.

The memory is coupled to the one or more processors, and the memory is configured to store computer program code. The computer program code includes computer instructions, and the one or more processors invoke the computer instructions so that the electronic device is enabled to perform the method in the foregoing embodiments.

As used in the foregoing embodiments, based on the context, the term "when ..." may be interpreted as a meaning of "if ...", "after ...", "in response to determining ...", or "in response to detecting ...". Similarly, based on the context, the phrase "when determining ..." or "if detecting (a stated condition or event)" may be interpreted as a meaning of "if determining ...", "in response to determining ...", "when detecting (a stated condition or event)", or "in response to detecting ... (a stated condition or event)".

All or some of the foregoing embodiments may be implemented by using software, hardware, firmware, or any combination thereof. When the software is used for implementation, some or all of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired manner (for example, a coaxial cable, an optical fiber, or a digital subscriber line) or a wireless manner (for example, infrared, wireless, or microwave). The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the procedures of the methods in the foregoing embodiments are implemented. The procedures may be completed by a computer program instructing related hardware. The program may be stored in a computer-readable storage medium. When the program is executed, the procedures in the foregoing method embodiments may be included. The foregoing storage medium includes any medium that can store program code, for example, a ROM, a random access memory RAM, a magnetic disk, or an optical disc.

## Claims

1. An information transmission method, wherein the method comprises:
displaying a first interface, wherein the first interface comprises a first sub-interface and a second sub-interface, the first sub-interface is used to display an application interface of a first application, the second sub-interface is used to display an application interface of a second application, the first sub-interface comprises first information, and the second sub-interface is used to transmit the first information to the second application through a first operation on the first information;
displaying a second interface in response to a second operation on the first information, wherein the second interface comprises the first information and at least one application service icon; and
transmitting the first information to an application service corresponding to a target icon in response to a third operation on the first information, wherein the target icon is any one of the at least one application service icon.

2. The method according to claim 1, wherein in the first interface,
the first sub-interface and the second sub-interface are displayed in a horizontal split-screen or vertical split-screen manner; or
the first sub-interface and the second sub-interface are displayed in a picture-in-picture form.

3. The method according to claim 1 or 2, wherein the third operation is an operation of associating the first information with the target icon.

4. The method according to any one of claims 1-3, wherein the third operation is an operation of moving the first information to the target icon.

5. The method according to claim 3 or 4, wherein in a process of moving the first information to the target icon, the target icon is enlarged and/or a position of the target icon in the first interface is moved, wherein a direction of moving the target icon is opposite to a direction of moving the first information.

6. The method according to any one of claims 1 to 5, wherein the at least one application service icon comprises at least one first icon, and the at least one first icon is an application service icon recommended based on the first information.

7. The method according to any one of claims 1 to 6, wherein the target icon comprises a corresponding text description, and the text description is used to prompt an application or an application service function corresponding to the target icon.

8. The method according to any one of claims 1 to 7, wherein after the transmitting the first information to an application service corresponding to the target icon, the method further comprises:
displaying a third interface, wherein the third interface comprises all content in the first interface, the third interface further comprises any one of a floating window and an information feedback bar, the floating window is used to display the target icon or an application service interface corresponding to the target icon, and the information feedback bar is used to remind the electronic device of a transmission result of the first information.

9. The method according to claim 8, wherein the third interface comprises the floating window, the floating window is used to display the target icon, the third interface further comprises second information, and after the displaying a third interface, the method further comprises:
transmitting the second information to an application service corresponding to the target icon in response to a fourth operation on the second information, wherein the fourth operation is an operation of associating the second information with the floating window.

10. The method according to claim 8, wherein the third interface comprises the floating window, the floating window is used to display the application service interface corresponding to the target icon, the floating window comprises an expand control, and after the displaying a third interface, the method further comprises:
in response to a fifth operation on the expand control, displaying, in full screen, the application service interface displayed in the floating window.

11. The method according to claim 8, wherein the third interface comprises the information feedback bar, the information feedback bar comprises a jump control, and after the displaying a third interface, the method further comprises:
displaying a fourth interface in response to a sixth operation on the jump control, wherein the fourth interface is the application service interface corresponding to the target icon.

12. The method according to any one of claims 1-11, wherein the first interface further comprises a first trigger region and a second trigger region, the first trigger region is greater than the second trigger region, the second operation comprises a first sub-operation and a second sub-operation, the first sub-operation is an operation of moving the first information to the first trigger region, the second sub-operation is an operation of moving the first information to the second trigger region, and the displaying a second interface in response to a second operation on the first information in the first interface comprises:
displaying a light band guide special effect in the first interface in response to the first sub-operation when a stay time of the first information in the first trigger region reaches first duration, wherein the light band guide special effect is used to indicate to move the first information to the second trigger region; and
displaying the second interface in response to the second sub-operation.

13. The method according to claim 12, wherein when the first sub-interface and the second sub-interface are displayed in a horizontal split-screen or vertical split-screen manner, the first trigger region exists in both the first interface and the second sub-interface, and the second trigger region exists in both the first interface and the second sub-interface.

14. The method according to any one of claims 6-13, wherein the second interface further comprises an icon region, the at least one application service icon is displayed in the icon region, the at least one application service icon further comprises at least one second icon, the at least one second icon is an application service icon displayed in a customized manner, and the at least one first icon is displayed above the at least one second icon.

15. The method according to claim 14, wherein the at least one application service icon comprises at least one icon displayed in the icon region and at least one icon not displayed in the icon region, the target icon is not displayed in the icon region, the second interface further comprises a third trigger region, and before the response to the second operation on the first information, the method further comprises:
in response to a seventh operation on the first information, updating the at least one icon displayed in the icon region until the target icon is displayed in the icon region, wherein the seventh operation is an operation of moving the first information to the third trigger region.

16. The method according to any one of claims 1-15, wherein an area of the first information in the second interface is less than an area of the first information in the first interface.

17. An information transmission method, comprising:
displaying a sixth interface in response to any one of a global screenshot operation, a local screenshot operation, and a long screenshot operation on a fifth interface, wherein the sixth interface comprises a first image obtained by taking a screenshot of the fifth interface;
displaying a seventh interface in response to an eighth operation on the first image in the sixth interface, wherein the seventh interface comprises the first image and at least one application service icon; and
transmitting the first image to an application service corresponding to a target icon in response to a ninth operation on the first image in the seventh interface, wherein the target icon is any one of the at least one application service icon.

18. The method according to claim 17, wherein the first image is an image obtained by performing a global screenshot operation on the fifth interface, and the displaying a seventh interface in response to an eighth operation on the first image in the sixth interface comprises:
displaying an edit interface in response to a tap operation on the first image in the sixth interface, wherein the edit interface comprises the first image and an edit option, and the edit option is used to edit the first image; and
displaying the seventh interface in response to a move operation on the first image in the edit interface after image content of the first image in the edit interface is updated in response to the edit operation performed on the first image by using the edit option, wherein the eighth operation comprises the tap operation, the edit operation, and the move operation.

19. An information transmission method, comprising:
displaying a ninth interface in response to a local screenshot operation on an eighth interface, wherein the ninth interface comprises a second image obtained by performing a local screenshot operation on the eighth interface and a text recognition control, and the text recognition control is configured to recognize a text comprised in the second image;
displaying a tenth interface in response to a tap operation on the text recognition control, wherein the tenth interface comprises first text information obtained by recognizing the second image;
displaying an eleventh interface in response to a tenth operation on the first text information in the tenth interface, wherein the eleventh interface comprises the first text information and at least one application service icon; and
transmitting the first text information to an application service corresponding to a target icon in response to an eleventh operation on the first text information in the eleventh interface, wherein the target icon is any one of the at least one application service icon.

20. An electronic device, wherein the electronic device comprises one or more processors, a memory, and a display; and
the memory is coupled to the one or more processors, the memory is configured to store computer program code, the computer program code comprises computer instructions, and the one or more processors invoke the computer instructions to enable the electronic device to perform the method according to any one of claims 1-19.

21. A chip system, wherein the chip system is applied to an electronic device, the chip system comprises one or more processors, and the processor is configured to invoke computer instructions to enable the electronic device to perform the method according to any one of claims 1-19.

22. A computer-readable storage medium, comprising instructions, wherein when the instructions are run on an electronic device, the electronic device is enabled to perform the method according to any one of claims 1-19.
